# EUROPEAN PATENT APPLICATION

(11) **EP 4 722 875 A1**
(43) Date of publication of application: **08.04.2026**
(21) Application number: 24853727.6
(22) Date of filing: 12.08.2024
(51) Int. Cl.: G06F 3/04817

(54) **INTERACTION METHOD AND ELECTRONIC DEVICE**

(30) Priority: 14.08.2023 CN 202311028609
(71) Applicant: Huawei Technologies Co., Ltd., Shenzhen, Guangdong 518129 (CN)
(72) Inventor: XU, Jie, Shenzhen, Guangdong 518129 (CN); LONG, Jiayu, Shenzhen, Guangdong 518129 (CN)
(74) Representative: Huawei European IPR
(86) International application number: PCT/CN2024/111388
(87) International publication number: WO 2025/036318

(57) **Abstract**

This application discloses an interaction method and an electronic device. The electronic device may support a user in starting a natural language interaction function by using a touch and hold operation, and display a natural language interaction entry. After detecting a voice/text instruction input by the user by using natural language, the electronic device may display the instruction on the natural language interaction entry. After input of the instruction is completed, the electronic device may determine whether the instruction includes a default object or a reference pronoun. If yes, the electronic device may extract and recognize an interaction object from interface content at a location of the touch and hold operation of the user or at and near the location of the touch and hold operation of the user, to determine the interaction object, and substitute the interaction object into the input instruction for understanding and execution. This can efficiently select the interaction object and further perform an operation on the interaction object by integrating a touch operation and natural language interaction, to resolve a problem that it is inconvenient to express the interaction object by using the natural language, and improve human-machine interaction efficiency and user experience.

## Description

This application claims priority to Chinese Patent Application No. 202311028609.5, filed with the China National Intellectual Property Administration on August 14, 2023 and entitled "INTERACTION METHOD AND ELECTRONIC DEVICE", which is incorporated herein by reference in its entirety.

### TECHNICAL FIELD

This application relates to the field of terminal technologies, and in particular, to an interaction method and an electronic device.

### BACKGROUND

With development of electronic devices, more electronic devices can provide a natural language interaction function, for example, a voice interaction function. The voice interaction function may support the electronic devices in receiving voice instructions of users, and understanding and executing the voice instructions.

However, in some scenarios in which a specific interaction object needs to be processed (for example, a specific flower in a picture including a plurality of flowers is to be edited), the user sometimes cannot accurately express the interaction object only through voice, and consequently, the electronic device cannot accurately and quickly recognize an intention of the user, and may need a plurality of rounds of voice interaction to complete the task, resulting in poor user experience.

### SUMMARY

Embodiments of this application provide an interaction method and an electronic device. The electronic device can efficiently select an interaction object and further perform an operation on the interaction object by integrating a touch operation of a user and natural language interaction, to resolve a problem that it is inconvenient to express the interaction object by using natural language, and improve human-machine interaction efficiency and user experience.

According to a first aspect, an embodiment of this application provides an interaction method, applied to an electronic device, where the electronic device includes a screen, and the method includes: The electronic device displays a first user interface of a first application; the electronic device detects a first operation performed by a user on the first user interface, where a location of the first operation on the screen is a first location; the electronic device starts a natural language interaction function in response to the first operation, where the natural language interaction function is used for interaction between the electronic device and the user by using a natural language instruction; the electronic device detects a first natural language instruction input by the user, and determines, based on the first natural language instruction and the first location, that a natural language interaction object is a first interaction object, where the first interaction object is included in the first user interface; and the electronic device performs an operation corresponding to the first natural language instruction on the first interaction object.

The first application may be any application installed on the electronic device. It should be noted that a system program like a desktop is also an application. The first user interface may be any user interface provided by the first application. The first operation may be, for example, a single-finger or multi-finger touch and hold operation (for example, a touch and hold operation performed by using a finger of the user or a touch apparatus), a tap operation, or the like. The first location may be any location on the screen. The first natural language instruction may be a natural language instruction input by the user by using the natural language interaction function. The first interaction object may be an object used for natural language interaction, for example, a picture, a video, a text, a file, an application, an application icon, or a widget.

By implementing the method provided in the first aspect, the electronic device may support the user in starting the natural language interaction function by using the first operation. After detecting a voice/text instruction input by the user by using natural language, the electronic device may extract and recognize an interaction object from interface content at a location of the first operation of the user or at and near the location of the first operation of the user, to determine the interaction object, and substitute the interaction object into the input instruction for understanding and execution. This can efficiently select the interaction object and further perform an operation on the interaction object by integrating a touch operation and natural language interaction, to resolve a problem that it is inconvenient to express the interaction object by using the natural language, and improve human-machine interaction efficiency and user experience.

In a possible implementation, the first operation is a touch and hold operation.

In this way, by using the touch and hold operation, the user may trigger the electronic device to start the natural language interaction function, and may trigger the electronic device to select the interaction object, to resolve the problem that it is inconvenient to express the interaction object by using the natural language.

In a possible implementation, that the electronic device determines, based on the first natural language instruction and the first location, that the natural language interaction object is the first interaction object specifically includes: When the first natural language instruction does not include a first keyword, the electronic device determines that the first interaction object is an object that is recognizable at the first location in the first user interface, where the first keyword is a keyword indicating the natural language interaction object; or when the first natural language instruction includes the first keyword, the electronic device determines, as the first interaction object, the natural language interaction object indicated by the first keyword.

The first keyword may be a word (for example, "this", "it", or "that") specifying the interaction object, or may be a word indicating a name of the interaction object.

In other words, after input of the first natural language instruction is completed, the electronic device may determine whether the first natural language instruction includes a default object (to be specific, the first natural language instruction does not include the word indicating the name of the interaction object) or a reference pronoun (to be specific, the first natural language instruction includes the word like "this", "that", or "it" specifying the interaction object). If yes, the electronic device may determine the interaction object based on the first location. If no, the electronic device may determine, as the first interaction object, the natural language interaction object indicated by the first keyword, and may perform a corresponding operation based on the first natural language instruction.

In a possible implementation, after that the electronic device starts the natural language interaction function, the method further includes: The electronic device displays a natural language interaction entry, where the natural language interaction entry is used to display the first natural language instruction.

In this way, the electronic device may inform, by displaying the natural language interaction entry, the user that the natural language interaction function has been started, and after the user inputs the natural language instruction, the electronic device may display the instruction on the natural language interaction entry, so that the user can view the input instruction in time, to improve user experience.

In a possible implementation, the natural language interaction entry is located at the first location or near the first location.

In this way, the natural language interaction entry is placed at the first location, to provide better visual experience for the user, and help the user find and use the natural language interaction entry, thereby facilitating interaction between the electronic device and the user by using the natural language instruction.

In a possible implementation, after that the electronic device starts the natural language interaction function, the method further includes: The electronic device outputs a first prompt if the electronic device detects, within a first preset time period, no natural language instruction input by the user, where the first prompt prompts the user to input a recognizable natural language instruction corresponding to the first interaction object.

The first preset time period may be a preset time period (for example, 2 seconds or 3 seconds) after the electronic device starts to detect the natural language instruction input by the user.

In this way, when the user does not know how to perform natural language interaction, the electronic device may output a corresponding prompt (for example, a voice prompt or a text prompt), so that the user can quickly learn how to perform natural language interaction. This can improve interaction efficiency and user experience.

In a possible implementation, the first natural language instruction includes any one of a first voice instruction or a first text instruction, and the method further includes: The electronic device detects a second operation performed by the user on the natural language interaction entry; and that the electronic device detects the first natural language instruction input by the user specifically includes: In response to the second operation, the electronic device detects the first voice instruction input by the user via a microphone, or the electronic device invokes and displays a virtual keyboard, and detects the first text instruction input by the user via the virtual keyboard.

The second operation may be, for example, a tap operation, the first language instruction may be a voice instruction input by the user via the microphone, the first text instruction may be a text instruction input by the user via the virtual keyboard, and the second operation may be, for example, a tap operation.

In this way, in a process in which the electronic device performs natural language interaction with the user, the electronic device may support both voice input and text input by the user, and an interaction manner is flexible and is applicable to users with different input habits.

In a possible implementation, after that the electronic device detects the first natural language instruction input by the user, the method further includes: If the electronic device detects that the user cancels the first operation, the electronic device does not detect the natural language instruction input by the user.

In this way, after the user cancels the first operation, the electronic device may determine that the user completes the input of the natural language instruction, and then may perform a next operation.

In a possible implementation, the method further includes: When the electronic device detects that the user touches and holds and drags the first interaction object, the electronic device shrinks the natural language interaction entry, or cancels display of the natural language interaction entry; and when the electronic device detects that the first interaction object does not produce a displacement again within a second preset time period, the electronic device restores display of the natural language interaction entry.

The second preset time period may be a time period (for example, 2 seconds or 3 seconds) after the user stops dragging the first interaction object.

In this way, when the user touches and holds and drags the first interaction object, it may indicate that the user currently does not have an intention of performing natural language interaction. In this case, the electronic device may shrink the natural language interaction entry or cancel display of the natural language interaction entry, to reduce blockage for interface content from display of the natural language interaction entry. After the user stops dragging the first interaction object, it may indicate that the user currently has an intention of performing natural language interaction. In this case, the electronic device may restore display of the natural language interaction entry, to prepare for natural language interaction in a timely manner.

In a possible implementation, the first natural language instruction does not include a keyword that directly indicates the name of the interaction object. Because an object that currently needs to be interacted with has been determined by using the first operation or by using the first operation and another recognition operation, when the user inputs the natural language instruction, the user does not need to overthink how to clearly describe a location or a name of the object to facilitate accurate recognition of the electronic device. The user only needs to use some words that indirectly specify the object orally, for example, "this" or "that", or even does not need to indicate the object, and directly describe a to-be-operated instruction. In this way, the user does not need to spend too much time describing an object that is difficult to describe, thereby improving convenience of natural language instruction interaction by the user, and helping improve a degree of use of the natural language instruction by the user.

In a possible implementation, the first interaction object is a first picture or first content in the first picture, the first content is a part of content in the first picture, and that the electronic device performs the operation corresponding to the first natural language instruction on the first interaction object specifically includes: When the first natural language instruction indicates an intention of sending the first interaction object to a second application, the electronic device sends the first interaction object from the first application to the second application; or when the first natural language instruction indicates an erasing intention, the electronic device erases the first content from the first picture; or when the first natural language instruction indicates an intention of replacing the first content with second content, the electronic device replaces the first content with the second content; or when the first natural language instruction indicates an intention of inserting third content, the electronic device inserts the third content into the first picture; or when the first natural language instruction indicates a recognition intention, the electronic device recognizes the first interaction object and displaying a recognition result; or when the first natural language instruction indicates a beautification intention, the electronic device beautifies the first interaction object, where the beautification intention includes one or more of the following intentions: face beautification, body beautification, blur, mosaic, doodle, or border/sticker/marker adding; or when the first natural language instruction indicates a parameter adjustment intention, the electronic device performs parameter adjustment on the first interaction object, where the parameter includes one or more of the following: a filter style, brightness, saturation, or sharpness.

The first picture may be a picture on the first application, the first content may be a part of content (for example, a subject to be cut out) in the first picture, the second application may be an application different from the first application, the second content may be content that is found by the electronic device and that is used to replace the first content, and the third content may be content that is found by the electronic device and that is used to be inserted into the first picture.

In this way, through natural language interaction, the electronic device can conveniently and quickly implement various operations (for example, operations such as picture content sending, erasing, replacement, insertion, recognition, beautification, style migration, and parameter adjustment) on the picture.

In a possible implementation, the first interaction object is a first video, and that the electronic device performs the operation corresponding to the first natural language instruction on the first interaction object specifically includes: When the first natural language instruction indicates a sending intention, the electronic device sends the first video from the first application to a second application; or when the first natural language instruction indicates a trimming intention, the electronic device trims the first video, and stores a first video clip or a first video image obtained through trimming.

The first video may be a video in the first application, and the second application may be an application different from the first application.

In this way, through natural language interaction, the electronic device can conveniently and quickly implement various operations (for example, operations such as sending and trimming of video content) on a video.

In a possible implementation, the first interaction object is a first chat entry, the first chat entry includes a chat message, and that the electronic device performs the operation corresponding to the first natural language instruction on the first interaction object specifically includes: When the first natural language instruction indicates an intention of displaying a summary of an unread message included in the chat message, the electronic device searches for the unread message, and generates and displays the summary of the unread message based on the unread message; or when the first natural language instruction indicates an intention of querying related information of the chat message, the electronic device queries and displays the related information, where the related information includes any one of the following: content of the chat message, or a sender of the chat message.

The first chat entry may be a chat entry in the first application (for example, a social application).

In this way, through natural language interaction, the electronic device can conveniently and quickly implement various operations (for example, operations such as displaying a summary of an unread message and question and answer query) on the chat message.

In a possible implementation, the first interaction object is an icon of a first document, and that the electronic device performs the operation corresponding to the first natural language instruction on the first interaction object specifically includes: When the first natural language instruction indicates an intention of displaying a summary of content of the first document, the electronic device obtains the content of the first document, and generates and displays the summary of the content based on the content; or when the first natural language instruction indicates an intention of displaying a note in the first document, the electronic device queries and displays the note in the first document, where the note includes one or more of the following: a mark, or a comment; or when the first natural language instruction indicates an intention of translating the content of the first document, the electronic device translates the content of the first document, and displaying a translation result; or when the first natural language instruction indicates an intention of performing format conversion/beautification on the first document, the electronic device performs format conversion/beautification on the first document, and generates and displays the first document obtained through format conversion/beautification.

The first document may be a document on the electronic device.

In this way, through natural language interaction, the electronic device can conveniently and quickly implement various operations (for example, operations such as displaying a summary of the document, displaying a note in the document, translating content of the document, and format conversion/beautification of the document) on the document.

In a possible implementation, the first interaction object is a first text, and that the electronic device performs the operation corresponding to the first natural language instruction on the first interaction object specifically includes: When the first natural language instruction indicates an intention of collecting the first text, the electronic device collects the first text; or when the first natural language instruction indicates an intention of querying the first text, the electronic device queries the first text, and displays a query result, where the query result includes related information of the first text.

The first text may be a text in the first application.

In this way, through natural language interaction, the electronic device can conveniently and quickly implement various operations (for example, operations such as text collection and text query) on the text.

In a possible implementation, the first interaction object is a second text, the first natural language instruction includes a third text, and that the electronic device performs the operation corresponding to the first natural language instruction on the first interaction object specifically includes: The electronic device combines the second text and the third text into one or more fourth texts; and the electronic device replaces the second text with the fourth texts, and displays the fourth texts.

The second text may be a to-be-modified text in the first application, the third text may be a text input by the user by using the natural language, and the fourth text is a semantically smooth text that is generated by combining the second text and the third text.

In this way, through natural language interaction, the electronic device can conveniently and quickly implement a content modification operation on the text.

In a possible implementation, when there are a plurality of fourth texts, before that the electronic device replaces the second text with the fourth texts, the method further includes: The electronic device outputs a second prompt, where the second prompt prompts the user to select any one of the plurality of fourth texts.

The second prompt may be a prompt output by the electronic device in a voice or text form.

In this way, the user can conveniently select a newly generated text (namely, the fourth text) to modify content of an original text (namely, the first text) in a timely manner.

In a possible implementation, the first interaction object is a fifth text, and that the electronic device performs the operation corresponding to the first natural language instruction on the first interaction object specifically includes: When the first natural language instruction indicates an intention of modifying a text format of the fifth text, the electronic device modifies the text format of the fifth text, where the text format includes one or more of the following: a font, a font size, a color, an alignment manner, a title style, a body style, a bold, an italic, or an underline.

The fifth text may be a to-be-modified text in the first application.

In this way, through natural language interaction, the electronic device can conveniently and quickly implement a format modification operation on the text.

According to a second aspect, an embodiment of this application provides an interaction method, applied to an electronic device, where the method includes: The electronic device displays a first user interface, where the first user interface includes a first page of a first document; the electronic device detects a first operation performed by a user on the first page; the electronic device starts a natural language interaction function in response to the first operation, where the natural language interaction function is used for interaction between the electronic device and the user by using a natural language instruction; the electronic device detects a first natural language instruction input by the user; and the electronic device generates a first comment based on the first natural language instruction, and displays the first comment in the first user interface.

The first user interface may be a user interface after the electronic device enters a comment mode, the first document may be a document on the electronic device, the first page may be a page of the first document, the first operation may be, for example, a touch and hold operation, the first natural language instruction may be a natural language instruction input by the user by using the natural language interaction function, and the first comment may be a comment generated by the electronic device based on the first natural language instruction input by the user.

According to the method provided in the second aspect, when the electronic device opens a document and enters the comment mode, the electronic device may support the user in triggering, by using, for example, the touch and hold operation (for example, a touch and hold operation performed by using a finger of the user or a touch apparatus), the electronic device to start the natural language interaction function, and may add a comment to the document based on the natural language interaction function. This is convenient and quick, simplifies user operations, and improves user experience.

In a possible implementation, the first operation is a touch and hold operation.

In this way, the user may trigger, by using the touch and hold operation, the electronic device to start the natural language interaction function. This is convenient and quick.

In a possible implementation, a location of the first operation on a screen of the electronic device is a first location, and the method further includes: The electronic device recognizes whether there is an interaction object at the first location; and if no, the electronic device displays the first comment at the first location; or if yes, the electronic device displays the first comment at a second location, where the second location is the same as or different from the first location.

The first location may be any location on the screen, and the second location may be a location that is on the screen and that is the same as or different from the first location.

In this embodiment of this application, if there is no interaction object at the first location, the electronic device may display a comment at the first location; or if there is an interaction object at the first location, the electronic device may still display the comment at the first location, or may display the comment at a location different from the first location.

In a possible implementation, the second location is a central location of a location of the interaction object.

In this way, when there is the interaction object at the first location, the electronic device may display the comment at the central location of the location of the interaction object, which is beautiful.

In a possible implementation, the method further includes: The electronic device adds a mark to the interaction object, and displays the interaction object to which the mark is added, where the mark includes a highlight mark.

In this way, when there is the interaction object at the first location, the electronic device may add the mark (for example, the highlight mark) to the interaction object, to highlight the interaction object for which the comment is generated, and facilitate viewing by the user. A style of the mark added to the interaction object is not limited.

In a possible implementation, the method further includes: The electronic device detects a second operation performed by the user on the first page; in response to the second operation, the electronic device starts the natural language interaction function, and determines a distance between a location of the second operation and a location of the first comment; the electronic device detects a second natural language instruction input by the user, and generates a second comment based on the second natural language instruction; and when the distance is less than or equal to a first preset distance threshold, the electronic device replaces the first comment with the second comment, and displays the second comment in the first user interface; or when the distance is greater than a second preset distance threshold, the electronic device adds and displays the second comment in the first user interface; or when the distance is greater than the first preset distance threshold and less than or equal to the second preset distance threshold, the electronic device replaces the first comment with the second comment based on a selection operation of the user, and displays the second comment in the first user interface, or the electronic device adds and displays the second comment in the first user interface.

The second operation may be an operation (for example, a touch and hold operation) used to edit the comment, the second natural language instruction may be a natural language instruction input by the user by using the natural language interaction function, the second comment may be a comment generated based on the second natural language instruction input by the user, the first preset distance threshold may be a distance threshold that is between the location of the second operation and the location of the first comment and that is preset by the electronic device, and the second preset distance threshold may be another distance threshold that is between the location of the second operation and the location of the first comment and that is preset by the electronic device.

In this way, in different preset distance thresholds, the electronic device may determine whether to directly replace the first comment with the second comment, whether to directly insert the second comment into the first document, or whether to determine, based on a selection of the user, to replace the first comment with the second comment or insert the second comment into the first document.

In a possible implementation, the method further includes: The electronic device detects a third operation performed by the user on the first comment; the electronic device displays a first option in response to the third operation, where the first option is used to delete the first comment; and the electronic device detects a fourth operation performed by the user on the first option, and in response to the fourth operation, the electronic device deletes the first comment, and cancels display of the first comment; or the electronic device detects a fifth operation of touching and holding and dragging the first comment to a third location by the user, and in response to the fifth operation, the electronic device displays the first comment at the third location.

The third operation may be an operation (for example, a tap operation) used to edit the comment, the first option may be an option used to delete the first comment, the fourth operation may be, for example, an operation of tapping the first option by the user, the fifth operation may be, for example, an operation of touching and holding and dragging the comment by the user, and the third location may be a location different from the first location and the second location on the screen.

In this way, the electronic device may support the user in performing an editing operation like deleting or moving a generated remark, which is convenient and quick.

In a possible implementation, the second operation is a touch and hold operation, and the third operation is a tap operation.

In a possible implementation, the method further includes: The electronic device detects a sixth operation of the user, where the sixth operation includes any one of the following: switching a page, scrolling a page, zooming in a page, or zooming out a page; and in response to the sixth operation, the electronic device displays first content in the first user interface, and displays a comment related to the first content, where the first content is content in the first document.

The sixth operation may be an operation for switching, scrolling, zooming in, or zooming out a page.

In this way, when page content in the first document changes, if current content corresponds to a comment, the electronic device may also display the comment in real time, to facilitate viewing by the user.

In a possible implementation, the first natural language instruction includes any one of a first voice instruction or a first text instruction, and that the electronic device detects the first natural language instruction input by the user specifically includes: The electronic device detects the first voice instruction input by the user via a microphone; or the electronic device invokes and displays a virtual keyboard, and detects the first text instruction input by the user via the virtual keyboard.

In this way, in a process in which the electronic device performs natural language interaction with the user, the electronic device may support both voice input and text input by the user, and an interaction manner is flexible and is applicable to users with different input habits.

According to a third aspect, an embodiment of this application provides an electronic device. The electronic device includes one or more processors and one or more memories, where the one or more memories are coupled to the one or more processors, the one or more memories are configured to store computer program code, the computer program code includes computer instructions, and when the one or more processors execute the computer instructions, the electronic device is caused to perform the method according to any one of the possible implementations of the first aspect or the second aspect.

According to a fourth aspect, an embodiment of this application provides a computer storage medium. The computer storage medium stores a computer program, the computer program includes program instructions, and when the program instructions are run on an electronic device, the electronic device is caused to perform the method according to any one of the possible implementations of the first aspect or the second aspect.

According to a fifth aspect, an embodiment of this application provides a computer program product. When the computer program product is run on a computer, the computer is caused to perform the method according to any one of the possible implementations of the first aspect or the second aspect.

### BRIEF DESCRIPTION OF DRAWINGS

FIG. 1A to FIG. 1E are diagrams of a group of user interfaces for implementing a quick sharing function of picture content in a cutout transfer application scenario according to an embodiment of this application;
FIG. 1F to FIG. 1H are diagrams of a group of user interfaces for implementing a quick collecting/copying function of picture content in a cutout transfer application scenario according to an embodiment of this application;
FIG. 1I and FIG. 1J are diagrams of a group of user interfaces in an entire picture transfer application scenario according to an embodiment of this application;
FIG. 1K is a diagram of a display style of a natural language interaction entry according to an embodiment of this application;
FIG. 2A to FIG. 2D are diagrams of a group of user interfaces in which a natural language interaction entry is gradually shrunk as an interaction object moves according to an embodiment of this application;
FIG. 3A to FIG. 3C are diagrams of a group of user interfaces for implementing a function of erasing picture content according to an embodiment of this application;
FIG. 4A and FIG. 4B are diagrams of a group of user interfaces for implementing a picture content replacement function according to an embodiment of this application;
FIG. 5A to FIG. 5D are diagrams of a group of user interfaces for implementing a picture content recognition function according to an embodiment of this application;
FIG. 6 is a diagram of a user interface for implementing a picture beautification function according to an embodiment of this application;
FIG. 7 is a diagram of a user interface for implementing a picture style migration function according to an embodiment of this application;
FIG. 8A to FIG. 8F are diagrams of a group of user interfaces for performing a corresponding operation on a picture on a social application according to an embodiment of this application;
FIG. 9A to FIG. 9E are diagrams of a group of user interfaces for implementing a quick sharing function of video content according to an embodiment of this application;
FIG. 10A and FIG. 10B are diagrams of a group of user interfaces for implementing a function of trimming video content according to an embodiment of this application;
FIG. 11A and FIG. 11B are diagrams of another group of user interfaces for implementing a function of trimming video content according to an embodiment of this application;
FIG. 12A to FIG. 12D are diagrams of a group of user interfaces for implementing a function of displaying a summary of an unread message according to an embodiment of this application;
FIG. 12E and FIG. 12F are diagrams of a group of user interfaces for implementing a question and answer query function for a chat message according to an embodiment of this application;
FIG. 13A to FIG. 13D are diagrams of a group of user interfaces for implementing a function of displaying a summary of a document according to an embodiment of this application;
FIG. 13E and FIG. 13F are diagrams of a group of user interfaces for implementing a function of displaying a note in a document according to an embodiment of this application;
FIG. 13G and FIG. 13H are diagrams of a group of user interfaces for implementing a document content translation function according to an embodiment of this application;
FIG. 14A to FIG. 14E are diagrams of a group of user interfaces for implementing a text collection function according to an embodiment of this application;
FIG. 14F to FIG. 14H are diagrams of a group of user interfaces for implementing a text query function according to an embodiment of this application;
FIG. 15A to FIG. 15N are diagrams of a group of user interfaces for implementing a text content modification function according to an embodiment of this application;
FIG. 16A to FIG. 16O are diagrams of a group of user interfaces for implementing functions of comment adding, comment display, and comment editing in a document according to an embodiment of this application;
FIG. 17 is a schematic flowchart of an interaction method according to an embodiment of this application;
FIG. 18 is a diagram of a software architecture of an electronic device 100 according to an embodiment of this application; and
FIG. 19 is a diagram of a structure of an electronic device 100 according to an embodiment of this application.

### DESCRIPTION OF EMBODIMENTS

The following clearly and completely describes technical solutions in embodiments of this application with reference to accompanying drawings in embodiments of this application. In descriptions of embodiments of this application, unless otherwise stated, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in descriptions of embodiments of this application, "a plurality of" means two or more.

It should be understood that the terms "first", "second", and the like in the specification, the claims, and the accompanying drawings of this application are intended to distinguish between different objects, but are not intended to describe a specific order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this application means that a particular characteristic, structure, or feature described with reference to an embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in this application may be combined with another embodiment.

The term "user interface (user interface, UI)" in the following embodiments of this application is a medium interface for interaction and information exchange between an application or an operating system and a user. The user interface implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be recognized by the user. A frequently-used representation form of the user interface is a graphical user interface (graphical user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

With the development of technologies, a manner of human-machine interaction is also accordingly changing, and it is possible to change machine language interaction into natural language interaction. Machine language interaction is mainly completed by performing a tap/click operation on an interface control or a physical button by using a keyboard and a mouse or in a touch manner. Sometimes, a task can be completed only after multi-level jumping, and operations are complex. Natural language interaction is mainly completed by combining natural language input (for example, language input or text input) of a user with a powerful natural language processing capability, and can be implemented directly without level jumping. Therefore, compared with machine language interaction, natural language interaction can provide more convenient and more intelligent experience for the user.

Currently, more electronic devices can provide a natural language interaction function. The natural language interaction function may support the electronic device in receiving language/text instructions input by the user by using natural language (for example, a voice or a text), and may support the electronic device in understanding and executing the instructions.

However, in some scenarios in which a specific interaction object needs to be processed (for example, a specific flower in a picture including a plurality of flowers is to be edited), the user sometimes cannot accurately describe the interaction object by using only a voice/text, and consequently, the electronic device cannot accurately and quickly recognize an intention of the user, and may need multi-round natural language interaction to complete the task, resulting in low interaction efficiency and poor user experience.

Based on the foregoing problem that it is inconvenient to express the interaction object by using the natural language, embodiments of this application provide an interaction method. The interaction method may be applied to an electronic device 100 that can provide a natural language interaction function. The electronic device 100 may support a user in starting the natural language interaction function by using a touch and hold operation, and display a natural language interaction entry. Further, the electronic device 100 may detect a voice/text instruction input by the user by using the natural language (for example, a voice or a text), and display the instruction on the natural language interaction entry. After input of the instruction is completed, the electronic device 100 may determine whether the instruction includes a default object or a reference pronoun. If yes, the electronic device 100 may extract and recognize an interaction object from interface content at a location of the touch and hold operation of the user or at and near the location of the touch and hold operation of the user, to determine the interaction object, and substitute the interaction object into the input instruction for understanding and execution, to complete a task specified by the user. This can efficiently select the interaction object and further perform an operation on the interaction object by integrating a touch operation and natural language interaction, to resolve the problem that it is inconvenient to express the interaction object by using the natural language, and improve human-machine interaction efficiency and user experience.

It should be noted that the electronic device 100 in embodiments of this application may be a portable electronic device running HarmonyOS^{®}, iOS^{®}, Android^{®}, Microsoft^{®}, or another operating system, for example, a mobile phone, a tablet computer, a smartwatch, a smart band, an AR device, or a VR device; or may be a non-portable electronic device, for example, a laptop (Laptop) computer having a touch-sensitive surface or a touch panel, or a desktop computer having a touch-sensitive surface or a touch panel. A type of the electronic device 100 is not limited in embodiments of this application.

**The interaction method provided in embodiments of this application may be applied to a plurality of scenarios. The following describes the interaction method provided in embodiments of this application with reference to a user interface and several typical application scenarios.**

It should be noted that the following application scenarios are merely several typical application scenarios. The interaction method provided in embodiments of this application may be further applied to more other scenarios. This is not limited in embodiments of this application.

### I. Display application scenario

The "display application scenario" may be an application scenario in which a corresponding operation (for example, an operation of sending, editing, or the like) is performed on display information, for example, a picture or a video, by using the interaction method provided in embodiments of this application.

### 1. Perform a corresponding operation on a picture

### (1) Picture content sending

By implementing the interaction method provided in embodiments of this application, the electronic device 100 may support the user in sending an entire picture or a part of the picture (which may also be referred to as an object in the picture) to another electronic device (for example, an electronic device of a friend), another application installed on the electronic device 100, or the like, to implement a quick sharing/collecting/copying function of picture content.

### 1) Cutout transfer (to be specific, the part of the picture is sent)

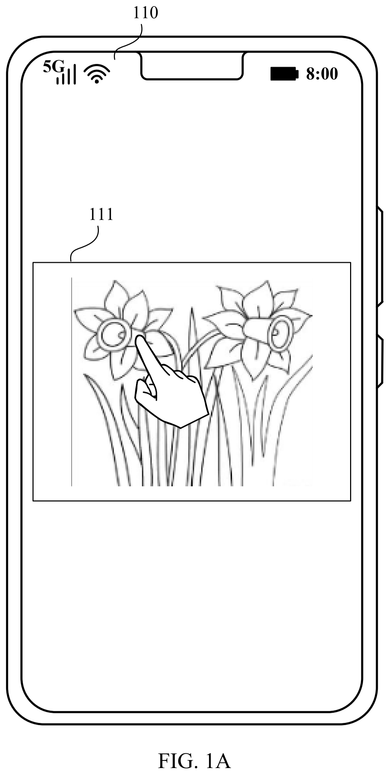

**FIG. 1A to FIG. 1E** **illustrate a group of user interfaces for implementing a quick sharing function of picture content in a cutout transfer application scenario.**

A picture on a gallery application is used as an example. Refer to FIG. 1A. A user interface 110 shown in FIG. 1A may be a user interface of the gallery application. The user interface 110 may include a picture 111, and the picture 111 may be a picture that the user is browsing.

In embodiments of this application, the user may trigger, by performing a touch and hold operation (for example, a touch and hold operation performed by using a finger of the user or a touch apparatus) on the picture, the electronic device 100 to perform intelligent cutout and display a thumbnail of the entire picture. For example, if interface content at a location of the touch and hold operation or at and near the location of the touch and hold operation includes a subject to be cut out, the electronic device 100 may perform intelligent cutout and display the subject to be cut out. For another example, if the interface content at the location of the touch and hold operation or at and near the location of the touch and hold operation does not include the subject to be cut out, the electronic device 100 may display the thumbnail of the entire picture.

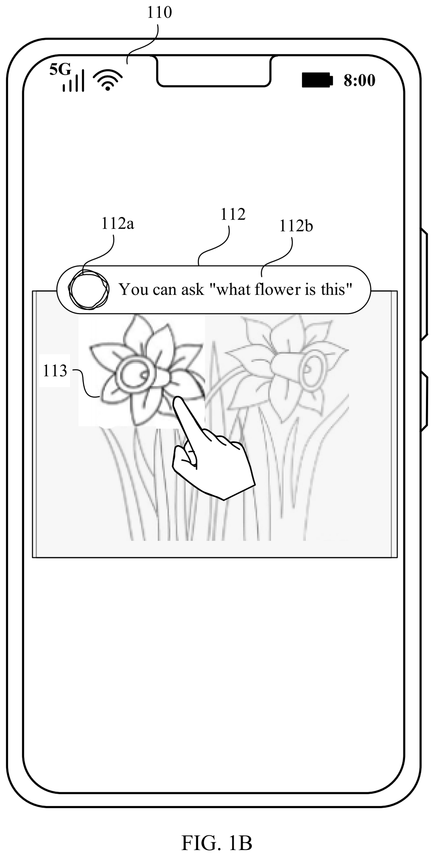

Still refer to FIG. 1A. For example, the electronic device 100 may detect a touch and hold operation performed by the user on the picture 111. It is assumed that a location of the touch and hold operation is a location of a left flower in the picture 111. In response to the touch and hold operation, the electronic device 100 may recognize whether interface content at the location of the touch and hold operation or at and near the location of the touch and hold operation includes a subject to be cut out. If yes, for example, the left flower in the picture 111 is included at the location of the touch and hold operation, the electronic device 100 may determine that the subject to be cut out is the left flower in the picture 111. Further, refer to FIG. 1B. The electronic device 100 may highlight the subject to be cut out 113 (namely, the left flower in the picture 111), to help the user learn whether the subject to be cut out recognized by the electronic device 100 is consistent with an intended subject to be cut out of the user. In this embodiment of this application, the subject to be cut out recognized by the electronic device 100 may be an interaction object that the user selects for subsequent natural language interaction.

In this embodiment of this application, the touch and hold operation may further trigger the electronic device 100 to start a natural language interaction function.

Still refer to FIG. 1B. After starting the natural language interaction function, the electronic device 100 may display a natural language interaction entry. The natural language interaction entry may be used to inform the user that the electronic device 100 has started the natural language interaction function, and may be further used for subsequent natural language interaction. The natural language interaction entry displayed by the electronic device 100 may be a natural language interaction entry 112 shown in FIG. 1B.

Optionally, an indicator 112a may be displayed on the natural language interaction entry 112, and the indicator 112a may be used to inform the user that the electronic device 100 has started the natural language interaction function.

Optionally, a prompt 112b may be displayed on the natural language interaction entry 112, and the prompt 112b may prompt the user to input a natural language instruction related to the interaction object. For example, as shown in FIG. 1B, the user selects a flower as the interaction object, and the prompt 112b may be a prompt (for example, You can ask "what flower is this") prompting the user to input a natural language instruction related to the flower. It is easy to understand that the prompt may be generated by the electronic device 100 based on the recognized interaction object, that is, the generated prompt may be a prompt related to the interaction object, and the prompt is a natural language instruction that corresponds to the interaction object and that can be recognized by the electronic device 100.

Optionally, the prompt 112b may alternatively be output in a form of voice broadcast.

In some embodiments, after starting the natural language interaction function, the electronic device 100 may start to detect, in real time, a natural language instruction input by the user, regardless of whether the user cancels the touch and hold operation. In some other embodiments, after the electronic device 100 starts the natural language interaction function, the electronic device 100 may alternatively start to detect a natural language instruction input by the user after detecting an operation (for example, a tap operation) performed by the user on the indicator 112a shown in FIG. 1B or an operation (for example, a tap operation) performed by the user on any location on the natural language interaction entry 112 shown in FIG. 1B.

In some embodiments, the prompt displayed on the natural language interaction entry or the prompt (for example, the prompt 112b) output through voice broadcast may be displayed/output through voice broadcast by the electronic device 100 when a voice instruction of the user is not detected within a preset time period after the natural language interaction function is started.

In some embodiments, after the electronic device 100 starts to detect the voice instruction input by the user, if the electronic device 100 detects that the user does not cancel the touch and hold operation (that is, the user keeps touching and holding a screen of the electronic device 100), the electronic device 100 may keep detecting the voice instruction input by the user; or if the electronic device 100 detects that the user cancels the touch and hold operation (for example, the finger of the user or the touch apparatus leaves the screen of the electronic device 100), the electronic device 100 may stop detecting the voice instruction input by the user (that is, stop collecting voice input).

In some embodiments, after the electronic device 100 detects the voice instruction input by the user, regardless of whether the user cancels the touch and hold operation, if the electronic device 100 does not detect that the user continues to input a voice instruction within a preset time period, the electronic device 100 may determine that input of the voice instruction is completed. In some other embodiments, after the electronic device 100 detects the voice instruction input by the user, if the electronic device 100 detects that the user cancels the touch and hold operation, the electronic device 100 may determine that input of the voice instruction is completed.

In embodiments of this application, the natural language instruction input by the user may be a voice instruction or a text instruction. The voice instruction may be input by the user via a microphone on the electronic device 100, and the text instruction may be input by the user via a virtual keyboard on the electronic device 100. It is easy to understand that, when a current application supports virtual keyboard input, the natural language instruction input by the user may be the voice instruction or the text instruction. When the current application does not support the virtual keyboard input, the natural language instruction input by the user may be only the voice instruction.

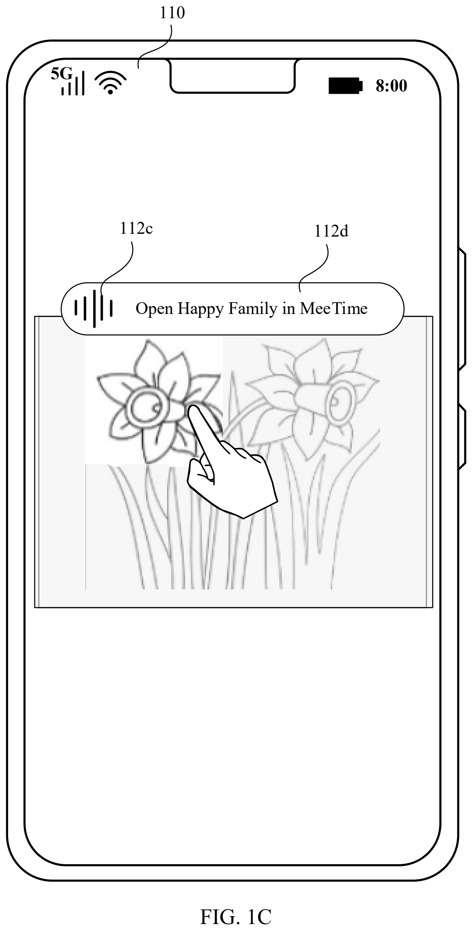

Refer to FIG. 1C. For example, the natural language instruction input by the user is a voice instruction. The electronic device 100 may support the user in sharing an interaction object to an application by using the voice instruction. It is assumed that the user wants to share the interaction object, namely, the subject to be cut out 113 shown in FIG. 1B, to a chat group named "Happy Family" on a social application "MeeTime", so that the electronic device 100 may detect a related voice instruction (for example, a voice "Open Happy Family in MeeTime") input by the user, and may display the detected and user-input related voice instruction (for example, a text 112d "Open Happy Family in MeeTime") in a form of a text.

Optionally, after starting to detect the voice instruction input by the user, the electronic device 100 may replace the indicator 112a shown in FIG. 1B with an indicator 112c shown in FIG. 1C. The indicator 112c may be used to inform the user that the electronic device 100 is detecting the voice instruction input by the user.

Further, still refer to FIG. 1C. After input of the voice instruction is completed, the electronic device 100 may further analyze the voice instruction, to determine that an operation corresponding to the voice instruction is opening the application "MeeTime" and displaying a user interface corresponding to the chat group named "Happy Family".

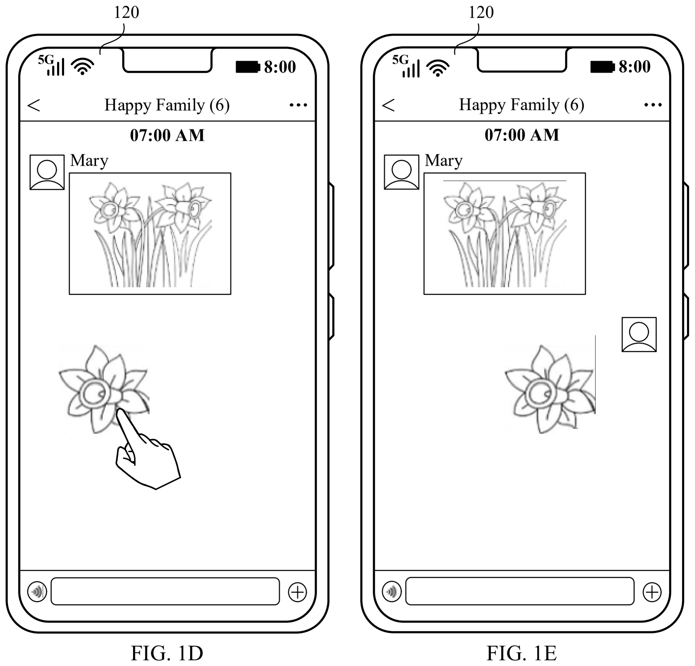

Further, refer to FIG. 1D. For example, the electronic device 100 may display a user interface 120 corresponding to the chat group "Happy Family". The electronic device 100 may support the user in touching and holding and dragging the interaction object, namely, the subject to be cut out 113 shown in FIG. 1B, in the user interface 120. Further, after the electronic device 100 detects an operation of canceling the touching and holding and dragging (for example, an operation of moving a finger of the user or a touch apparatus away from the screen of the electronic device 100) by the user, in response to the operation, as shown in FIG. 1E, the electronic device 100 may send the interaction object, namely, the subject to be cut out 113 shown in FIG. 1B, to the chat group named "Happy Family" in the social application "MeeTime". In this way, the quick sharing function of the picture content is implemented.

In this embodiment of this application, in the entire process from FIG. 1A to FIG. 1D, the user may not cancel the touch and hold operation. In some embodiments, before FIG. 1D is displayed, the user may also cancel the touch and hold operation. In this case, the electronic device 100 may not display FIG. 1D, but directly display FIG. 1E, to be specific, directly send the subject to be cut out 113 to the chat group named "Happy Family" in the social application "MeeTime".

It should be noted that the voice instruction "Open MeeTime Happy Family" for implementing the quick sharing function of the picture content is merely an example, and should not constitute a limitation on this application. It is easy to understand that the voice instruction for implementing the quick sharing function of the picture content needs to meet a specific condition. Under the condition, the electronic device 100 can determine a specific location to which the user wants to share a selected interaction object. Meeting the "specific condition" may mean that the voice instruction includes some keywords indicating a specific location to which the user wants to share the selected interaction object, for example, the keywords are verbs such as "open", "jump to", and "share to", or nouns such as a name of an application, and a name of a contact/chat group.

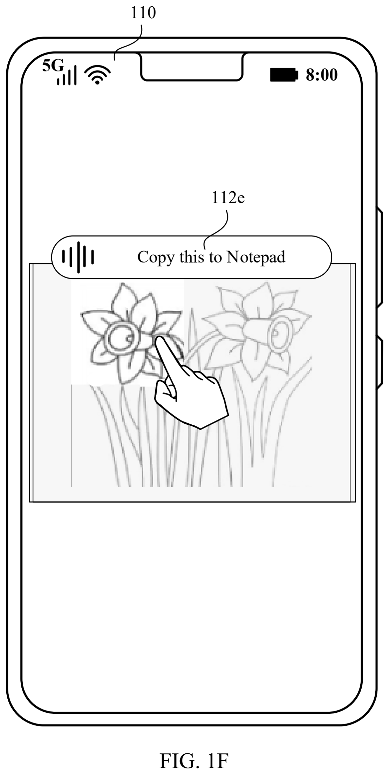

**FIG. 1F to FIG. 1H** **illustrate a group of user interfaces for implementing a quick collecting/copying function of picture content in a cutout transfer application scenario.**

Similarly, for example, the interaction object selected by the user is the subject to be cut out 113 shown in FIG. 1B. For a specific process in which the user selects the interaction object and starts the natural language interaction function of the electronic device 100, refer to the foregoing descriptions of FIG. 1A and FIG. 1B. Details are not described herein again.

Refer to FIG. 1F. For example, the natural language instruction input by the user is a voice instruction. The electronic device 100 may support the user in collecting/copying the interaction object to an application by using the voice instruction. It is assumed that the user wants to collect/copy the interaction object, namely, the subject to be cut out 113 shown in FIG. 1B, to an application "Notepad", so that the electronic device 100 may detect a related voice instruction (for example, a voice "Copy this to Notepad") input by the user, and may display the detected and user-input related voice instruction (for example, a text 112e "Copy this to Notepad") in a form of a text.

Further, still refer to FIG. 1F. The electronic device 100 may further analyze the voice instruction, to determine that an operation corresponding to the voice instruction is opening the application "Notepad" and displaying a corresponding user interface.

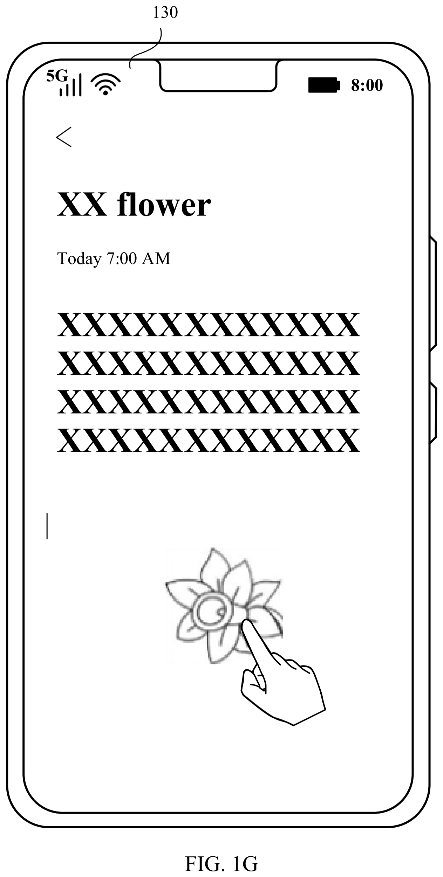

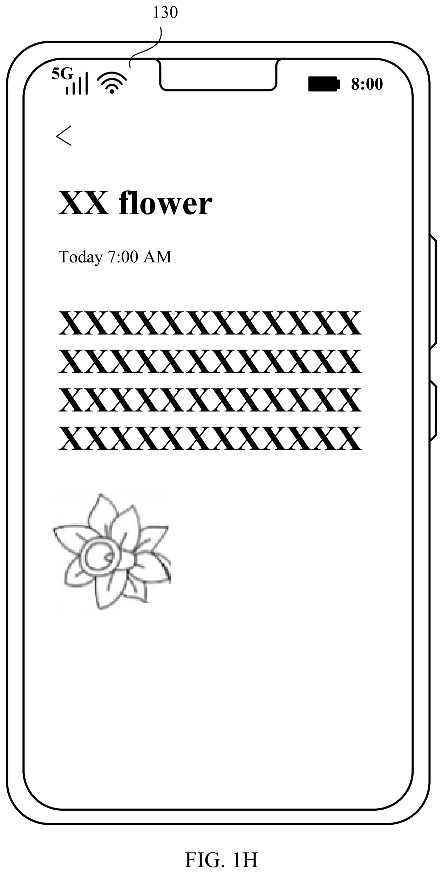

Further, refer to FIG. 1G. For example, the electronic device 100 may display a user interface 130. The user interface 130 may be a user interface corresponding to an existing note (for example, a note named "XX flower"), or may be a newly created note in Notepad. This is not limited in embodiments of this application. The electronic device 100 may support the user in touching and holding and dragging the interaction object, namely, the subject to be cut out 113 shown in FIG. 1B, in the user interface 130. Further, after the electronic device 100 detects an operation of canceling the touching and holding and dragging (for example, an operation of moving a finger of the user or a touch apparatus away from the screen of the electronic device 100) by the user, in response to the operation, as shown in FIG. 1H, the electronic device 100 may add the interaction object, namely, the subject to be cut out 113 shown in FIG. 1B, to the note named "XX flower". In this way, the quick collecting/copying function of the picture content is implemented.

In this embodiment of this application, in the entire process from FIG. 1F to FIG. 1G, the user may not cancel the touch and hold operation. In some embodiments, before FIG. 1G is displayed, the user may also cancel the touch and hold operation. In this case, the electronic device 100 may not display FIG. 1G, but directly display FIG. 1H, to be specific, directly add the subject to be cut out 113 to the note named "XX flower".

It should be noted that the voice instruction "Copy this to Notepad" for implementing the quick collecting/copying function of the picture content is merely an example, and should not constitute a limitation on this application. It is easy to understand that the voice instruction for implementing the quick collecting/copying function of the picture content needs to meet a specific condition. Under the condition, the electronic device 100 can determine a specific location to which the user wants to collect/copy a selected interaction object. Meeting the "specific condition" may mean that the voice instruction includes some keywords indicating a specific location to which the user wants to collect/copy the selected interaction object, for example, the keywords are verbs such as "open", "collect to", and "copy to", or nouns such as a name of an application.

It should be noted that a display style of the natural language interaction entry is not limited in embodiments of this application. A display location of the natural language interaction entry is not limited in embodiments of this application either. For example, the display location may be a location of the touch and hold operation, or may be near the location of the touch and hold operation, or the like.

It should be noted that a meaning represented by the "natural language interaction entry" has been recorded in embodiments of this application. A name of the "natural language interaction entry" does not constitute any limitation on embodiments of this application. In some other embodiments of this application, the natural language interaction entry may also be referred to as a natural language (or voice/text) recognition box/prompt box/recognition bar/prompt bar/recognition window/prompt window or the like.

It should be noted that, in the interaction method provided in embodiments of this application, an operation of selecting the interaction object by the user and an operation of triggering the electronic device 100 to start the natural language interaction function may be the same operation. In embodiments of this application, only an example in which the operation is the touch and hold operation is used. This should not constitute a limitation on this application. In some other embodiments of this application, the operation may be another operation.

It should be noted that, in the interaction method provided in embodiments of this application, whether the electronic device 100 needs to be triggered to start the natural language interaction function after the user selects the interaction object may be autonomously set by the user, or may be set by a system of the electronic device 100 by default. This is not limited in embodiments of this application.

### 2) Entire picture transfer (to be specific, the entire picture is sent)

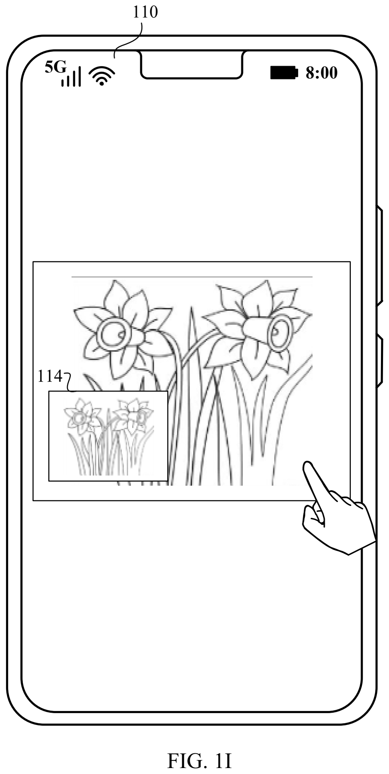

Refer to FIG. 1I. The user may trigger, by performing a touch and hold operation on the picture, the electronic device 100 to display a thumbnail of the entire picture (for example, a thumbnail 114 shown in FIG. 1I), and may further trigger the electronic device 100 to start the natural language interaction function, to complete entire picture transfer. For a specific process of entire picture transfer that is similar to the foregoing cutout transfer, refer to the foregoing related content. Details are not described herein again.

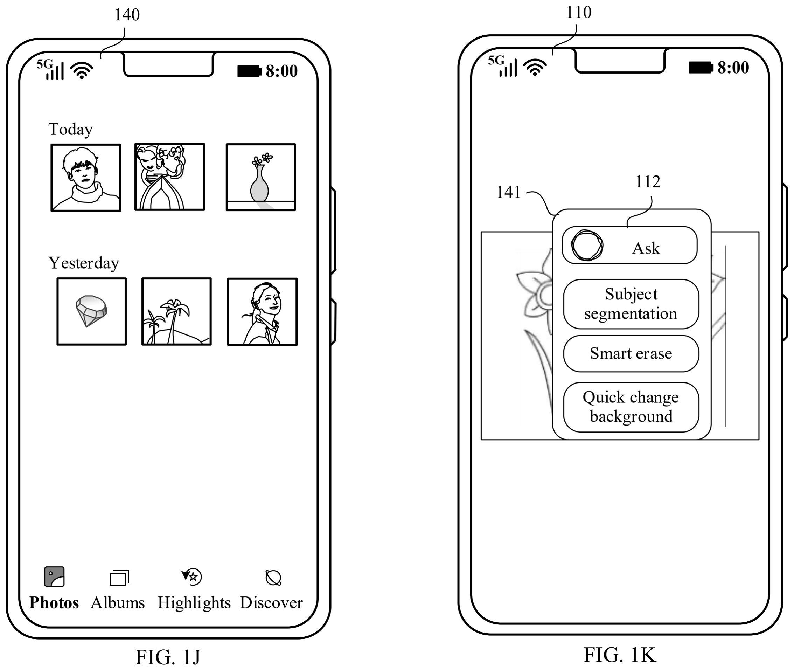

In the specific process of entire picture transfer, merely a specific picture that the user is browsing is used as an example. In some embodiments, entire picture transfer may also be performed on a picture browsed by the user before. For example, refer to FIG. 1J. A user interface 140 shown in FIG. 1J may be a user interface displayed before a specific picture is browsed in a gallery application. The user interface may include thumbnails of one or more pictures. After selecting a thumbnail of a picture, the user may also trigger the electronic device 100 to start the natural language interaction function, and to complete entire picture transfer by using the natural language interaction function. A specific process is similar to the foregoing entire picture transfer performed on the specific picture that the user is browsing. Details are not described herein again.

In some embodiments, after the electronic device 100 detects that the user completes selection of the interaction object and starts the natural language interaction function to display a natural language interaction entry, if the electronic device 100 detects an operation of touching and holding and dragging the interaction object by the user, the electronic device 100 may move the natural language interaction entry together with the interaction object in response to the operation.

Optionally, if the electronic device 100 detects that a displacement of the interaction object touched and held and dragged by the user is greater than a preset displacement threshold, the electronic device 100 may shrink the natural language interaction entry, or cancel display of the natural language interaction entry. If the electronic device 100 detects that the interaction object does not produce a displacement again within a preset time period, the electronic device 100 may restore display of the natural language interaction entry.

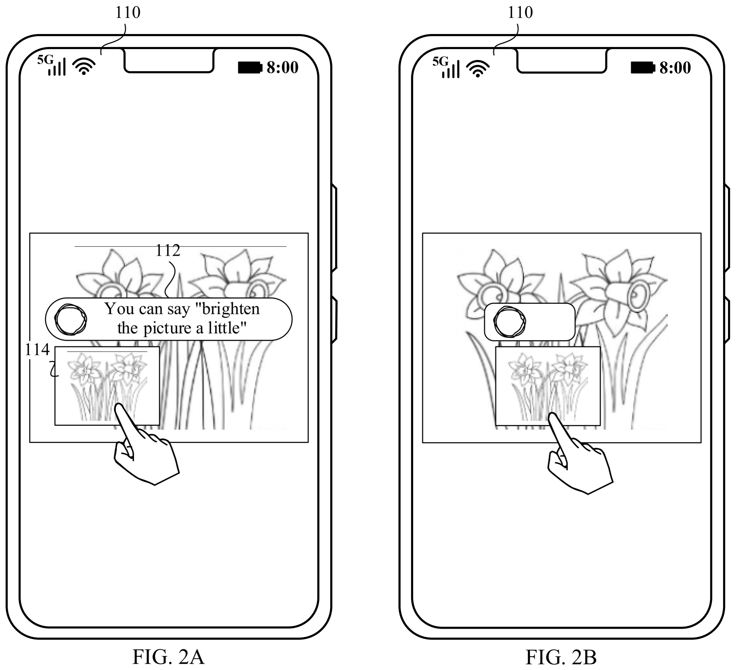

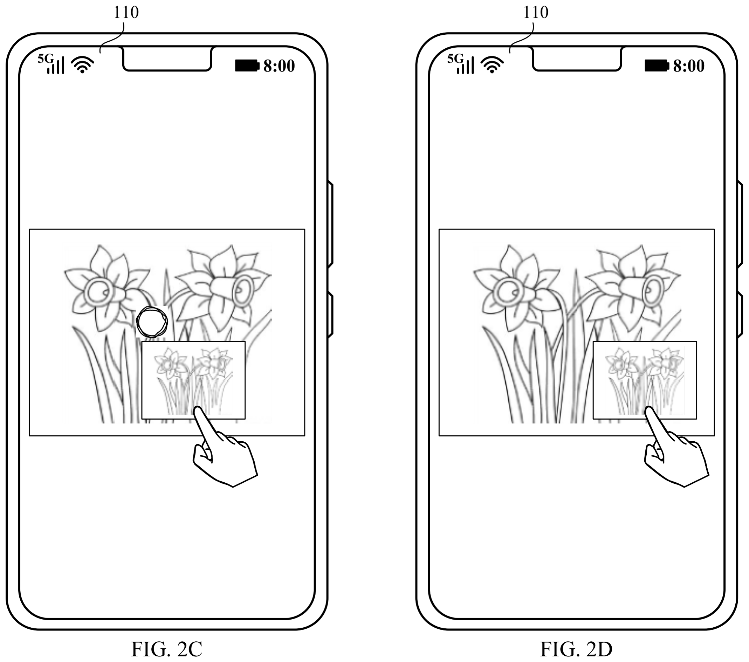

For example, refer to FIG. 2A. The interaction object is the thumbnail 114. The electronic device 100 may detect an operation of touching and holding and dragging the thumbnail 114 by the user. In response to the operation, as shown in FIG. 2B and FIG. 2C, the electronic device 100 may move the natural language interaction entry 112 together with the thumbnail 114, and may further gradually shrink the natural language interaction entry 112, as shown in FIG. 2B and FIG. 2C, until display of the natural language interaction entry 112 is canceled, as shown in FIG. 2D.

Optionally, in the foregoing process in which the natural language interaction entry moves together with the interaction object and is shrunk, the electronic device 100 may continuously detect a voice instruction input by the user (that is, keep receiving sound), or may no longer detect a voice instruction input by the user (that is, stop receiving sound). When display of the natural language interaction entry is canceled, the electronic device 100 may no longer detect a voice instruction input by the user. When display of the natural language interaction entry is restored, the electronic device 100 may continue to detect a voice instruction input by the user.

In some embodiments, refer to FIG. 1K. When displaying the natural language interaction entry (for example, the natural language interaction entry 112), the electronic device 100 may further display one or more function options (for example, a "Subject segmentation" option, a "Smart erase" option, and a "Quick change background" option), and display the natural language interaction entry and the one or more function options in a scenario-based menu bar 141. The user may tap a corresponding function option to trigger the electronic device 100 to perform an operation corresponding to the function option, which is convenient and quick.

### (2) Picture content erasing

By implementing the interaction method provided in embodiments of this application, the electronic device 100 may support the user in erasing a part of the picture (which may also be referred to as an object in the picture) from the picture, to implement a function of erasing picture content.

Similarly, for example, the interaction object selected by the user is the subject to be cut out 113 shown in FIG. 1B. For a specific process in which the user selects the interaction object and starts the natural language interaction function of the electronic device 100, refer to the foregoing descriptions of FIG. 1A and FIG. 1B. Details are not described herein again.

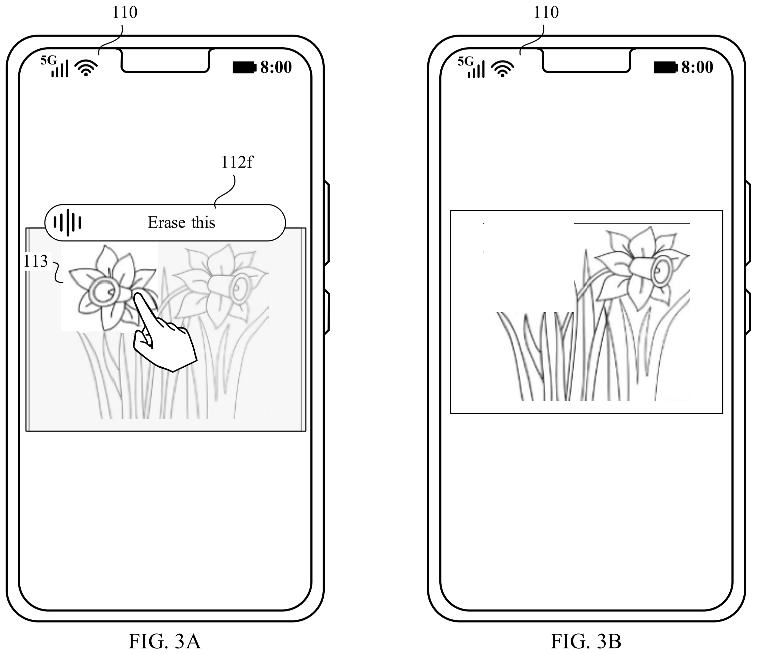

For example, a natural language instruction input by the user is a voice instruction. The electronic device 100 may support the user in erasing the interaction object from the picture by using the voice instruction. Refer to FIG. 3A. It is assumed that the user wants to erase the interaction object, namely, the subject to be cut out 113, from the picture, so that the electronic device 100 may detect a related voice instruction (for example, a voice "Erase this") input by the user, and may display the detected and user-input related voice instruction (for example, a text 112f "Erase this") in a form of a text.

Further, still refer to FIG. 3A. After input of the voice instruction is completed, the electronic device 100 may further analyze the voice instruction, to determine that an operation corresponding to the voice instruction is erasing the interaction object, namely, the subject to be cut out 113, from the picture.

Further, the electronic device 100 may erase the interaction object, namely, the subject to be cut out 113, from the picture by using a related algorithm. After the erasing, refer to FIG. 3B. The electronic device 100 may no longer display the interaction object, namely, the subject to be cut out 113, in the picture. In this way, the function of erasing the picture content is implemented.

It should be noted that the voice instruction "Erase this" for implementing the function of erasing the picture content is merely an example, and should not constitute a limitation on this application. It is easy to understand that the voice instruction for implementing the function of erasing the picture content needs to meet a specific condition. Under the condition, the electronic device 100 can determine a specific location of an object that the user wants to erase in the picture. Meeting the "specific condition" may mean that the voice instruction includes some keywords indicating an erased object and an erasing action.

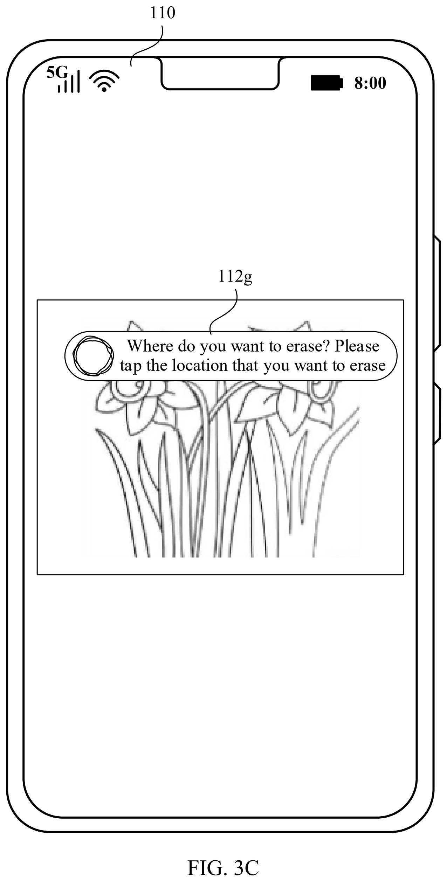

In some embodiments, if the electronic device 100 cannot determine a specific intention of the user based on the voice instruction input by the user and a location of the touch and hold operation, the electronic device 100 may further prompt, by using the natural language interaction entry in a voice broadcast or text prompt manner, the user to perform a corresponding operation, to determine the specific intention of the user. For example, refer to FIG. 3C. If the electronic device 100 cannot determine a specific location of an object that the user wants to erase in the picture, the electronic device 100 may prompt the user. For example, the electronic device 100 displays a prompt 112g "Where do you want to erase? Please tap the location that you want to erase". After detecting that the user performs a corresponding operation according to the prompt 112g, the electronic device 100 may erase the object at the corresponding location in the picture.

### (3) Picture content replacement

By implementing the interaction method provided in embodiments of this application, the electronic device 100 may support the user in replacing a part of the picture (which may also be referred to as an object in the picture) (that is, replacing content of the part of the picture with other content), to implement a picture content replacement function.

Similarly, for example, the interaction object selected by the user is the subject to be cut out 113 shown in FIG. 1B. For a specific process in which the user selects the interaction object and starts the natural language interaction function of the electronic device 100, refer to the foregoing descriptions of FIG. 1A and FIG. 1B. Details are not described herein again.

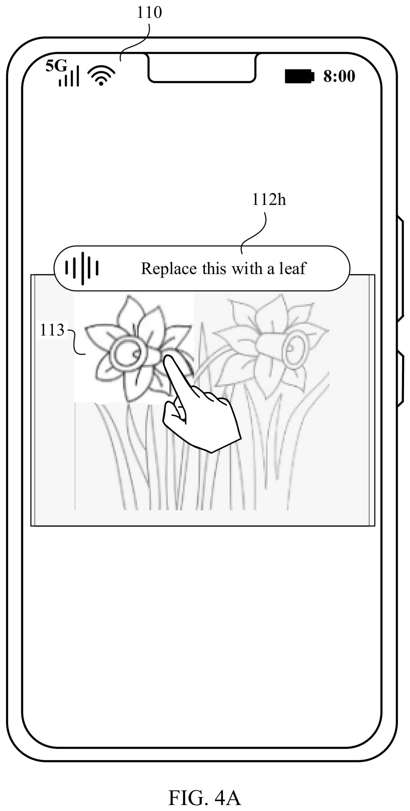

For example, a natural language instruction input by the user is a voice instruction. The electronic device 100 may support the user in replacing the interaction object by using the voice instruction. Refer to FIG. 4A. It is assumed that the user wants to replace the interaction object (which may be referred to as a replaced object), namely, the subject to be cut out 113, with another object (which may be referred to as a replacement object), so that the electronic device 100 may detect a related voice instruction (for example, a voice "Replace this with a leaf") input by the user, and may display the detected and user-input related voice instruction (for example, a text 112h "Replace this with a leaf") in a form of a text.

Further, still refer to FIG. 4A. After input of the voice instruction is completed, the electronic device 100 may further analyze the voice instruction, to determine that an operation corresponding to the voice instruction is replacing the interaction object, namely, the subject to be cut out 113, with the another object (for example, replacing the interaction object, namely, the subject to be cut out 113, with the leaf).

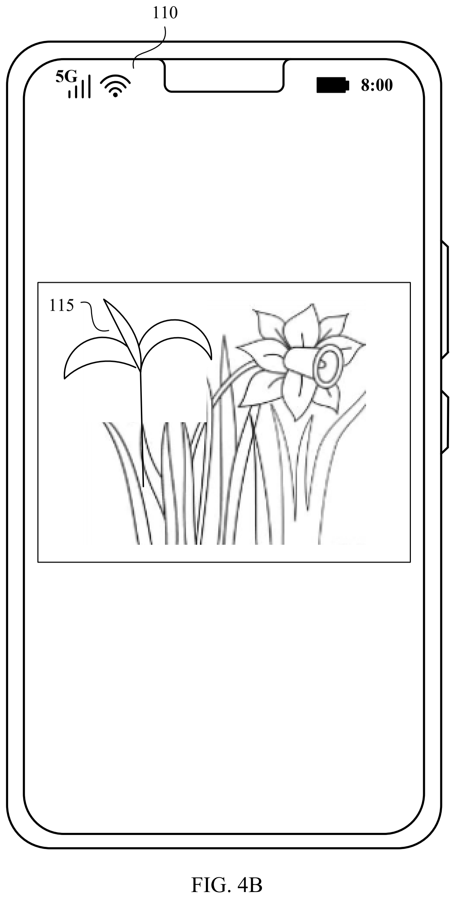

Further, the electronic device 100 may search for the replacement object locally or in the cloud. After the search is completed, the electronic device 100 may select a replacement object by default (or support the user in selecting a replacement object from a plurality of found replacement objects), and replace the interaction object, namely, the subject to be cut out 113, with the selected replacement object by using a related algorithm. After the replacement is completed, as shown in FIG. 4B, the electronic device 100 may no longer display the interaction object, namely, the subject to be cut out 113, in the picture, but display the selected replacement object (for example, the replacement object 115, namely, the leaf) at an original location of the subject to be cut out 113 in the picture. In this way, the picture content replacement function is implemented.

It should be noted that the voice instruction "Replace this with a leaf" for implementing the picture content replacement function is merely an example, and should not constitute a limitation on this application. It is easy to understand that the voice instruction for implementing the picture content replacement function needs to meet a specific condition. Under the condition, the electronic device 100 can determine what the user wants to replace the replaced object with. Meeting the "specific condition" may mean that the voice instruction includes some keywords indicating the replaced object, the replacement object, and a replacement action.

In some embodiments, the electronic device 100 may also support the user in inserting content into the picture. It is easy to understand that, if the user wants to insert the content into the picture, similar to the foregoing picture content replacement, the user may input a voice instruction related to content insertion. After the language instruction is input, the electronic device 100 may analyze the voice instruction, to determine that an operation corresponding to the voice instruction is inserting the content into the picture. Further, the electronic device 100 may search for an inserted object locally or in the cloud. After the search is completed, the electronic device 100 may select an inserted object by default (or support the user in selecting an inserted object from a plurality of found inserted objects), and insert the selected inserted object into the picture by using a related algorithm (for example, insert the inserted object into a location at which the user touches and holds in the picture). It is easy to understand that the voice instruction related to content insertion needs to meet a specific condition. Under the condition, the electronic device 100 can determine content that the user wants to insert into the picture. Meeting the "specific condition" may mean that the voice instruction includes some keywords indicating the inserted object, an insertion action, and an insertion location.

In some embodiments, the electronic device 100 may also support the user in completing content when some content in the picture is missing. It is easy to understand that, if the user wants to complete the content in the picture, similar to the foregoing picture content replacement, the user may input a voice instruction related to content completion (for example, a voice instruction "Complete missing content in the picture"). After the voice instruction is input, the electronic device 100 may analyze the voice instruction, to determine that an operation corresponding to the voice instruction is completing the content in the picture. Further, the electronic device 100 may determine, by using a related algorithm, content that needs to be completed, and complete the content in the picture. It is easy to understand that the voice instruction related to content completion needs to meet a specific condition. Under the condition, the electronic device 100 can determine that the user wants to complete the content in the picture. Meeting the "specific condition" may mean that the voice instruction includes some keywords indicating a completion action.

### (4) Picture content recognition (for example, an object or a face image in the picture is recognized)

By implementing the interaction method provided in embodiments of this application, the electronic device 100 may support recognition of an interaction object selected by the user in the picture, to implement a picture content recognition function.

Similarly, for example, the interaction object selected by the user is the subject to be cut out 113 shown in FIG. 1B. For a specific process in which the user selects the interaction object and starts the natural language interaction function of the electronic device 100, refer to the foregoing descriptions of FIG. 1A and FIG. 1B. Details are not described herein again.

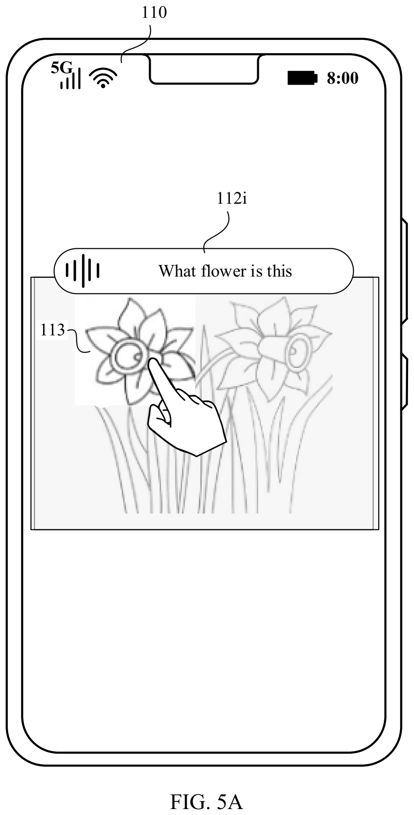

For example, the natural language instruction input by the user is a voice instruction. The electronic device 100 may support the user in enabling the electronic device 100 to recognize the interaction object by using the voice instruction. Refer to FIG. 5A. It is assumed that the user wants the electronic device 100 to recognize the subject to be cut out 113, so that the electronic device 100 may detect a related voice instruction (for example, a voice "What flower is this" or "What is this") input by the user, and may display the detected and user-input related voice instruction (for example, a text 112i "What flower is this" or "What is this") in a form of a text.

Further, still refer to FIG. 5A. After input of the voice instruction is completed, the electronic device 100 may further analyze the voice instruction, to determine that an operation corresponding to the voice instruction is recognizing the subject to be cut out 113.

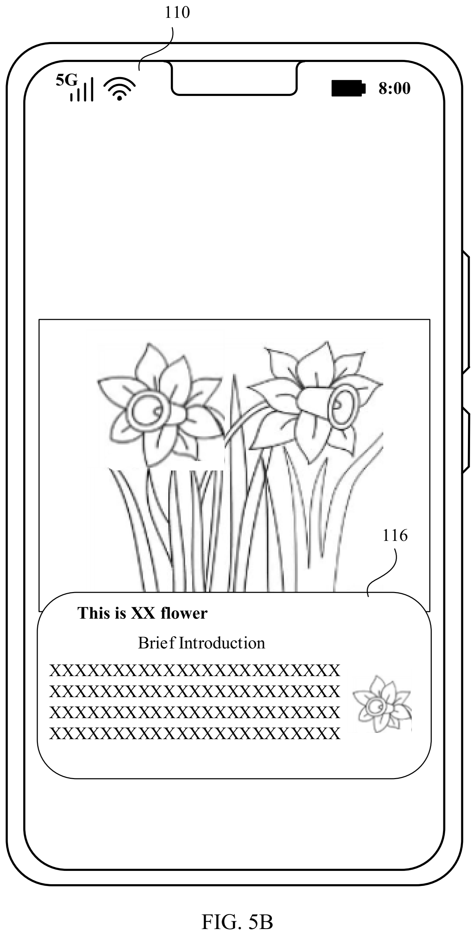

Further, the electronic device 100 may recognize the subject to be cut out 113 by using a related algorithm. After the recognition is completed, as shown in FIG. 5B, the electronic device 100 may display a recognition result 116. The recognition result 116 may include a name (for example, "XX flower") of the subject to be cut out 113, and may further include a brief introduction about the subject to be cut out 113. The brief introduction about the subject to be cut out 113 may be found by the electronic device 100 locally or on the cloud. It should be noted that a display style (for example, a widget style or a common text style) and a display location of the recognition result 116 are not limited in embodiments of this application.

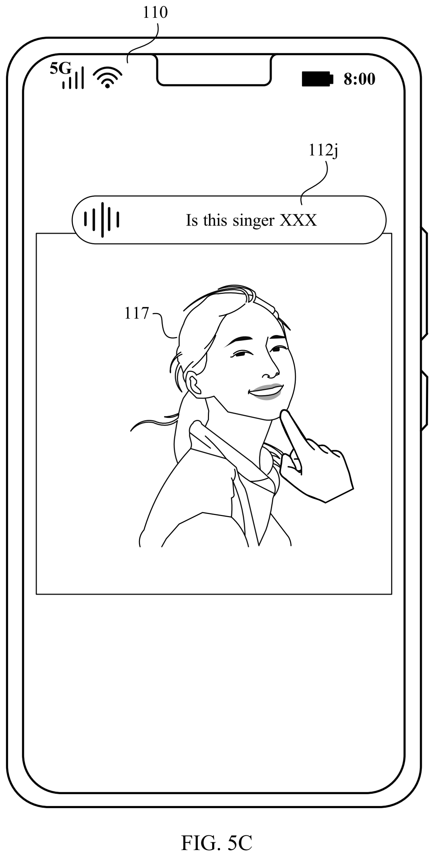

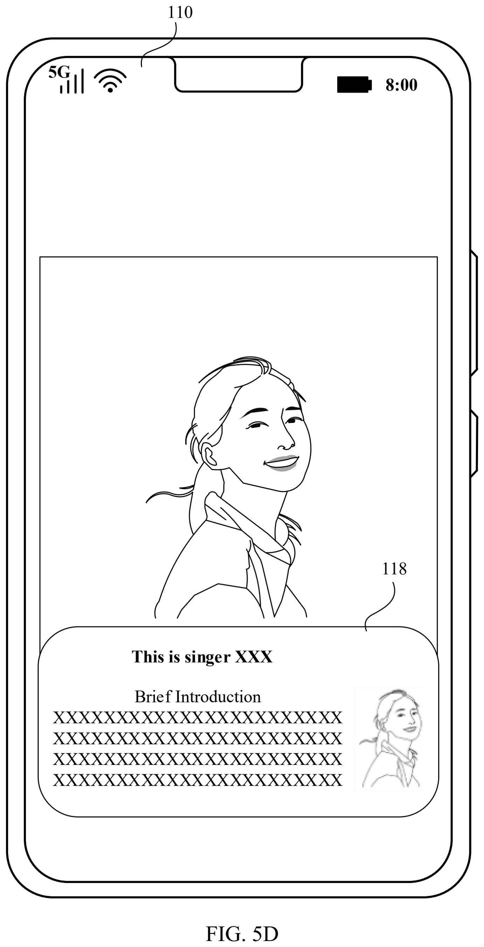

In some embodiments, the electronic device 100 may also support identity recognition on the face image in the picture. Similar to the foregoing recognition of the subject to be cut out 113, refer to FIG. 5C. It is assumed that the interaction object selected by the user is a subject to be cut out 117. The subject to be cut out 117 may include a face image. It is assumed that the user wants the electronic device 100 to recognize the subject to be cut out 117, so that the electronic device 100 may detect a related voice instruction (for example, a voice "Is this singer XXX" or "Who is this") input by the user, and may display the detected and user-input related voice instruction (for example, a text 112j "Is this singer XXX" or "Who is this") in a form of a text. Further, still refer to FIG. 5C. After input of the voice instruction is completed, the electronic device 100 may further analyze the voice instruction, to determine that an operation corresponding to the voice instruction is recognizing the subject to be cut out 117. Further, the electronic device 100 may recognize the subject to be cut out 117 by using a related algorithm. After the recognition is completed, as shown in FIG. 5D, the electronic device 100 may display a recognition result 118. The recognition result 118 may include an identity (for example, "Singer XXX") of the subject to be cut out 117, and may further include a brief introduction about the subject to be cut out 117. The brief introduction about the subject to be cut out 117 may be found by the electronic device 100 locally or on the cloud. It should be noted that a display style (for example, a widget style or a common text style) and a display location of the recognition result 118 are not limited in embodiments of this application.

It is easy to understand that the voice instruction related to picture content recognition needs to meet a specific condition. Under the condition, the electronic device 100 can determine an intention that the user wants the electronic device 100 to perform picture content recognition. Meeting the "specific condition" may mean that the voice instruction includes some keywords (for example, keywords such as query, recognition, what is, and who is) indicating a recognition action.

### (5) Picture beautification (for example, makeup beautification is performed on a face in the picture)

By implementing the interaction method provided in embodiments of this application, the electronic device 100 may support the user in beautifying the picture.

For example, the interaction object selected by the user is the subject to be cut out 117 shown in FIG. 5C. For a specific process in which the user selects the interaction object and starts the natural language interaction function of the electronic device 100, refer to the foregoing descriptions of FIG. 1A and FIG. 1B. Details are not described herein again.

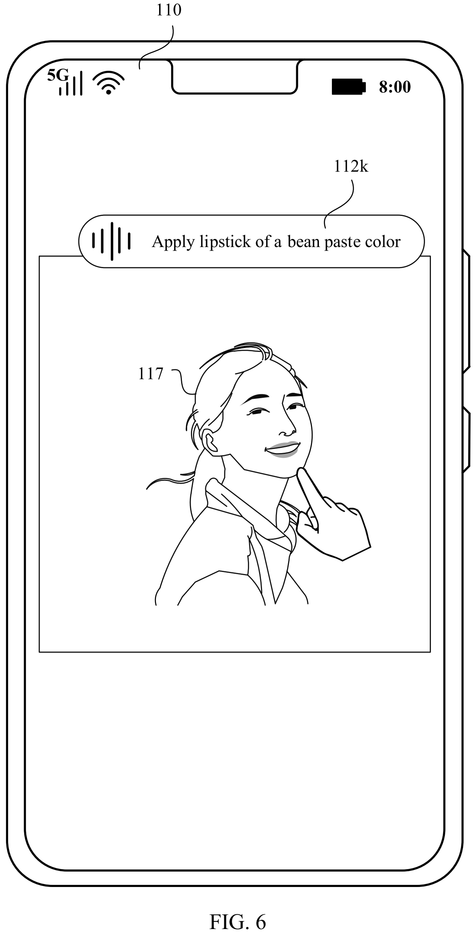

For example, a natural language instruction input by the user is a voice instruction. The electronic device 100 may support the user in enabling the electronic device 100 to perform beautification (for example, makeup beautification) on the interaction object by using the voice instruction. Refer to FIG. 6. It is assumed that the user enables the electronic device 100 to perform makeup beautification on the subject to be cut out 117 (for example, to apply lipstick to the subject to be cut out 117), so that the electronic device 100 may detect a related voice instruction (for example, a voice "Apply lipstick of a bean paste color") input by the user, and may display the detected and user-input related voice instruction (for example, a text 112k "Apply lipstick of a bean paste color") in a form of a text.

Further, still refer to FIG. 6. After input of the voice instruction is completed, the electronic device 100 may further analyze the voice instruction, to determine that an operation corresponding to the voice instruction is applying the lipstick of the bean paste color to the subject to be cut out 117.

Further, the electronic device 100 may perform intelligent cutout to obtain the subject to be cut out 117, recognize a location of a lip of the subject to be cut out 117 by using a related algorithm, add the bean paste color to the location, and display the bean paste color, to implement a makeup beautification effect expected by the user. Alternatively, the electronic device 100 may recognize, by using a related algorithm, a face image at a location of a touch and hold operation performed by the user, perform feature analysis on the face image, determine a location of a lip in the face image, add the bean paste color to the location, and display the bean paste color, to implement a makeup beautification effect expected by the user.

In some embodiments, when cutout cannot be implemented by using the touch and hold operation, the electronic device 100 may automatically recognize the face image in the picture, and perform a corresponding makeup beautification operation based on the voice instruction input by the user.

It is easy to understand that the voice instruction related to picture beautification needs to meet a specific condition. Under the condition, the electronic device 100 can determine how the user wants to beautify the picture. Meeting the "specific condition" may mean that the voice instruction includes some keywords (for example, keywords such as lipstick application, face slimming, eye enlargement, skin smoothing, face beautification, body beautification, mosaic, doodle, adding a border/sticker/marker adding, and blur) indicating picture beautification.

### (6) Picture style migration

By implementing the interaction method provided in embodiments of this application, the electronic device 100 may support the user in performing style migration on the entire picture or a part of the picture. The style migration may be adding a filter effect to the entire picture or a part of the picture to change an original style of the picture.

In a scenario in which style migration is performed on the picture, for a specific process in which the user selects an interaction object and starts a natural language interaction function of the electronic device 100, refer to the foregoing descriptions of FIG. 1A and FIG. 1B. Details are not described herein again.

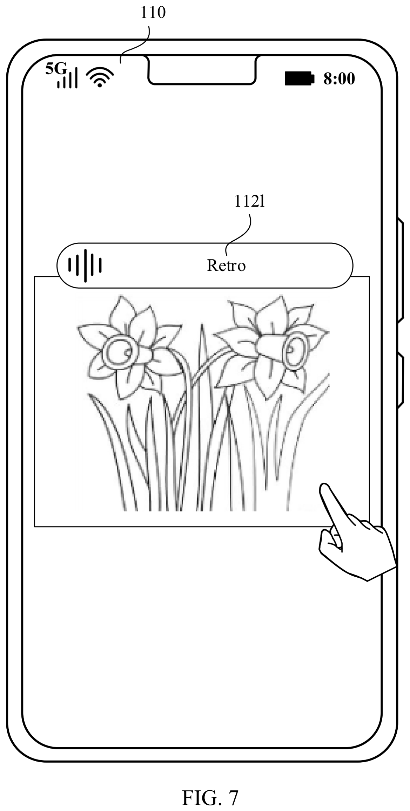

For example, the natural language instruction input by the user is a voice instruction. The electronic device 100 may support the user in enabling the electronic device 100 to perform style migration on the interaction object by using the voice instruction. Refer to FIG. 7. For example, the interaction object is the entire picture. The electronic device 100 may detect a related voice instruction (for example, a voice "Retro") input by the user, and may display the detected and user-input related voice instruction (for example, a text 112l "Retro") in a form of a text.

Further, still refer to FIG. 7. After input of the voice instruction is completed, the electronic device 100 may further analyze the voice instruction, to determine that an operation corresponding to the voice instruction is adding a retro filter to the entire picture.

Further, the electronic device 100 may add the retro filter to the picture by using a related algorithm, and display the retro filter, to implement a retro effect expected by the user.

It is easy to understand that the voice instruction related to the picture style migration needs to meet a specific condition. Under the condition, the electronic device 100 can determine how the user wants to perform style migration on the picture. Meeting the "specific condition" may mean that the voice instruction includes some keywords (for example, keywords such as fresh, romantic, artistic, modern, natural, retro, black and white, Chinese style, Western style, and Japanese style) indicating picture style migration.

In some embodiments, the electronic device 100 may also support the user in adjusting parameters of the picture (for example, adjusting parameters such as brightness, contrast, saturation, and sharpness of the picture). A specific process of parameter adjustment is similar to the foregoing specific process of style migration. Details are not described herein again.

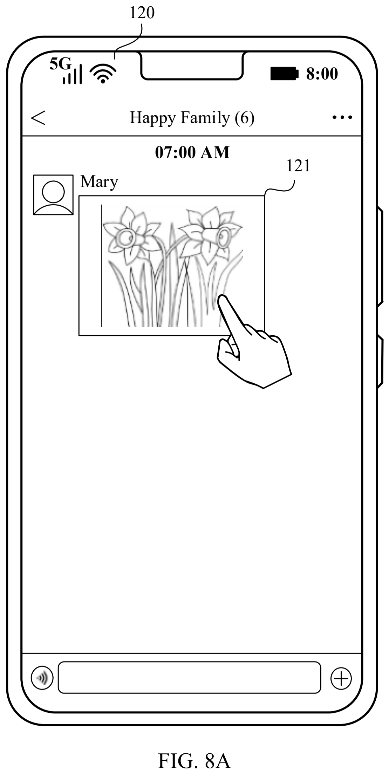

**The foregoing application scenarios in which corresponding operations are performed on the picture** are **described by using the picture on the gallery application as an example. The picture is not limited to the picture on** the **gallery application, and may alternatively be a picture on another application. The following describes a process** of **performing a corresponding operation on a picture by using a picture on a social application as an example with** reference **to** **FIG. 8A to FIG. 8E****.**

In embodiments of this application, the user may trigger, by performing a touch and hold operation (for example, a touch and hold operation performed by using a finger of the user or a touch apparatus) on the picture, the electronic device 100 to display a menu bar corresponding to the picture (namely, an interaction object), and may further trigger the electronic device 100 to start a natural language interaction function.

Refer to FIG. 8A. A user interface 120 shown in FIG. 8A may be a user interface (for example, a user interface corresponding to a chat group named "Happy Family") of a social application (for example, an application MeeTime). The user interface may include one or more chat records (for example, a chat record of a picture 121).

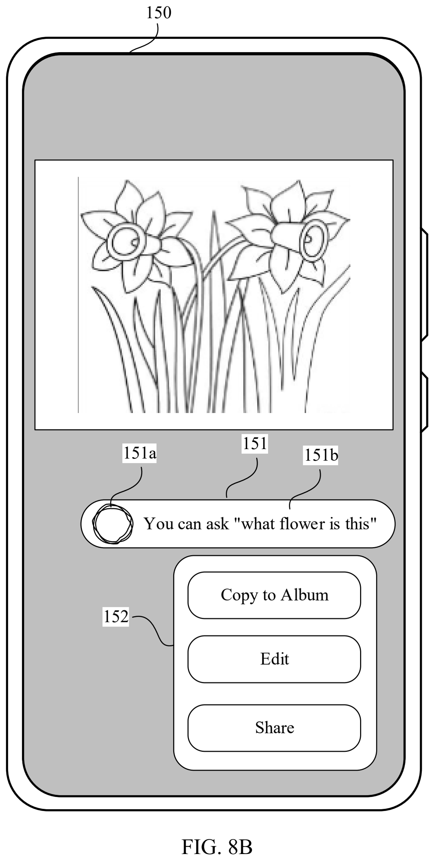

Still refer to FIG. 8A. For example, the electronic device 100 may detect a touch and hold operation performed by the user on the picture 121, and in response to the touch and hold operation, the electronic device 100 may display a user interface 150 shown in FIG. 8B, and starts the natural language interaction function.

Refer to FIG. 8B. The user interface 150 may include a natural language interaction entry 151. The natural language interaction entry 151 may be used to inform the user that the electronic device 100 has started the natural language interaction function, and may be further used for subsequent natural language interaction. The user interface 150 may further include a menu bar 152. The user interface 150 may further include the picture 121 shown in FIG. 8A.

Optionally, an indicator 151a may be displayed on the natural language interaction entry 151, and the indicator 151a may be used to inform the user that the electronic device 100 has started the natural language interaction function.

Optionally, a prompt 151b may be displayed on the natural language interaction entry 151, and the prompt 151b may prompt the user to input a natural language instruction related to an interaction object. For example, as shown in FIG. 8A, an interaction object selected by the user is the picture 121, the electronic device 100 may recognize that the picture 121 includes a flower, and the prompt 151b may be a prompt (for example, You can ask "what flower is this") prompting the user to input a natural language instruction related to the flower. Optionally, the electronic device 100 may also automatically recommend a function based on a recognition type, and display a corresponding function option, for example, "AI object recognition", in the menu bar 152. The user may trigger, by tapping the function option, the electronic device 100 to display a recognition result.

Optionally, the prompt 151b may alternatively be output in a form of voice broadcast.

Still refer to FIG. 8B. The menu bar 152 may include one or more options (for example, a "Copy to Album" option, an "Edit" option, and a "Share" option), and the one or more options may be used to perform a corresponding operation on the picture 121.

All social applications usually support virtual keyboard input. Therefore, in embodiments of this application, the natural language instruction input by the user may be a voice instruction or a text instruction. The voice instruction may be input by the user via a microphone on the electronic device 100, and the text instruction may be input by the user via a virtual keyboard on the electronic device 100.

A triggering manner in which the electronic device 100 detects whether the user inputs a voice instruction or a text instruction is not limited in embodiments of this application.

In some embodiments, a triggering manner in which the electronic device 100 detects that the user inputs a voice instruction may be that the electronic device 100 starts the natural language interaction function (that is, after starting the natural language interaction function, the electronic device 100 starts to detect a voice instruction input by the user). In some other embodiments, a triggering manner in which the electronic device 100 detects that the user inputs a voice instruction may alternatively be that the electronic device 100 detects an operation (for example, a tap operation) performed by the user on the indicator 151a shown in FIG. 8B.

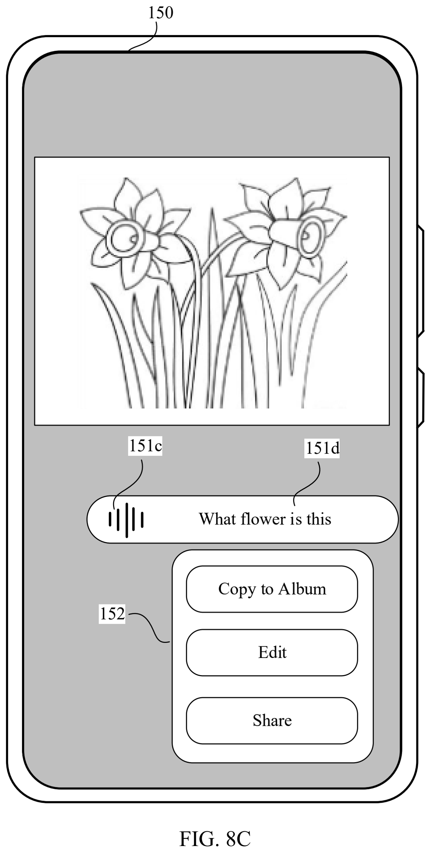

Refer to FIG. 8C. For example, the natural language instruction input by the user is a voice instruction. The electronic device 100 may detect a related voice instruction (for example, a voice "What flower is this") input by the user, and may display the detected and user-input related voice instruction (for example, a text 151d "What flower is this") in a form of a text.

Optionally, after starting to detect the voice instruction input by the user, the electronic device 100 may replace the indicator 151a shown in FIG. 8B with an indicator 151c shown in FIG. 8C. The indicator 151c may be used to inform the user that the electronic device 100 is detecting the voice instruction input by the user.

Optionally, still refer to FIG. 8C. In a process in which the user inputs the voice instruction, the menu bar 152 may be hidden for display.

Further, still refer to FIG. 8C. After input of the voice instruction is completed, the electronic device 100 may further analyze the voice instruction, to determine that an operation corresponding to the voice instruction is recognizing the flower included in the interaction object.

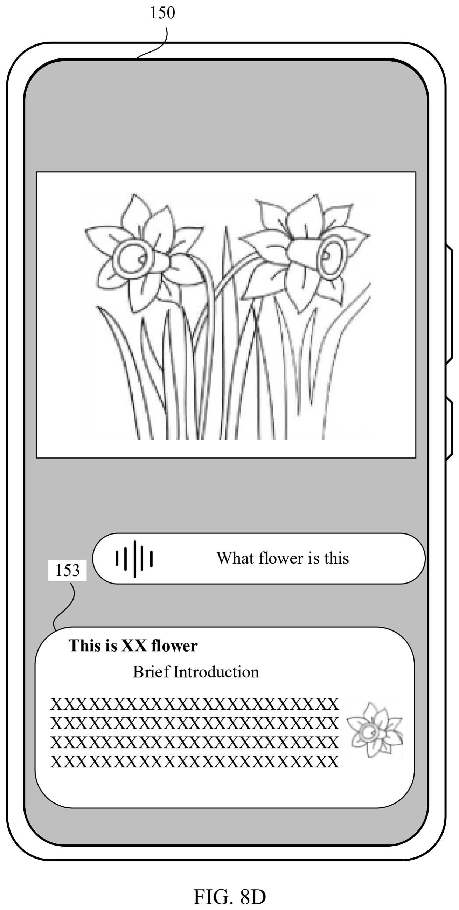

Further, the electronic device 100 may recognize the interaction object by using a related algorithm. After the recognition is completed, as shown in FIG. 8D, the electronic device 100 may display a recognition result 153. The recognition result 153 may include a name (for example, "XX flower") of the flower included in the interaction object, and may further include a brief introduction about the flower. It should be noted that a display style (for example, a widget style or a common text style) and a display location of the recognition result 153 are not limited in embodiments of this application.

In some embodiments, a triggering manner in which the electronic device 100 detects that the user inputs a text instruction may be that the electronic device 100 detects an operation (for example, a tap operation) performed by the user on the indicator 151a shown in FIG. 8B. In some other embodiments, a triggering manner in which the electronic device 100 detects that the user inputs a text instruction may alternatively be that the electronic device 100 detects an operation (for example, a tap operation) performed by the user on any location on the natural language interaction entry 151 shown in FIG. 8B.

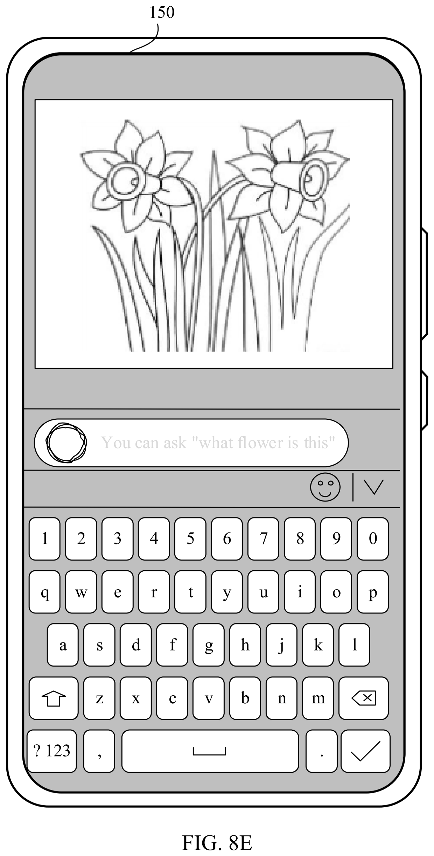

For example, refer to FIG. 8B. If the user wants to input a text instruction via a virtual keyboard, the electronic device 100 may detect an operation (for example, a tap operation) performed by the user on the indicator 151a shown in FIG. 8B. In response to the operation, as shown in FIG. 8E, the electronic device 100 may invoke the virtual keyboard. The user may input the text instruction via the virtual keyboard. After input of the text instruction is completed, the electronic device 100 may analyze the text instruction, and perform an operation corresponding to the text instruction. A specific process is similar to the foregoing process of analyzing and performing the voice instruction. Details are not described herein again.

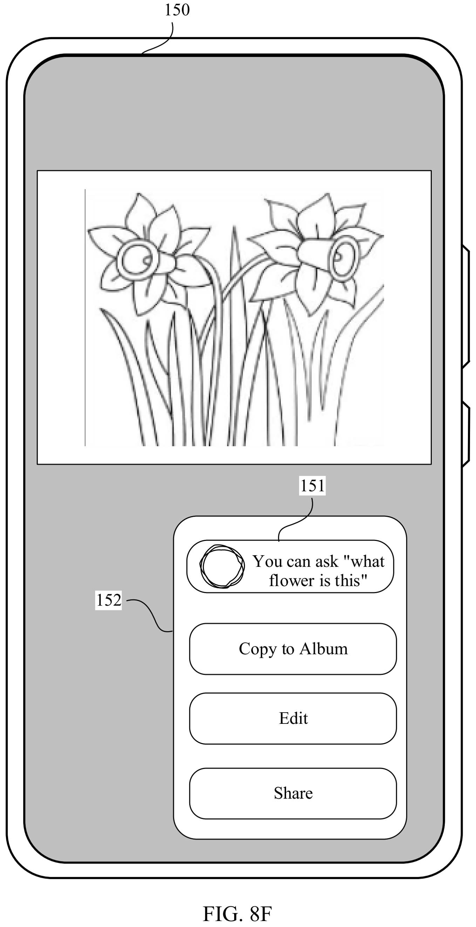

It should be noted that a display style of the natural language interaction entry is not limited in embodiments of this application. A display location of the natural language interaction entry is not limited in embodiments of this application either. For example, the natural language interaction entry may be displayed above or below a menu bar. For another example, the natural language interaction entry may be displayed in the menu bar (for example, as shown in FIG. 8F).

It should be noted that, in the interaction method provided in embodiments of this application, an operation of triggering the electronic device 100 to display the menu bar corresponding to the interaction object (for example, the picture) and an operation of triggering the electronic device 100 to start the natural language interaction function may be the same operation. In embodiments of this application, only an example in which the operation is the touch and hold operation is used. This should not constitute a limitation on this application. In some other embodiments of this application, the operation may be another operation.

It should be noted that, in the interaction method provided in embodiments of this application, whether to trigger the electronic device 100 to start the natural language interaction function after triggering the electronic device 100 to display the menu bar corresponding to the interaction object (for example, the picture) may be autonomously set by the user, or may be set by a system of the electronic device 100 by default. This is not limited in embodiments of this application.

It is easy to understand that, in embodiments of this application, the electronic device 100 may implement a plurality of editing functions (for example, picture content erasing, picture content replacement/insertion/completion, picture content recognition, picture beautification, picture style migration, and picture parameter adjustment) on the picture by using a related image processing algorithm model (for example, DALL-E2 or Midjourey). DALL-E2 is an artificial intelligence image generator based on natural language, can create high-quality images and artworks based on natural language text descriptions, and can implement a plurality of image generation/editing functions such as image patching and image extension. Midjourey is also an artificial intelligence image generator based on natural language, can generate realistic and diversified images based on natural language text descriptions, and can implement functions such as color adjustment, resolution adjustment, size adjustment, and style migration for images.

### 2. Perform a corresponding operation on a video

### (1) Video content sending

By implementing the interaction method provided in embodiments of this application, the electronic device 100 may support the user in sending a video to another electronic device (for example, an electronic device of a friend), another application installed on the electronic device 100, or the like, to implement a quick sharing function of video content.

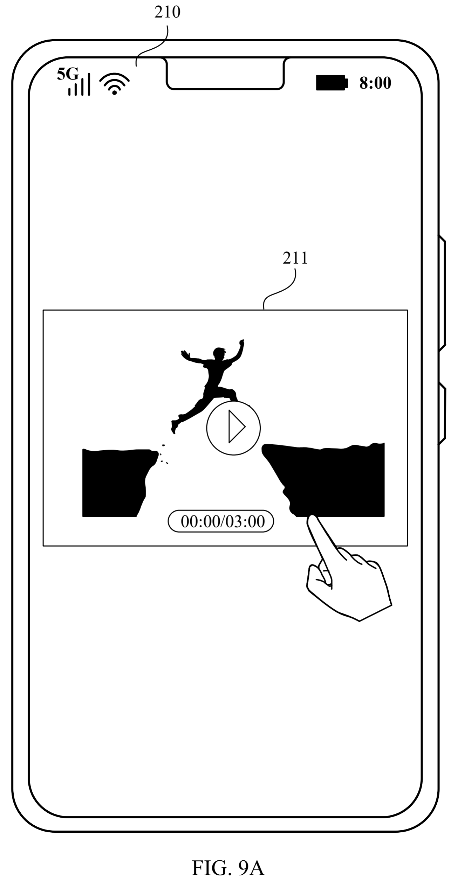

**FIG. 9A to FIG. 9E** **illustrate of a group of user interfaces for implementing a quick sharing function of video** content.

A video in a gallery application is used as an example. Refer to FIG. 9A. A user interface 210 shown in FIG. 9A may be a user interface of the gallery application. The user interface 210 may include a video 211, and the video 211 may be a video before being played by the user.

In embodiments of this application, the user may trigger, by performing a touch and hold operation (for example, a touch and hold operation performed by using a finger of the user or a touch apparatus) on the video, the electronic device 100 to start a natural language interaction function, and may further trigger the electronic device 100 to use the video as an interaction object selected by the user for subsequent natural language interaction.

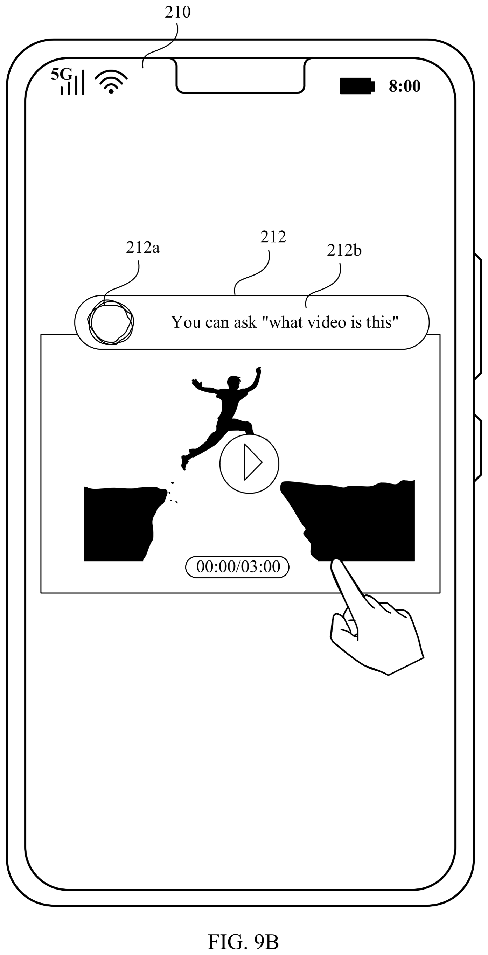

Still refer to FIG. 9A. For example, the electronic device 100 may detect a touch and hold operation performed by the user on the video 211. In response to the touch and hold operation, as shown in FIG. 9B, the electronic device 100 may start the natural language interaction function, and the electronic device 100 may further determine that the interaction object selected by the user is the video 211.

Still refer to FIG. 9B. After starting the natural language interaction function, the electronic device 100 may display a natural language interaction entry 212. The natural language interaction entry 212 may be used to inform the user that the electronic device 100 has started the natural language interaction function, and may be further used for subsequent natural language interaction.

Optionally, an indicator 212a may be displayed on the natural language interaction entry 212, and the indicator 212a may be used to inform the user that the electronic device 100 has started the natural language interaction function.

Optionally, a prompt 212b may be displayed on the natural language interaction entry 212, and the prompt 212b may prompt the user to input a natural language instruction related to the interaction object. For example, as shown in FIG. 9B, the user selects a video as the interaction object, and the prompt 212b may be a prompt (for example, You can ask "what video is this") prompting the user to input a natural language instruction related to the video.

Optionally, the prompt 212b may alternatively be output in a form of voice broadcast.

For an occasion on which the electronic device 100 starts to detect the natural language instruction input by the user and an occasion on which the electronic device 100 ends detecting the natural language instruction input by the user, refer to the related content in the foregoing picture content sending. Details are not described herein again.

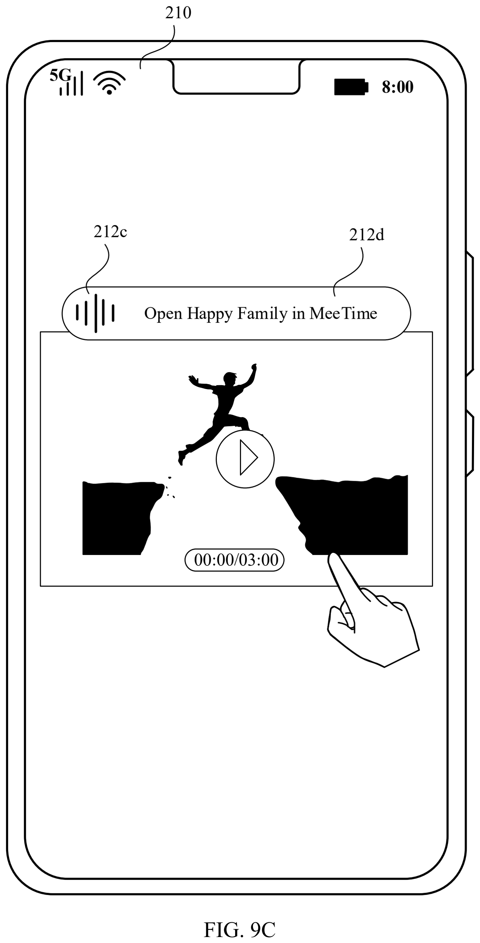

Refer to FIG. 9C. For example, the natural language instruction input by the user is a voice instruction. The electronic device 100 may support the user in sharing the interaction object to an application by using the voice instruction. It is assumed that the user wants to share the interaction object, namely, the video 211 shown in FIG. 9A, to a chat group named "Happy Family" on a social application "MeeTime", so that the electronic device 100 may detect a related voice instruction (for example, a voice "Open Happy Family in MeeTime") input by the user, and may display the detected and user-input related voice instruction (for example, a text 212d "Open Happy Family in MeeTime") in a form of a text.

Optionally, after starting to detect the voice instruction input by the user, the electronic device 100 may replace the indicator 212a shown in FIG. 9B with an indicator 212c shown in FIG. 9C. The indicator 212c may be used to inform the user that the electronic device 100 is detecting the voice instruction input by the user.

Further, still refer to FIG. 9C. After input of the voice instruction is completed, the electronic device 100 may further analyze the voice instruction, to determine that an operation corresponding to the voice instruction is opening the application "MeeTime" and displaying a user interface corresponding to the chat group named "Happy Family".

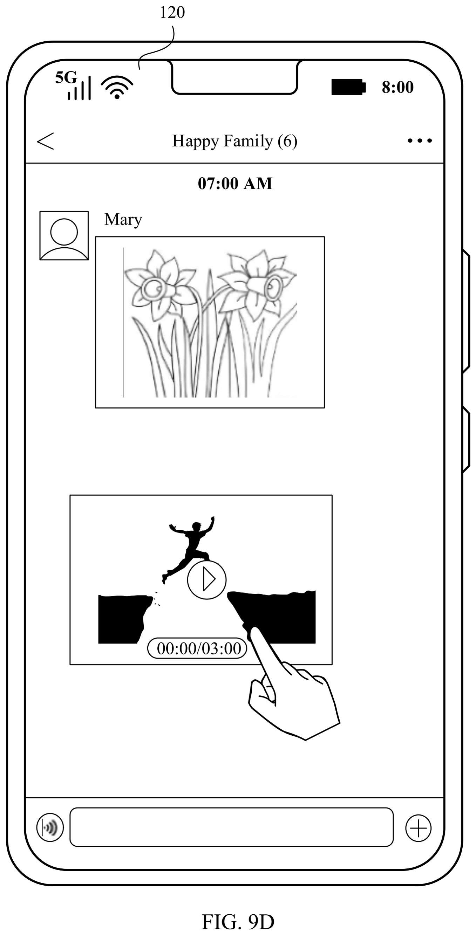

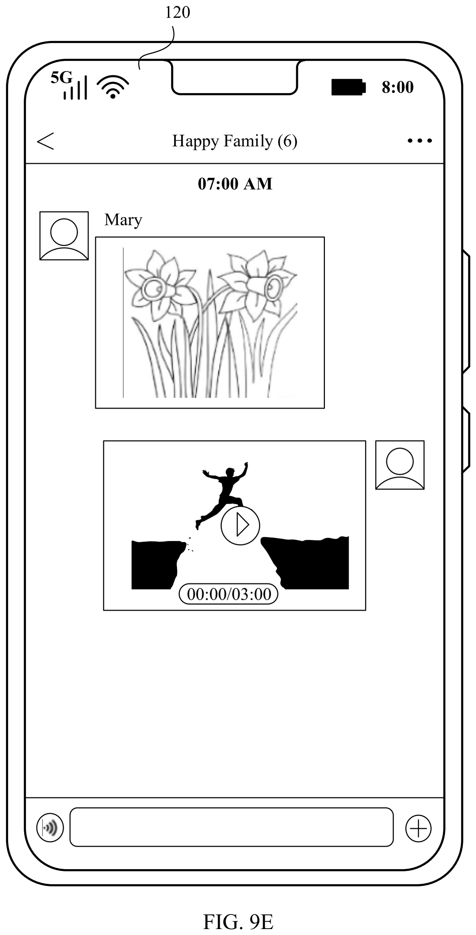

Further, refer to FIG. 9D. For example, the electronic device 100 may display a user interface 120 corresponding to the chat group "Happy Family". The electronic device 100 may support the user in touching and holding and dragging the interaction object, namely, the video 211 shown in FIG. 9A, in the user interface 120. Further, after the electronic device 100 detects an operation of canceling the touching and holding and dragging (for example, an operation of moving a finger of the user or a touch apparatus away from a screen of the electronic device 100) by the user, in response to the operation, as shown in FIG. 9E, the electronic device 100 may send the interaction object, namely, the video 211 shown in FIG. 9A, to the chat group named "Happy Family" in the social application "MeeTime". In this way, the quick sharing function of the video content is implemented.

In this embodiment of this application, in the entire process from FIG. 9A to FIG. 9D, the user may not cancel the touch and hold operation. In some embodiments, before FIG. 9D is displayed, the user may also cancel the touch and hold operation. In this case, the electronic device 100 may not display FIG. 9D, but directly display FIG. 9E, to be specific, directly send the video 211 to the chat group named "Happy Family" in the social application "MeeTime".

It should be noted that the voice instruction "Open MeeTime Happy Family" for implementing the quick sharing function of the video content is merely an example, and should not constitute a limitation on this application. It is easy to understand that the voice instruction for implementing the quick sharing function of the video content needs to meet a specific condition. Under the condition, the electronic device 100 can determine a specific location to which the user wants to share a selected interaction object. Meeting the "specific condition" may mean that the voice instruction includes some keywords indicating a specific location to which the user wants to share the selected interaction object, for example, the keywords are verbs such as "open", "jump to", and "share to", or nouns such as a name of an application, and a name of a contact/chat group.

It is easy to understand that, similar to the foregoing picture content sending, a quick collecting/copying function of the video content may also be implemented by using the interaction method provided in embodiments of this application. For a specific process, refer to the foregoing related content of implementing the quick collecting/copying function of the picture content. Details are not described herein again.

### (2) Video content (for example, a specific clip and a specific image) trimming

By implementing the interaction method provided in embodiments of this application, the electronic device 100 may support the user in trimming the video content (for example, a specific clip), to implement a function of trimming the video content.

Similarly, for example, the interaction object selected by the user is the video 211 shown in FIG. 9A. For a specific process in which the user selects the interaction object and starts the natural language interaction function of the electronic device 100, refer to the foregoing descriptions of FIG. 9A and FIG. 9B. Details are not described herein again.

For example, a natural language instruction input by the user is a voice instruction. The electronic device 100 may support the user in trimming the interaction object, namely, the video 211, by using the voice instruction, to obtain a video clip in the video 211.

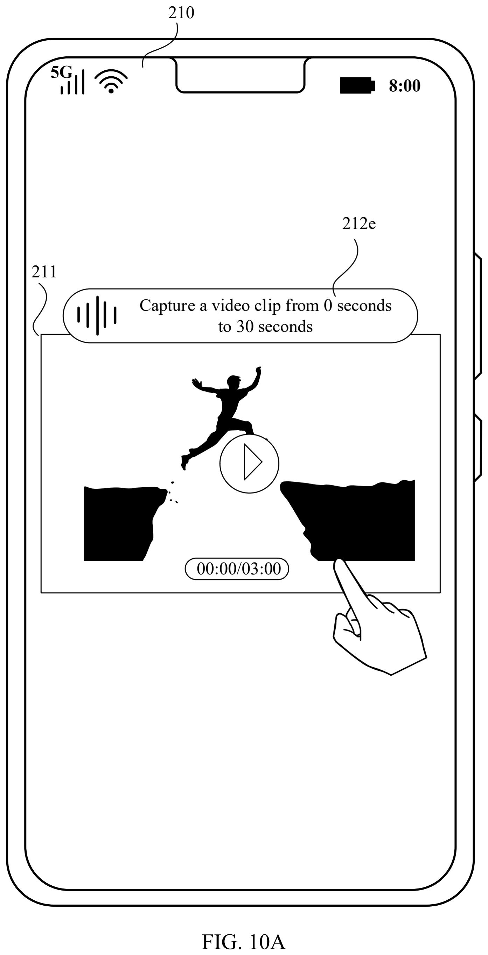

Refer to FIG. 10A. It is assumed that the user wants to obtain a video clip from 0 seconds to 30 seconds in the video 211, so that the electronic device 100 may detect a related voice instruction (for example, a voice "Capture a video clip from 0 seconds to 30 seconds") input by the user, and may display the detected and user-input related voice instruction (for example, a text 212e "Capture a video clip from 0 seconds to 30 seconds") in a form of a text.

Further, still refer to FIG. 10A. After input of the voice instruction is completed, the electronic device 100 may further analyze the voice instruction, to determine that an operation corresponding to the voice instruction is capturing the video clip from 0 seconds to 30 seconds in the video 211.

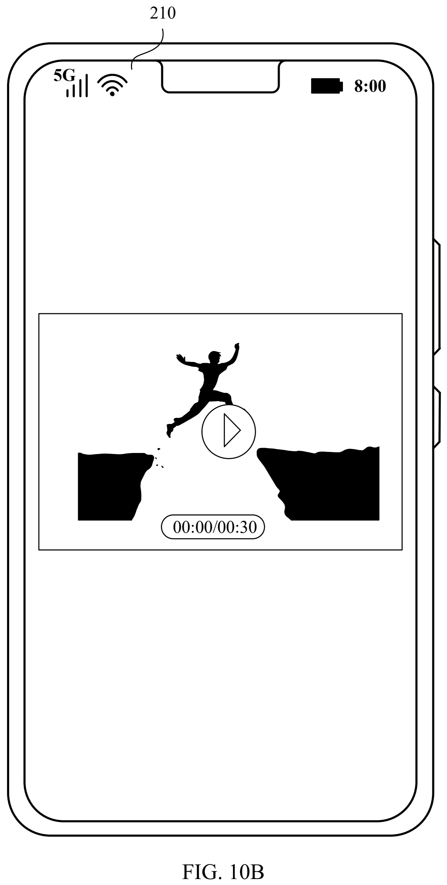

Further, the electronic device 100 may capture the video clip from 0 seconds to 30 seconds in the video 211 by using a related algorithm. After the capturing is completed, as shown in FIG. 10B, the electronic device 100 may further store the captured video clip. In this way, the function of trimming the video content is implemented.

It should be noted that the voice instruction "Capture a video clip from 0 seconds to 30 seconds" for implementing the function of trimming the video content is merely an example, and should not constitute a limitation on this application. It is easy to understand that the voice instruction for implementing the function of trimming the video content needs to meet a specific condition. Under the condition, the electronic device 100 can determine a specific video clip that the user wants to trim/capture in the video. Meeting the "specific condition" may mean that the voice instruction includes some keywords (for example, "trim" or "capture") indicating a trimming action and some keywords indicating a location and duration of a trimmed video clip.

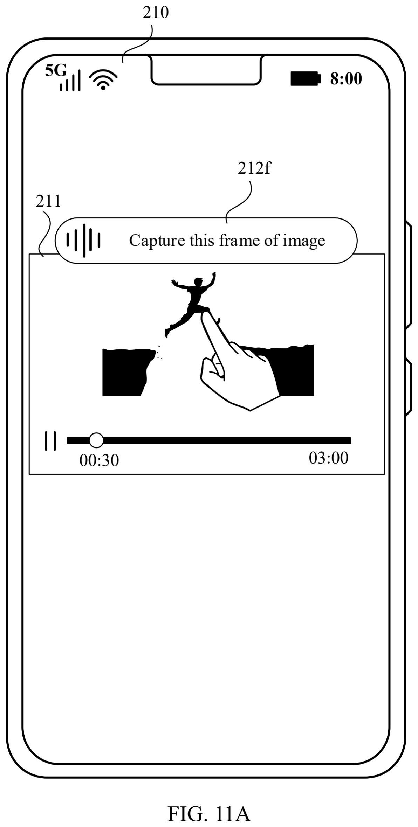

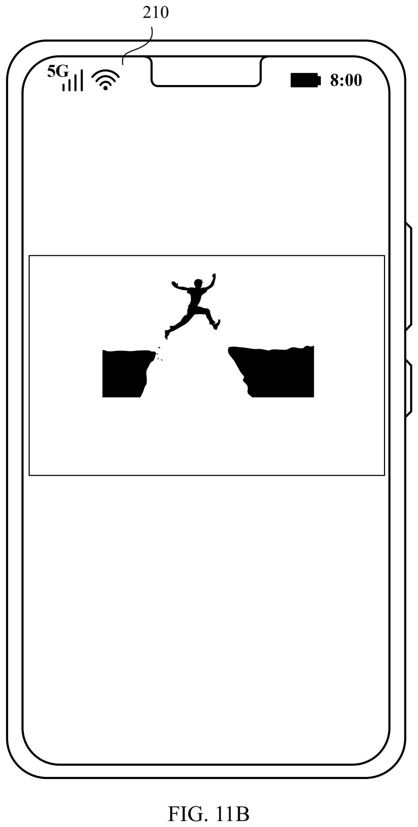

**FIG. 10A** **and** **FIG. 10B** **describe a process of performing trimming to obtain a video clip in a video before being played. For a video being played, the electronic device 100 may also support the user in trimming the video to obtain a video clip in the video. A specific process is similar to the process of performing trimming to obtain the video clip in the video before being played. Details are not described herein again. Herein, for the video being played, the electronic device 100 may further support capturing a video image in the video. The following provides descriptions with reference to** **FIG. 11A** **and** **FIG. 11B****.**

Refer to FIG. 11A. It is assumed that the user wants to capture a frame of image at 00:30 in the video 211, so that the interaction object selected by the user may be the frame of image at 00:30 in the video 211. For a specific process in which the user selects the interaction object and starts a natural language interaction function of the electronic device 100, refer to the foregoing descriptions of FIG. 9A and FIG. 9B. Details are not described herein again. The electronic device 100 may detect a related voice instruction (for example, a voice "Capture this frame of image") input by the user, and may display the detected and user-input related voice instruction (for example, a text 212f "Capture this frame of image") in a form of a text.

Further, still refer to FIG. 11A. After input of the voice instruction is completed, the electronic device 100 may further analyze the voice instruction, to determine that an operation corresponding to the voice instruction is capturing the frame of image at 00:30 in the video 211.

Further, the electronic device 100 may capture the frame of image at 00:30 in the video 211 by using a related algorithm. After the capturing is completed, as shown in FIG. 11B, the electronic device 100 may further store a captured video image.

In some embodiments, when the user performs a touch and hold operation on the video being played, the electronic device 100 may pause playing of the video when detecting the touch and hold operation. A video image displayed when the video is paused may be a video image corresponding to a playing progress bar when the user performs the touch and hold operation.

In some other embodiments, for the video being played, the electronic device 100 may also support the user in capturing a video image at any time point corresponding to the playing progress bar, instead of a video image corresponding to the playing progress bar when the current user performs a touch and hold operation. For example, the voice instruction input by the user indicates the electronic device 100 to capture a video image at a specific time point, and then the electronic device 100 may capture the video image at the specific time point based on the voice instruction.

In some other embodiments, for the video before being played, the electronic device 100 may also support the user in capturing a video image at any time point corresponding to the playing progress bar. For example, after the user performs the touch and hold operation on the video before being played to trigger the electronic device 100 to start the natural language interaction function, the user may input the voice instruction to indicate the electronic device 100 to capture the video image at the specific time point. Further, after detecting the voice instruction, the electronic device 100 may capture the video image at the corresponding time point based on the voice instruction.

It can be understood that the interaction method provided in embodiments of this application may be further used to perform more operations on the picture and the video, and is not limited to the foregoing several illustrated corresponding operations performed on the picture and the video. For example, as long as operations performed on the picture and the video can be implemented by using a method in the conventional technology (for example, more operations performed on the picture and the video are implemented by using a method of tapping a corresponding option in a menu bar and the like), the interaction method provided in embodiments of this application can also be used to implement the operations.

### II. Container application scenario

The "container application scenario" may be an application scenario in which a corresponding operation (for example, an operation of displaying a summary of an unread message or performing question and answer query) is performed on information (for example, a chat message) displayed in a list form by using the interaction method provided in embodiments of this application. Alternatively, the "container application scenario" may be an application scenario in which a corresponding operation (for example, an operation of displaying a summary of a document, displaying a note in a document, full-text translation, question and answer query, format conversion, or format beautification) is performed on information (for example, a document) displayed in a grid form by using the interaction method provided in embodiments of this application.

### 1. Perform a corresponding operation on a chat message (or referred to as a chat record)

### (1) Display of a summary of an unread message

By implementing the interaction method provided in embodiments of this application, the electronic device 100 may support the user in viewing the summary of the unread message. In this way, when there are a plurality of unread messages, the user may quickly obtain main information to be transmitted by the plurality of unread messages by viewing a summary of the unread messages, without viewing the unread messages one by one. This is convenient and quick, simplifies user operations, and improves user experience.

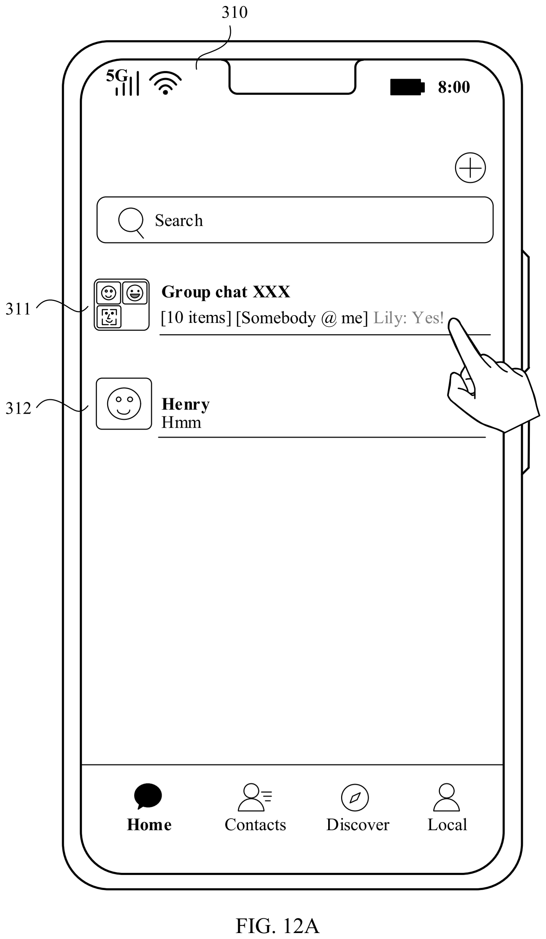

A social application is used as an example. Refer to FIG. 12A. A user interface 310 shown in FIG. 12A may be a user interface of the social application. The user interface 310 may include one or more chat entries (for example, a chat entry 311 and a chat entry 312). The user may tap the chat entry to view one or more chat messages that may be included in the chat entry.

In embodiments of this application, the user may trigger, by performing a touch and hold operation (for example, a touch and hold operation performed by using a finger of the user or a touch apparatus) on the chat entry, the electronic device 100 to start a natural language interaction function, and may further trigger the electronic device 100 to use the chat entry as an interaction object selected by the user for subsequent natural language interaction.

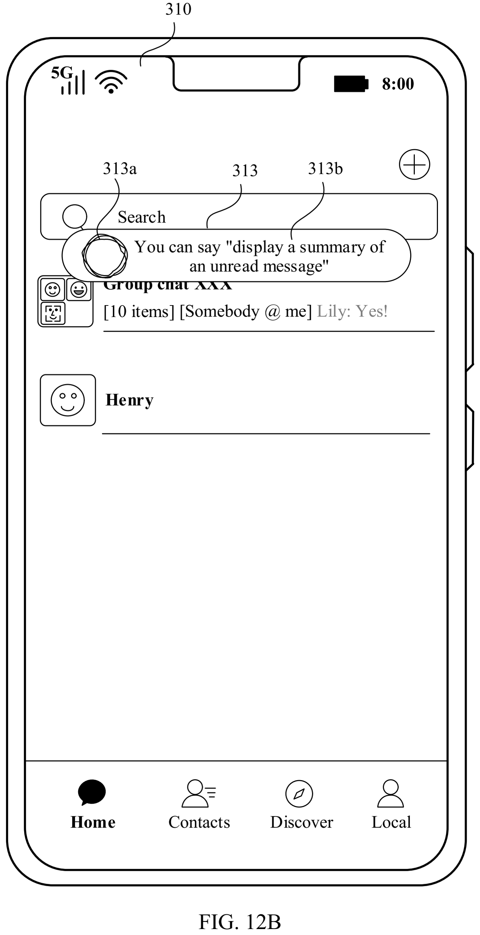

Still refer to FIG. 12A. A group chat message is used as an example. It can be learned that the chat entry 311 is a chat entry corresponding to a group chat XXX, and it can be learned from the chat entry 311 that there are a plurality of unread messages in the group chat XXX. It is assumed that the user wants to quickly learn main information to be transmitted by the plurality of unread messages, so that the electronic device 100 may detect a touch and hold operation performed by the user on the chat entry 311. In response to the touch and hold operation, as shown in FIG. 12B, the electronic device 100 may start the natural language interaction function, and the electronic device 100 may further determine that the interaction object selected by the user is the chat entry 311.

Still refer to FIG. 12B. After starting the natural language interaction function, the electronic device 100 may display a natural language interaction entry 313. The natural language interaction entry 313 may be used to inform the user that the electronic device 100 has started the natural language interaction function, and may be further used for subsequent natural language interaction.

Optionally, an indicator 313a may be displayed on the natural language interaction entry 313, and the indicator 313a may be used to inform the user that the electronic device 100 has started the natural language interaction function.

Optionally, a prompt 313b may be displayed on the natural language interaction entry 313, and the prompt 313b may prompt the user to input a natural language instruction related to the interaction object. For example, as shown in FIG. 12B, the user selects the chat entry 311 as the interaction object, and the prompt 313b may be a prompt (for example, You can say "display a summary of an unread message") prompting the user to input a natural language instruction related to the chat entry.

Optionally, the prompt 313b may alternatively be output in a form of voice broadcast.

For an occasion on which the electronic device 100 starts to detect the natural language instruction input by the user and an occasion on which the electronic device 100 ends detecting the natural language instruction input by the user, refer to the related content in the display application scenario. Details are not described herein again.

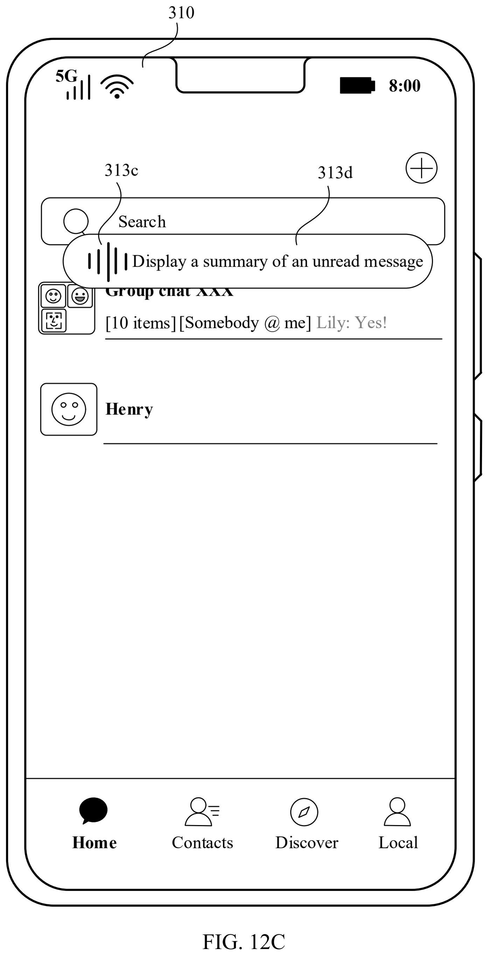

Refer to FIG. 12C. For example, the natural language instruction input by the user is a voice instruction. The electronic device 100 may detect a related voice instruction (for example, a voice "Display a summary of an unread message") input by the user, and may display the detected and user-input related voice instruction (for example, a text 313d "Display a summary of an unread message") in a form of a text.

Optionally, after starting to detect the voice instruction input by the user, the electronic device 100 may replace the indicator 313a shown in FIG. 12B with an indicator 313c shown in FIG. 12C. The indicator 313c may be used to inform the user that the electronic device 100 is detecting the voice instruction input by the user.

Further, still refer to FIG. 12C. After input of the voice instruction is completed, the electronic device 100 may further analyze the voice instruction, to determine that an operation corresponding to the voice instruction is displaying a summary of the unread messages in the chat entry 311.

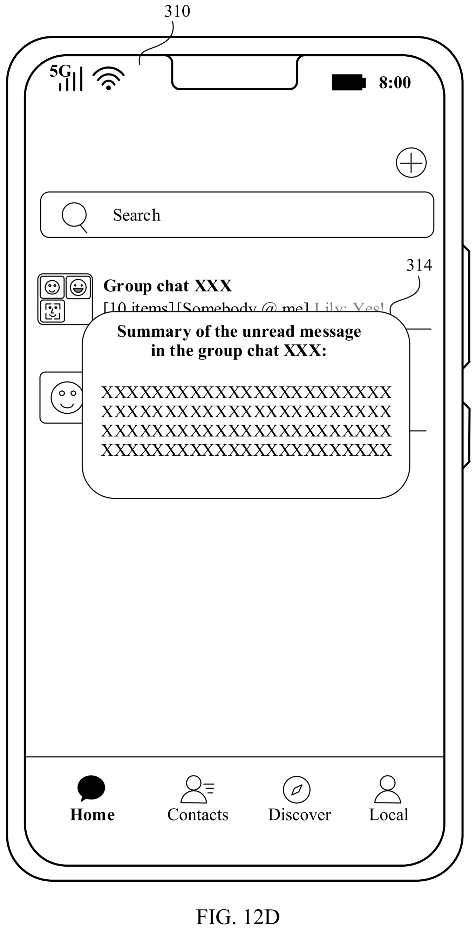

Further, the electronic device 100 may search for the unread messages in the chat entry 311, and generate a summary of the unread messages by using a related algorithm. After generating the summary of the unread messages, as shown in FIG. 12D, the electronic device 100 may display the generated summary 314 of the unread messages. In this way, a function of displaying the summary of the unread message is completed.

It should be noted that a display style (for example, a widget style or a common text style) and a display location of the summary 314 of the unread messages are not limited in embodiments of this application.

It should be noted that the voice instruction "Display a summary of an unread message" for implementing the function of displaying the summary of the unread message is merely an example, and should not constitute a limitation on this application. It is easy to understand that the voice instruction for implementing the function of displaying the summary of the unread message needs to meet a specific condition. Under the condition, the electronic device 100 can determine an intention of the user to view the summary of the unread message. Meeting the "specific condition" may mean that the voice instruction includes some keywords (for example, keywords such as "display", "view", "unread message", "new message", "summary", "outline", "brief description", "brief introduction", and "what") indicating viewing the summary of the unread message.

### (2) Question and answer query

By implementing the interaction method provided in embodiments of this application, the electronic device 100 and the user may perform question and answer query on a chat message (for example, query, in a chat entry, a specific voice/text message sent by a specific contact, or a specific file sent by a specific contact). In this way, the user can quickly obtain specific chat information only on a chat entry display interface (for example, the user interface 310 shown in FIG. 12A), and does not need to start a chat interface corresponding to the chat entry to view the chat information. This is convenient and quick, simplifies user operations, and improves user experience.

Similarly, for example, the interaction object selected by the user is the chat entry 311 shown in FIG. 12A. For a specific process in which the user selects the interaction object and starts the natural language interaction function of the electronic device 100, refer to the foregoing descriptions of FIG. 12A and FIG. 12B. Details are not described herein again.

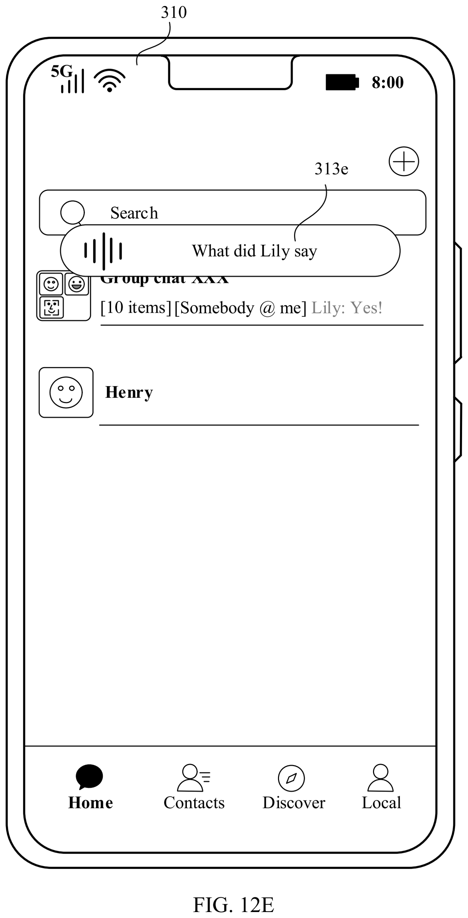

Similarly, for example, the natural language instruction input by the user is a voice instruction. Refer to FIG. 12E. It is assumed that the user wants to know what voice/text message is sent by a group member Lily in the group chat XXX corresponding to the chat entry 311, so that the electronic device 100 may detect a related voice instruction (for example, a voice "What did Lily say") input by the user, and may display the detected and user-input related voice instruction (for example, a text 313e "What did Lily say") in a form of a text.

Further, still refer to FIG. 12E. After input of the voice instruction is completed, the electronic device 100 may further analyze the voice instruction, to determine that an operation corresponding to the voice instruction is displaying what voice/text message is sent by the group member Lily in the group chat XXX corresponding to the chat entry 311.

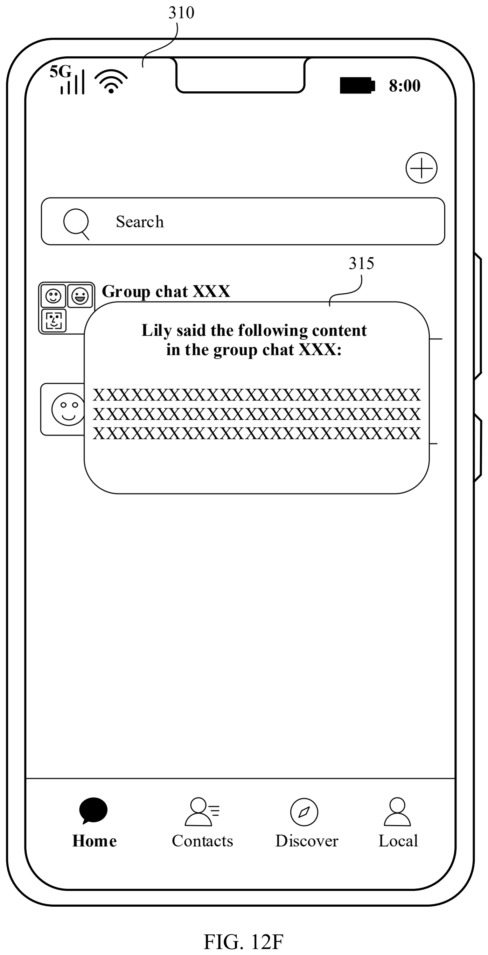

Further, the electronic device 100 may query the voice/text message sent by the group member Lily in the group chat XXX corresponding to the chat entry 311. After the query is completed, as shown in FIG. 12F, the electronic device 100 may display a query result 315. The query result 315 may include the voice/text message that is sent by Lily in the group chat XXX and that is found by the electronic device 100.

It should be noted that the found voice/text message sent by Lily in the group chat XXX may be all voice/text messages that are sent by Lily in the group chat XXX and that are read and unread by the user, or may be only voice/text messages that are sent by Lily in the group chat XXX and that are unread by the user. This is not limited in embodiments of this application.

Optionally, for the found voice message, the electronic device 100 may convert the voice message into a text message and then display the text message in the query result. This helps the user view the text message.

It is easy to understand that, if the user wants to learn other information sent by a contact, for example, a file sent by the contact, the electronic device 100 may display the file sent by the contact in the query result 315.

It should be noted that a display style (for example, a widget style or a common text style) and a display location of the query result 315 are not limited in embodiments of this application.

It should be noted that the voice instruction "What did Lily say" for performing question and answer query on the chat message is merely an example, and should not constitute a limitation on this application. It is easy to understand that the voice instruction for performing question and answer query on the chat message needs to meet a specific condition. Under the condition, the electronic device 100 can determine specific chat information that the user wants to view in the chat message. Meeting the "specific condition" may mean that the voice instruction includes some keywords (for example, keywords such as a nickname of a contact, "say", "ask", "send", "what", and "which") indicating the specific chat information in the chat message.

It should be noted that all social applications usually support virtual keyboard input. Therefore, in embodiments of this application, the natural language instruction input by the user may be a voice instruction or a text instruction. The foregoing merely uses an example in which the user inputs the voice instruction for description. For a specific process in which the user inputs the text instruction, refer to the related content in the display application scenario. Details are not described herein again.

It should be noted that the foregoing merely uses an example in which a corresponding operation is performed on the chat message to describe the interaction method provided in embodiments of this application. This is not limited thereto. The interaction method provided in embodiments of this application may also be used to perform a corresponding operation on another type of message (for example, a push message like an advertisement or news). A specific process is similar to that of performing the corresponding operation on the chat message. Details are not described herein again.

It should be noted that the foregoing corresponding operations performed on the chat message are merely described by using the two operations of displaying the summary of the unread message and performing the question and answer query as an example, and are not limited to the two operations. There may be more operations. This is not limited in embodiments of this application.

### 2. Perform a corresponding operation on a document

### (1) Display of a summary of a document

By implementing the interaction method provided in embodiments of this application, the electronic device 100 may support the user in viewing the summary of the document without opening the document. In this way, when main information of a plurality of documents needs to be obtained, the user can quickly obtain the main information to be transmitted by the documents without opening the documents in sequence. This is convenient, quick, and efficient, simplifies user operations, and improves user experience.

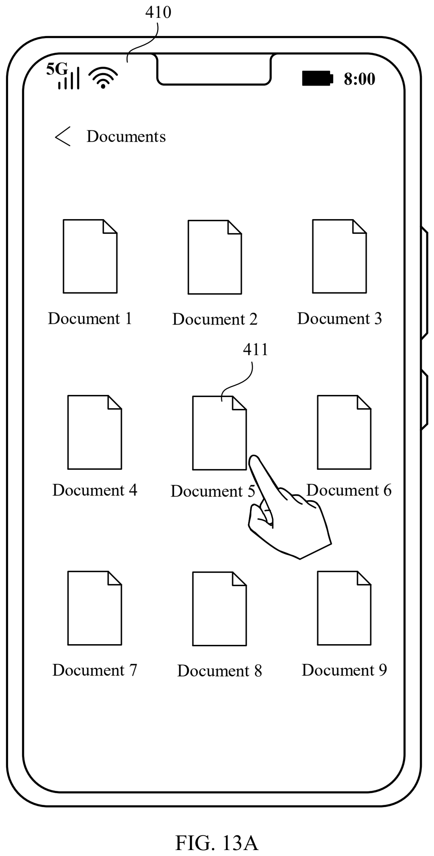

For example, refer to FIG. 13A. A user interface 410 may include icons of one or more documents (for example, an icon 411 of a document 5). The user may tap an icon of a document to open the corresponding document.

In embodiments of this application, the user may trigger, by performing a touch and hold operation (for example, a touch and hold operation performed by using a finger of the user or a touch apparatus) on the icon of the document, the electronic device 100 to start a natural language interaction function, and may further trigger the electronic device 100 to use the icon of the document as an interaction object selected by the user for subsequent natural language interaction.

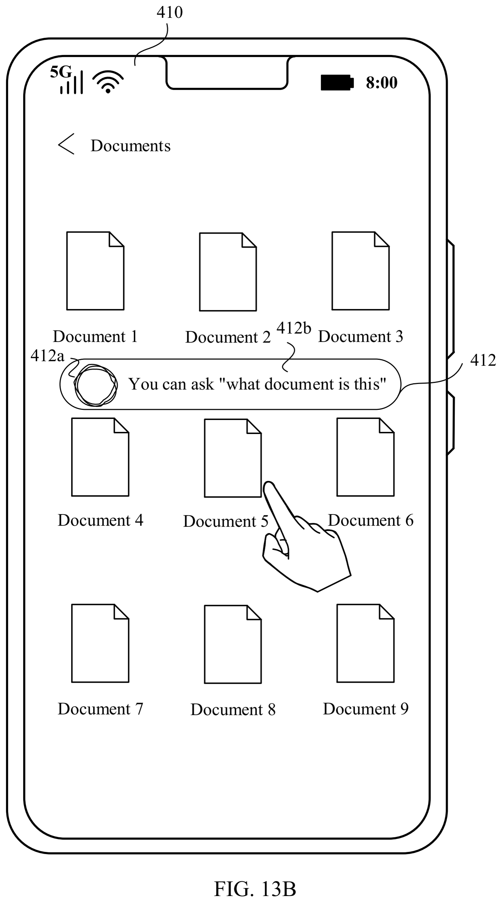

Still refer to FIG. 13A. It is assumed that the user wants to view a summary of the document 5, so that the electronic device 100 may detect a touch and hold operation performed by the user on the icon 411 of the document 5. In response to the touch and hold operation, as shown in FIG. 13B, the electronic device 100 may start the natural language interaction function, and the electronic device 100 may further determine that the interaction object selected by the user is the icon 411 of the document 5.

Still refer to FIG. 13B. After starting the natural language interaction function, the electronic device 100 may display a natural language interaction entry 412. The natural language interaction entry 412 may be used to inform the user that the electronic device 100 has started the natural language interaction function, and may be further used for subsequent natural language interaction.

Optionally, an indicator 412a may be displayed on the natural language interaction entry 412, and the indicator 412a may be used to inform the user that the electronic device 100 has started the natural language interaction function.

Optionally, a prompt 412b may be displayed on the natural language interaction entry 412, and the prompt 412b may prompt the user to input a natural language instruction related to the interaction object. For example, as shown in FIG. 13B, the user selects the icon 411 of the document 5 as the interaction object, and the prompt 412b may be a prompt (for example, You can ask "what document is this") prompting the user to input a natural language instruction related to the document.

Optionally, the prompt 412b may alternatively be output in a form of voice broadcast.

For an occasion on which the electronic device 100 starts to detect the natural language instruction input by the user and an occasion on which the electronic device 100 ends detecting the natural language instruction input by the user, refer to the related content in the display application scenario. Details are not described herein again.

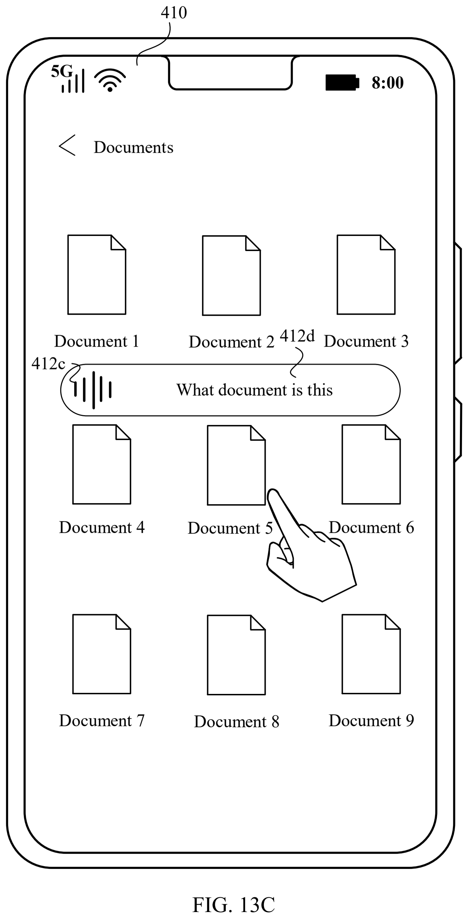

Refer to FIG. 13C. For example, the natural language instruction input by the user is a voice instruction. The electronic device 100 may detect a related voice instruction (for example, a voice "What document is this" or "Display a summary of the document") input by the user, and may display the detected and user-input related voice instruction (for example, a text 412d "What document is this" or "Display a summary of the document") in a form of a text.

Optionally, after starting to detect the voice instruction input by the user, the electronic device 100 may replace the indicator 412a shown in FIG. 13B with an indicator 412c shown in FIG. 13C. The indicator 412c may be used to inform the user that the electronic device 100 is detecting the voice instruction input by the user.

Further, still refer to FIG. 13C. After input of the voice instruction is completed, the electronic device 100 may further analyze the voice instruction, to determine that an operation corresponding to the voice instruction is displaying the summary of the document 5.

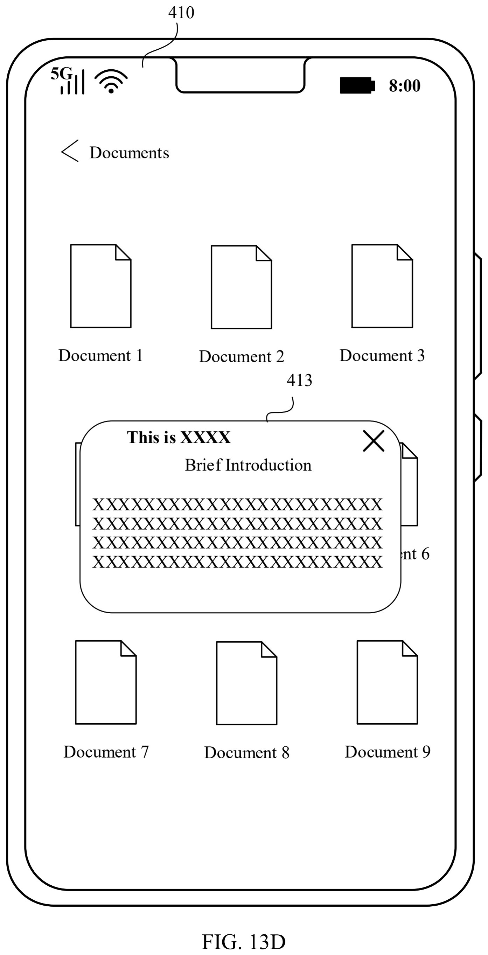

Further, the electronic device 100 may obtain content (for example, a title and a body) of the document 5, and generate the summary of the document 5 by using a related algorithm. After generating the summary of the document 5, as shown in FIG. 13D, the electronic device 100 may display a generated result 413. The result 413 may include the summary of the document 5, and optionally, may further include a title of the document 5. In this way, a function of displaying the summary of the document is completed.

It should be noted that a display style (for example, a widget style or a common text style) and a display location of the result 413 are not limited in embodiments of this application.

It should be noted that the voice instruction "What document is this" for implementing the function of displaying the summary of the document is merely an example, and should not constitute a limitation on this application. It is easy to understand that the voice instruction for implementing the function of displaying the summary of the document needs to meet a specific condition. Under the condition, the electronic device 100 can determine an intention of the user to view the summary of the document. Meeting the "specific condition" may mean that the voice instruction includes some keywords (for example, keywords such as "display", "view", "what document", "summary", "outline", "brief description", and "brief introduction") indicating viewing the summary of the document.

### (2) Display of a note in a document

By implementing the interaction method provided in embodiments of this application, the electronic device 100 may support the user in viewing a note (for example, a mark or a comment) in a document without opening the document. In this way, when there are a plurality of documents, the user can quickly view the note in the document without opening the documents in sequence. This is convenient, quick, efficient, simplifies user operations, and improves user experience.

Similarly, for example, the interaction object selected by the user is the icon 411 of the document 5 shown in FIG. 13A. For a specific process in which the user selects the interaction object and starts the natural language interaction function of the electronic device 100, refer to the foregoing descriptions of FIG. 13A and FIG. 13B. Details are not described herein again.

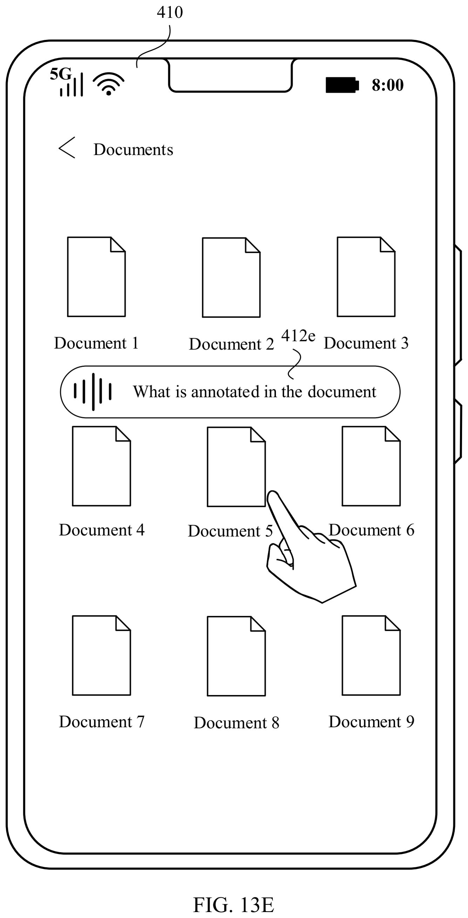

Similarly, for example, a natural language instruction input by the user is a voice instruction. Refer to FIG. 13E. It is assumed that the user wants to view a note in the document 5, so that the electronic device 100 may detect a related voice instruction (for example, a voice "What is annotated in the document") input by the user, and may display the detected and user-input related voice instruction (for example, a text 412e "What is annotated in the document") in a form of a text.

Further, still refer to FIG. 13E. After input of the voice instruction is completed, the electronic device 100 may further analyze the voice instruction, to determine that an operation corresponding to the voice instruction is displaying the note in the document 5.

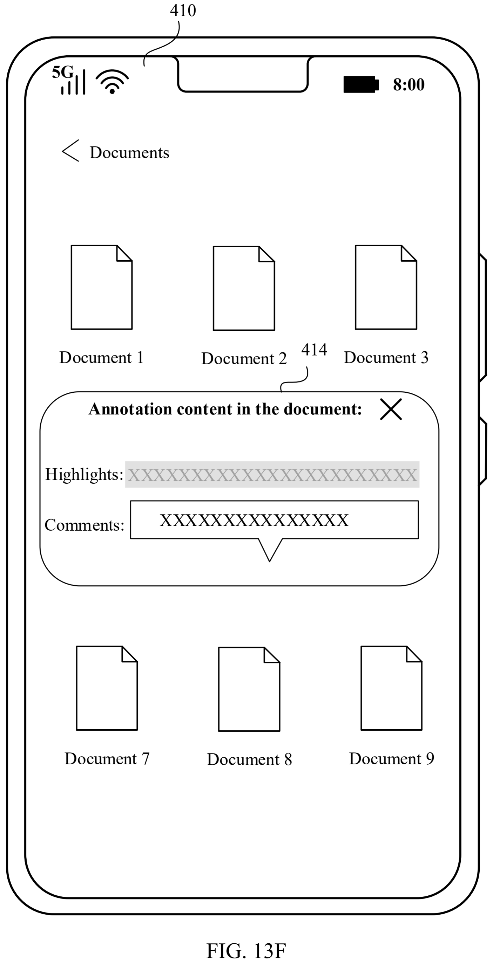

Further, the electronic device 100 may obtain the document 5 and query the note in the document 5. After the query is completed, as shown in FIG. 13F, the electronic device 100 may display a query result 414. The query result 414 may include the found note in the document 5. It can be seen from FIG. 13F that the note in the document 5 includes a highlight mark and a comment. In this way, a function of displaying the note in the document is implemented.

In some embodiments, the electronic device 100 may also store the query result 414. For example, the electronic device 100 may store the query result 414 in Notepad. In this way, the user can conveniently view the query result in real time.

In some embodiments, the electronic device 100 may also support the user in adding a note to the document. For example, the user may input a voice instruction related to adding a note, and the electronic device 100 may add a corresponding note to the document based on the voice instruction.

It should be noted that a display style (for example, a widget style or a common text style) and a display location of the query result 414 are not limited in embodiments of this application.

It should be noted that the voice instruction "What is annotated in the document" for implementing the function of displaying the note in the document is merely an example, and should not constitute a limitation on this application. It is easy to understand that the voice instruction for implementing the function of displaying the note in the document needs to meet a specific condition. Under the condition, the electronic device 100 can determine an intention of the user to view the note in the document. Meeting the "specific condition" may mean that the voice instruction includes some keywords (for example, keywords such as "annotation", "mark", "comment", "what", and "note") indicating viewing the note in the document.

### (3) Document content translation

By implementing the interaction method provided in embodiments of this application, the electronic device 100 may support the user in translating content of a document and viewing translated content without opening the document. In this way, when the user wants to translate the content of the document, translation of the content of the document can be completed without opening the document and manually performing a translation operation by the user. This is convenient, quick, and efficient, simplifies user operations, and improves user experience.

Similarly, for example, the interaction object selected by the user is the icon 411 of the document 5 shown in FIG. 13A. For a specific process in which the user selects the interaction object and starts the natural language interaction function of the electronic device 100, refer to the foregoing descriptions of FIG. 13A and FIG. 13B. Details are not described herein again.

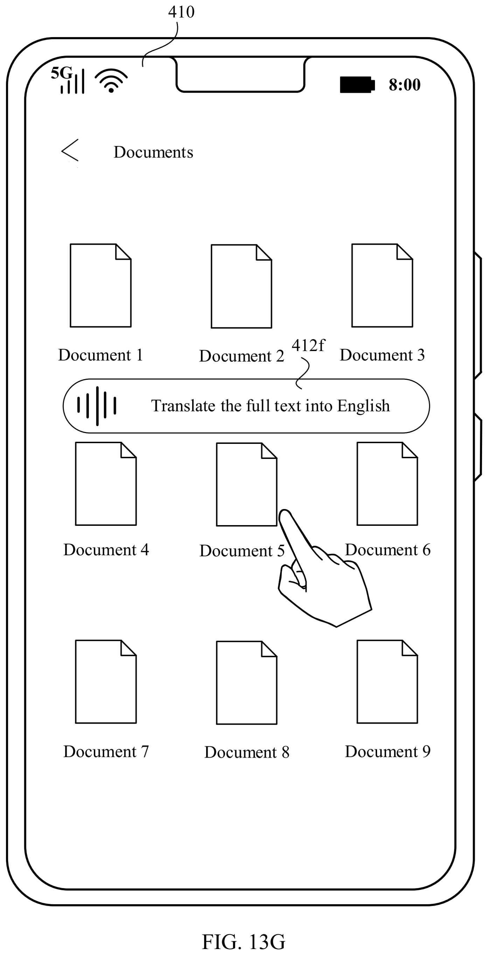

Similarly, for example, a natural language instruction input by the user is a voice instruction. Refer to FIG. 13G. It is assumed that the user wants to translate content of the document 5 into English, so that the electronic device 100 may detect a related voice instruction (for example, a voice "Translate the full text into English") input by the user, and may display the detected and user-input related voice instruction (for example, a text 412f "Translate the full text into English") in a form of a text.

Further, still refer to FIG. 13G. After input of the voice instruction is completed, the electronic device 100 may further analyze the voice instruction, to determine that an operation corresponding to the voice instruction is translating the full text of the document 5 into English, and may display translated full text content of the document 5.

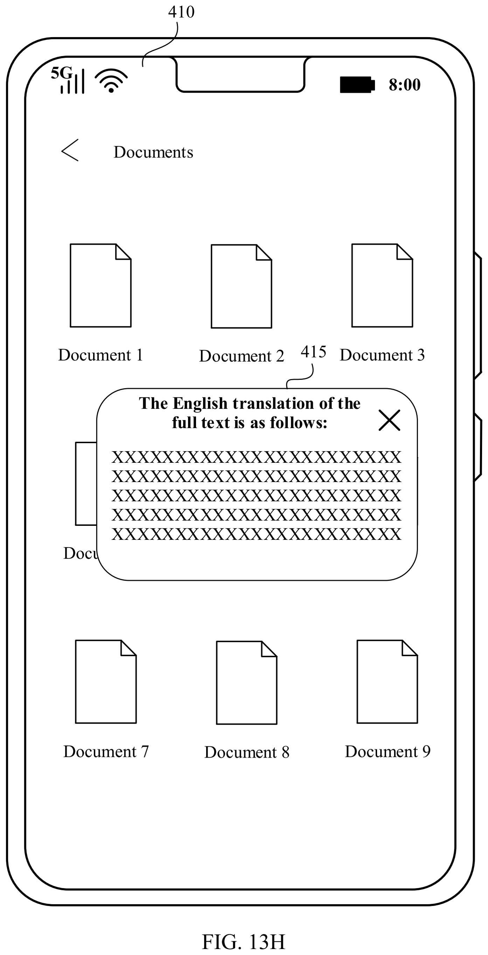

Further, the electronic device 100 may obtain the full text content of the document 5 and translate the full text content into English. After the translation is completed, as shown in FIG. 13H, the electronic device 100 may display a translation result 415. The translation result 415 may include the full text content of the document 5 that is translated into English. In this way, a document content translation function is implemented.

In some embodiments, the electronic device 100 may also save the translation result 415 as a new document. In this way, the user can conveniently view the translation result 415 in real time.

It should be noted that a display style (for example, a widget style or a common text style) and a display location of the translation result 415 are not limited in embodiments of this application.

It should be noted that the voice instruction "Translate the full text into English" for implementing the document content translation function is merely an example, and should not constitute a limitation on this application. It is easy to understand that the voice instruction for implementing the document content translation function needs to meet a specific condition. Under the condition, the electronic device 100 can determine an intention of the user to translate the document content. Meeting the "specific condition" may mean that the voice instruction includes some keywords (for example, a name of language to be translated/converted into, and keywords such as "translate" and "convert") indicating that the full text of the document needs to be translated.

### (4) Document format conversion/beautification

By implementing the interaction method provided in embodiments of this application, the electronic device 100 may support the user in performing format conversion or format beautification (for example, beautifying a document format into a format that is easy for the user to read and that is in a combination of text and figures) on a document without opening the document. This is convenient and quick, simplifies user operations, and improves user experience.

A specific process of performing format conversion or format beautification on the document is similar to the foregoing specific processes of displaying the summary of the document, displaying the note in the document, and translating the document content, and is different only in that the voice instructions input by the user are different. Details are not described herein again.

It is easy to understand that when the user wants to perform format conversion or format beautification on the document, the user may input a voice instruction related to format conversion or format beautification (for example, "convert the document format to the XX format"), and the electronic device 100 may perform format conversion or format beautification on the document based on the voice instruction. After the format conversion or format beautification is completed, the electronic device 100 may display the document obtained after format conversion or format beautification, for the user to view.

### (5) Question and answer query

By implementing the interaction method provided in embodiments of this application, the electronic device 100 and the user may perform question and answer query (for example, query whether a document includes some content) on a document. In this way, the user can quickly obtain related information about the document without opening the document. This is convenient and quick, simplifies user operations, and improves user experience.

A specific process of performing question and answer query on the document is similar to the foregoing specific processes of displaying the summary of the document, displaying the note in the document, and translating the document content, and is different only in that the voice instructions input by the user are different. Details are not described herein again.

It is easy to understand that when the user wants to perform question and answer query on a document, the user may input a voice instruction related to question and answer query (for example, "Does the document include the XXX content"), and the electronic device 100 may obtain a corresponding document based on the voice instruction and query related information of the document indicated by the voice instruction. After the query is completed, the electronic device 100 may display a query result, for the user to view.

It should be noted that, when the application providing the user interface 410 supports virtual keyboard input, the natural language instruction input by the user may be not only a voice instruction, but also a text instruction. The foregoing merely uses an example in which the user inputs the voice instruction for description. For a specific process in which the user inputs the text instruction, refer to the related content in the display application scenario. Details are not described herein again.

It should be noted that the foregoing corresponding operations performed on the document are merely described by using five operations of displaying the summary of the document, displaying the note in the document, translating the document content, performing document format conversion/beautification, and performing question and answer query as an example, and are not limited to the five operations. There may be more operations. This is not limited in embodiments of this application.

### III. Operation application scenario

The "operation application scenario" may be an application scenario in which a corresponding operation (for example, an operation of query, collecting, editing, or summary display) is performed on a text (for example, a common text or a special text like a link, a person name, a number, an email address, a date, or an address) by using the interaction method provided in embodiments of this application.

### 1. Text collection

By implementing the interaction method provided in embodiments of this application, the electronic device 100 may support the user in quickly collecting a selected text or a selected text and context of the selected text, to implement a quick text collection function. This is convenient and quick, simplifies user operations, and improves user experience.

In embodiments of this application, the user may trigger, by performing a touch and hold operation (for example, a touch and hold operation performed by using a finger of the user or a touch apparatus) on the text, the electronic device 100 to select a corresponding text and display a menu bar corresponding to the text, and may further trigger the electronic device 100 to start a natural language interaction function.

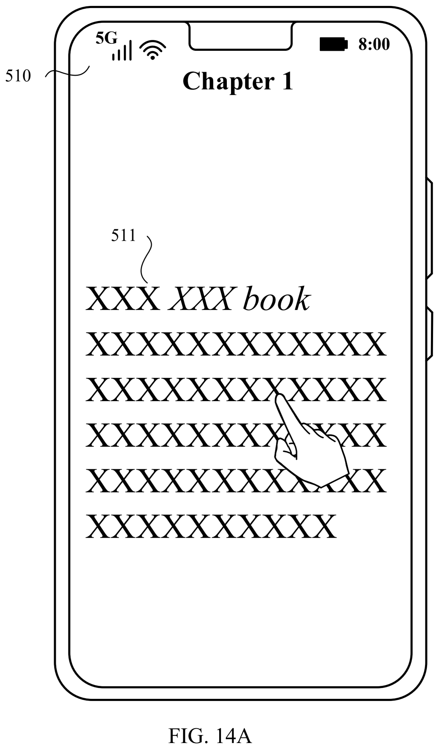

A reading application is used as an example. Refer to FIG. 14A. A user interface 510 shown in FIG. 14A may be a user interface of the reading application. The user interface 510 may include one or more text paragraphs (for example, a text paragraph *511).*

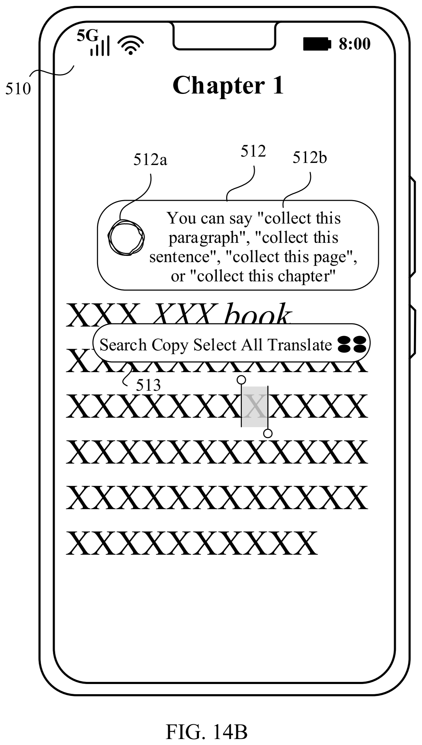

Still refer to FIG. 14A. It is assumed that the user wants to collect a text, so that the electronic device 100 may detect a touch and hold operation performed by the user on a location (for example, a location shown in FIG. 14A) of the text paragraph 511. In response to the touch and hold operation, as shown in FIG. 14B, the electronic device 100 may select a corresponding text (for example, a text "X"), and the electronic device 100 may further display a menu bar 513. The menu bar 513 may include one or more options (for example, a "Search" option, a "Copy" option, a "Select All" option, or a "Translate" option). The one or more options may be used to perform a corresponding operation on the selected text. The electronic device 100 may further start the natural language interaction function.

It should be noted that a range of the text selected by the electronic device 100 may be set according to a preset rule by using the touch and hold operation. For example, the text selected by the electronic device 100 may be only a text at a location of the touch and hold operation, or may be a text of a larger range than the location of the touch and hold operation. This is not limited in embodiments of this application.

Still refer to FIG. 14B. After starting the natural language interaction function, the electronic device 100 may display a natural language interaction entry 512. The natural language interaction entry 512 may be used to inform the user that the electronic device 100 has started the natural language interaction function, and may be further used for subsequent natural language interaction.

Optionally, an indicator 512a may be displayed on the natural language interaction entry 512, and the indicator 512a may be used to inform the user that the electronic device 100 has started the natural language interaction function.

Optionally, a prompt 512b may be displayed on the natural language interaction entry 512. The prompt 512b may prompt the user to input a natural language instruction related to an interaction object (for example, the selected text or the selected text and the context of the selected text). For example, the prompt 512b (for example, You can say "collect this paragraph", "collect this sentence", "collect this page", or "collect this chapter") is shown in FIG. 14B.

Optionally, the prompt 512b may alternatively be output in a form of voice broadcast.

For an occasion on which the electronic device 100 starts to detect the natural language instruction input by the user and an occasion on which the electronic device 100 ends detecting the natural language instruction input by the user, refer to the related content in the display application scenario. Details are not described herein again.

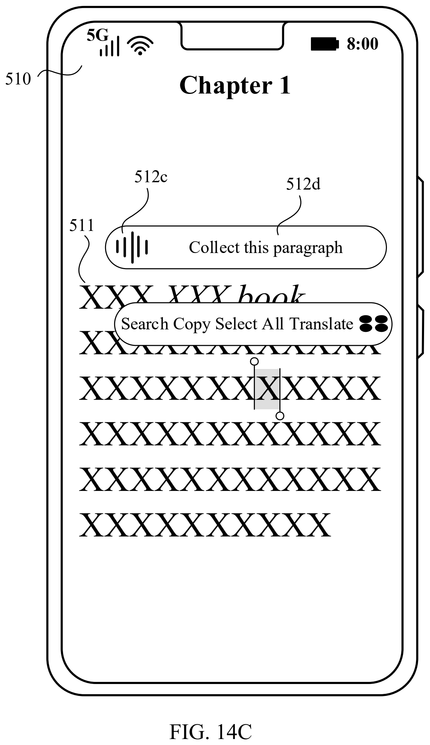

Refer to FIG. 14C. For example, the natural language instruction input by the user is a voice instruction. It is assumed that the user wants to collect the text paragraph 511, so that the electronic device 100 may detect a related voice instruction (for example, a voice "Collect this paragraph") input by the user, and may display the detected and user-input related voice instruction (for example, a text 512d "Collect this paragraph") in a form of a text.

Optionally, after starting to detect the voice instruction input by the user, the electronic device 100 may replace the indicator 512a shown in FIG. 14B with an indicator 512c shown in FIG. 14C. The indicator 512c may be used to inform the user that the electronic device 100 is detecting the voice instruction input by the user.

Further, still refer to FIG. 14C. After input of the voice instruction is completed, the electronic device 100 may further analyze the voice instruction, to determine that an operation corresponding to the voice instruction is collecting a paragraph (namely, the text paragraph 511) in which the selected text is located.

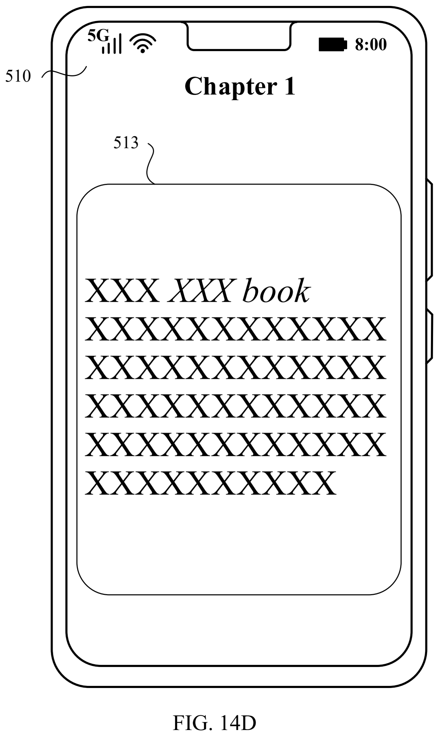

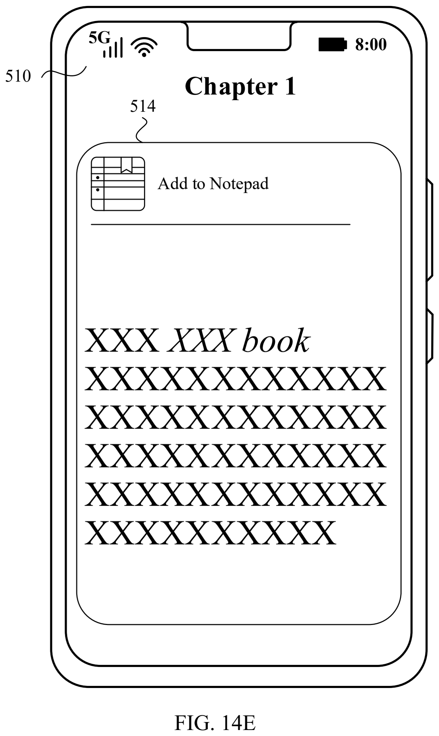

Further, the electronic device 100 may obtain, by using a related text detection and recognition algorithm, the paragraph (namely, the text paragraph 511) in which the selected text is located. After the obtaining is completed, as shown in FIG. 14D, the electronic device 100 may display a window 513. The window 513 may include the obtained to-be-collected text paragraph (namely, the text paragraph 511). Further, the electronic device 100 may collect the obtained to-be-collected text paragraph. Refer to FIG. 14E. The electronic device 100 may further display a window 514. The window 514 may include indication information (for example, "Add to Notepad") of a collection path and the obtained to-be-collected text paragraph. In this way, the text collection function is completed.

It is easy to understand that the collection path may be preset in a system of the electronic device 100, or may be autonomously set by the use. This is not limited in embodiments of this application.

In some embodiments, the window 513 and the window 514 may not be displayed.

It is easy to understand that there may be one or more text detection and recognition algorithms. A specific type of the algorithm is not limited in embodiments of this application. For example, the text detection and recognition algorithm may be an optical character recognition (optical character recognition, OCR) algorithm. In embodiments of this application, the electronic device 100 may preferentially select a text currently selected by the user as the interaction object. Further, a range of the interaction object may be extended with reference to semantics of a user instruction (for example, if the text selected by the user is only a part of text in a text paragraph, and semantics of the user instruction is a full text paragraph, the interaction object may be extended from the foregoing part of text to the full text paragraph). To be specific, if the electronic device 100 determines, based on the user instruction and the text currently selected by the user, that the interaction object is only the selected text, the electronic device 100 may perform an operation corresponding to the instruction on the selected text. If the electronic device 100 determines, based on the user instruction and the text currently selected by the user, that the interaction object includes not only the text currently selected by the user, but also context of the text currently selected by the user, the electronic device 100 may detect and recognize the context of the selected text. For example, the interaction object is a full text paragraph in which the text currently selected by the user is located. In this case, the electronic device 100 may use a paragraph recognition rule (for example, a blank line/paragraph identifier of the text, an alignment manner of the text, a specific recognition word, and a font style) in the OCR algorithm to determine the above text paragraph. It is easy to understand that the foregoing merely uses recognition of a paragraph of text as an example for description. Recognition of a sentence of text, a page of text, a chapter of text, and the like is similar to the foregoing recognition of a paragraph of text. Details are not described herein again.

It should be noted that the voice instruction "Collect this segment" for implementing the text collection function is merely an example, and should not constitute a limitation on this application. It is easy to understand that the voice instruction for implementing the text collection function needs to meet a specific condition. Under the condition, the electronic device 100 can determine an intention of the user to collect the text. Meeting the "specific condition" may mean that the voice instruction includes some keywords (for example, keywords such as "collect", "this segment", "this sentence", "this page", "this chapter", and "this article") indicating text collection.

### 2. Text query

By implementing the interaction method provided in embodiments of this application, the electronic device 100 may support the user in quickly querying information related to a selected text, to implement a quick text query function. This is convenient and quick, simplifies user operations, and improves user experience.

For a specific process in which the user selects the text and starts a natural language interaction function of the electronic device 100 and that is similar to the foregoing text collection, refer to the foregoing descriptions of FIG. 14A and FIG. 14B. Details are not described herein again.

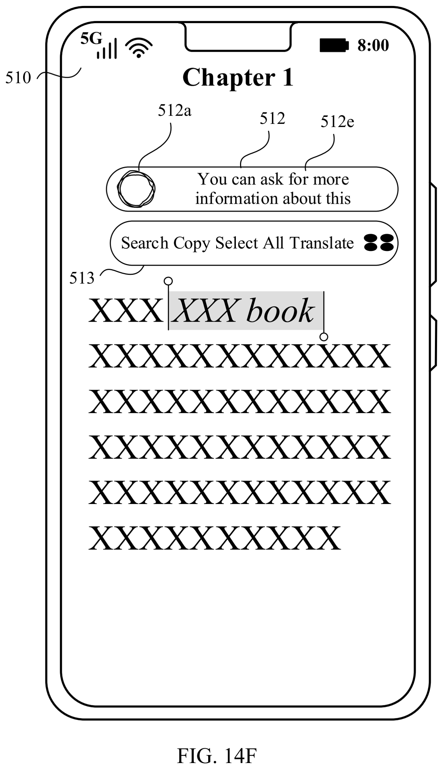

Refer to FIG. 14F. It is assumed that the text selected by the user is "XXX book", so that the electronic device 100 may recognize that the text is a name of a book. Therefore, after the electronic device 100 starts the natural language interaction function, optionally, the electronic device 100 may display a prompt 512e (for example, "You can ask for more information about this") on the natural language interaction entry 512. The prompt 512e may prompt the user to input a natural language instruction related to the selected text.

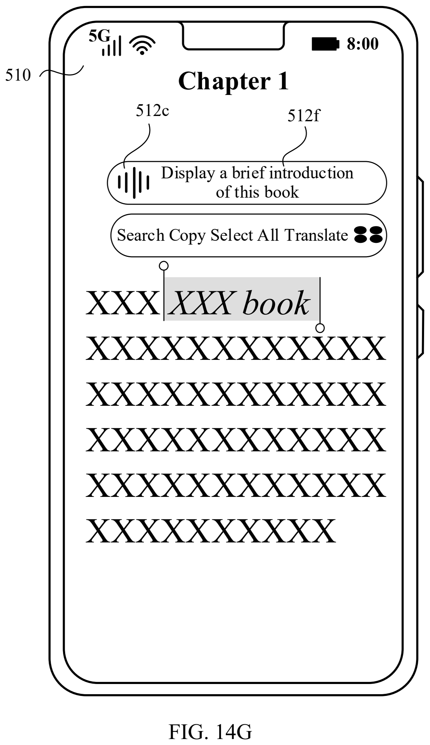

Similarly, for example, the natural language instruction input by the user is a voice instruction. Refer to FIG. 14G. It is assumed that the user wants to learn about a brief introduction of the selected text "XXX book", so that the electronic device 100 may detect a related voice instruction (for example, a voice "Display a brief introduction of this book") input by the user, and may display the detected and user-input related voice instruction (for example, a text 512f "Display a brief introduction of this book") in a form of a text.

Further, still refer to FIG. 14G. After input of the voice instruction is completed, the electronic device 100 may further analyze the voice instruction, to determine that an operation corresponding to the voice instruction is displaying the brief introduction of the book corresponding to the selected text *"XXX book"* of the user.

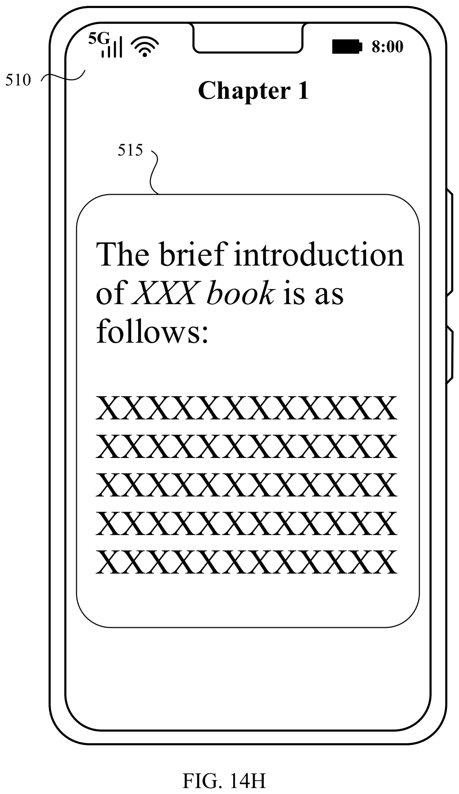

Further, the electronic device 100 may query, locally or on a cloud, the brief introduction of the book corresponding to the selected text *"XXX book"* of the user. After the query is completed, as shown in FIG. 14H, the electronic device 100 may display a query result 515. The query result 515 may include the brief introduction of the book corresponding to the selected text *"XXX book"* of the user. In this way, the text query function is implemented.

It should be noted that a display style (for example, a widget style or a common text style) and a display location of the query result 515 are not limited in embodiments of this application.

It should be noted that the foregoing merely uses an example in which the text selected by the user is a text related to a book name to describe the text query function. This is not limited thereto. The text selected by the user may be another text (for example, a text related to an audio/video name, an article name, a game name, an application name, or the like). This is not limited in embodiments of this application.

It should be noted that the foregoing merely uses a reading application as an example to describe the text collection function and the text query function. This is not limited thereto. The text collection function and the text query function may be performed on another application that can support text display and text selection. This is not limited in embodiments of this application.

It should be noted that the foregoing merely uses the common text as an example to describe a process of performing a corresponding operation on a text by using the interaction method provided in embodiments of this application. The interaction method provided in embodiments of this application is not limited to the common text, and is also applicable to performing a related operation on the special text (for example, a special text like a link, a person name, a number, an email address, a date, or an address). For example, for the link, a summary of specific content corresponding to the link may be displayed by selecting the link and inputting a related natural language instruction. For another example, for the person name/number (for example, a mobile phone number or a personal account), social communication (for example, collecting the person name/number, adding the person name/number to a contact in an address book, or the like), order tracking, or the like may be performed by selecting the person name/number and inputting a related natural language instruction. For another example, for the email address, an email may be sent by selecting the email address and inputting a related natural language instruction. For another example, for the date, a reminder/alarm may be set by selecting the date and inputting a related natural language instruction. For another example, for the address, navigation/tickets/weather information or the like corresponding to the address may be queried by selecting the address and inputting a related natural language instruction. It is easy to understand that, similar to the foregoing scenario in which the corresponding operation is performed on the common text, in a scenario in which a corresponding operation is performed on the special text, the electronic device 100 may also display a prompt related to the special text, for example, the prompt 512b or the prompt 512e.

It should be noted that, when the application providing the user interface 510 supports virtual keyboard input, the natural language instruction input by the user may be not only a voice instruction, but also a text instruction. The foregoing merely uses an example in which the user inputs the voice instruction for description. For a specific process in which the user inputs the text instruction, refer to the related content in the display application scenario. Details are not described herein again.

### 3. Text editing

### (1) Text content modification (for example, content insertion, deletion, and replacement)

To implement text content modification by using a natural language interaction function, currently, the user needs to input a natural language instruction that can accurately express a modification intention of the user and a modification text. Usually, the instruction needs to include a text that needs to be modified, a modification manner, and a target text after modification. For example, a text before modification is "I am in Beijing today", and a text after modification is "I am in Shanghai today". In this case, the natural language instruction input by the user may be, for example, "Change Beijing to Shanghai". It can be seen that the instruction includes "Beijing" that is the text that needs to be modified, "change to" that is a keyword for describing the modification manner, and "Shanghai" that is the target text after modification. In other words, the text content modification can be completed only by inputting the foregoing complex and cumbersome instruction.

By implementing the interaction method provided in embodiments of this application, the electronic device 100 may support that an instruction input by the user includes only the target text after modification. The electronic device 100 may automatically generate one or more semantically smooth modification results based on the instruction and the text before modification, to implement the text content modification in a simple and natural manner. This is convenient and quick, and improves user experience. The following provides a specific description with reference to a diagram of a user interface.

For text content modification, common modification requirements include the following three types, which are described below in sequence.

### 1) Iterative optimization of an expression manner (for example, the text before modification is "I want to make a plan", and the text after modification is "I want to make a systematic fitness plan")

In embodiments of this application, the user may trigger, by performing a touch and hold operation (for example, a touch and hold operation performed by using a finger of the user or a touch apparatus) on the text that needs to be modified, the electronic device 100 to select a corresponding text, and may further trigger the electronic device 100 to start a natural language interaction function.

For a specific process in which the user selects the text that needs to be modified and starts the natural language interaction function of the electronic device 100, and that is similar to the foregoing text collection, refer to the foregoing descriptions of FIG. 14A and FIG. 14B. Details are not described herein again.

For the modification requirement of "iterative optimization of an expression manner", one or more semantically smooth modification results may be generated in a modification process. The following separately describes the modification results in detail.

### a. Generate a plurality of semantically smooth modification results

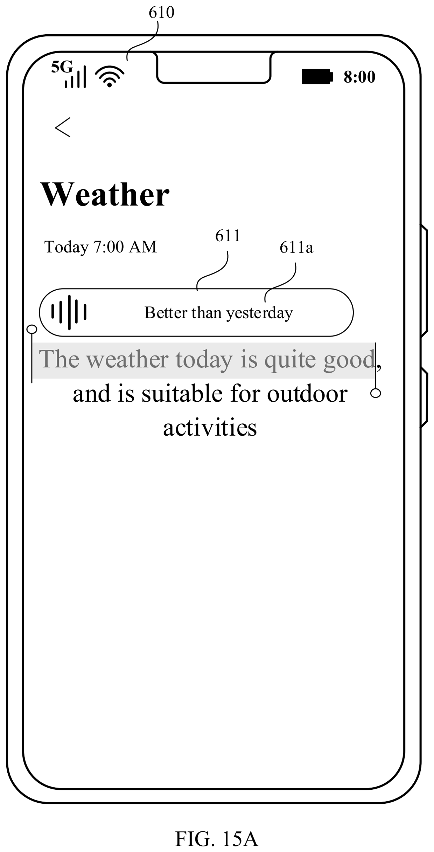

An application (for example, a Notepad application) that can support text content modification is used as an example. Refer to FIG. 15A. A user interface 610 may be a user interface of the application. The user interface 610 may include the text that needs to be modified (for example, a text "The weather today is quite good, and is suitable for outdoor activities"), and may further include a natural language interaction entry 611, to inform the user that the electronic device 100 has started the natural language interaction function.

The text that the user selects and that needs to be modified may include only a text of a to-be-modified part (for example, a text "The weather today is quite good"), or may include both a text of a to-be-modified part (for example, a text "The weather today is quite good") and context of the text of the to-be-modified part (for example, a text "and is suitable for outdoor activities"). This is not limited in embodiments of this application.

Still refer to FIG. 15A. For example, the natural language instruction input by the user is a voice instruction. It is assumed that the user wants to add, to the text that needs to be modified, related text content used to express "The weather today is better than yesterday", so that the electronic device 100 may detect a related voice instruction (for example, a voice "Better than yesterday") input by the user, and may display the detected and user-input related voice instruction (for example, a text 611a "Better than yesterday") in a form of a text.

Further, still refer to FIG. 15A. For example, the text that the user selects and that needs to be modified is "The weather today is quite good". After input of the voice instruction is completed, the electronic device 100 may analyze the voice instruction (for example, the voice "better than yesterday") based on the text that the user selects and that needs to be modified, to determine that an operation corresponding to the voice instruction is adding the text "better than yesterday" to the text "The weather today is quite good" that the user selects and that needs to be modified, to generate a semantically smooth modification result.

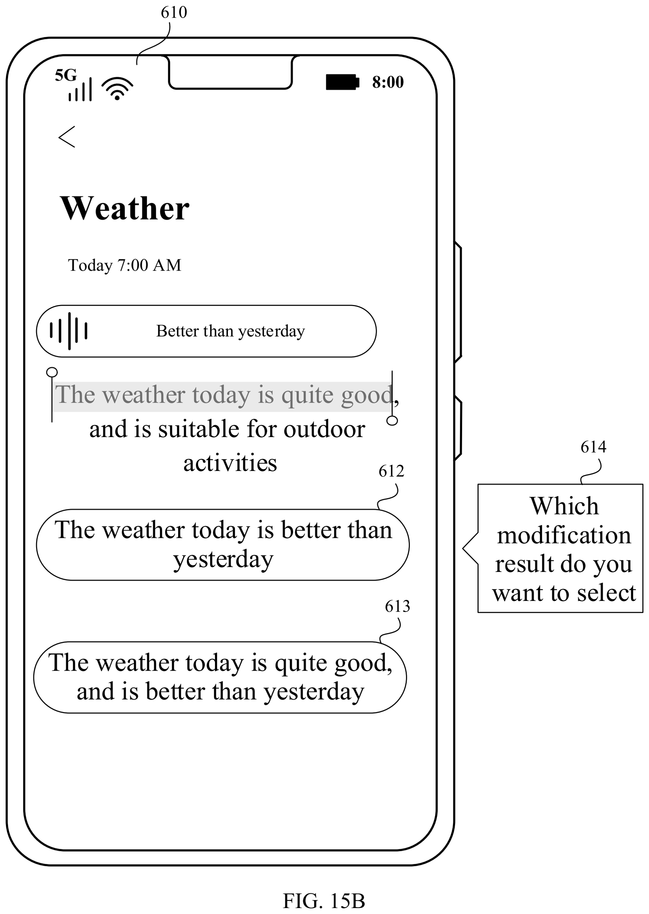

Further, the electronic device 100 may generate the semantically smooth modification result by using a related algorithm. After the modification result is generated, as shown in FIG. 15B, the electronic device 100 may generate and display a plurality of semantically smooth modification results, for example, a modification result 612 "The weather today is better than yesterday" and a modification result 613 "The weather today is quite good, and is better than yesterday". In this case, the electronic device 100 may support the user in selecting one of the modification results.

Optionally, the electronic device 100 may prompt, in a voice broadcast or text prompt manner (for example, by using a prompt 614 "Which modification result do you want to select"), the user to select one of the modification results.

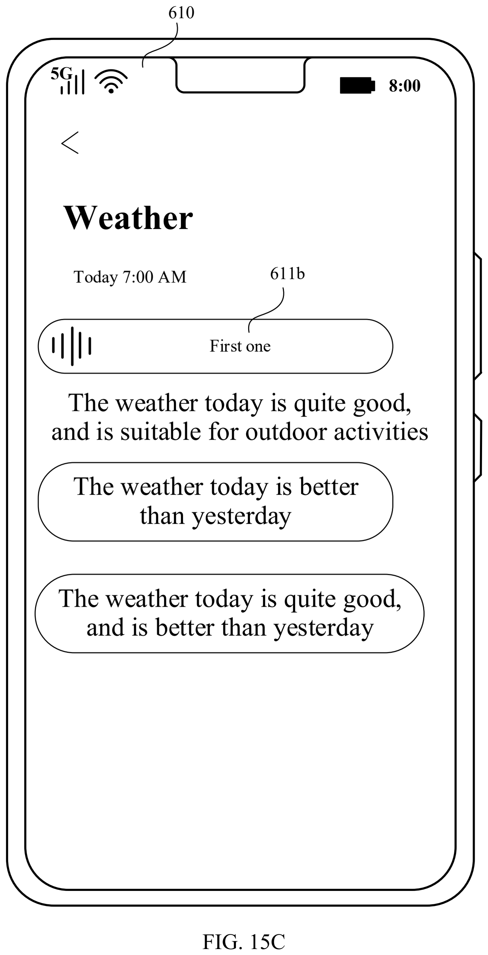

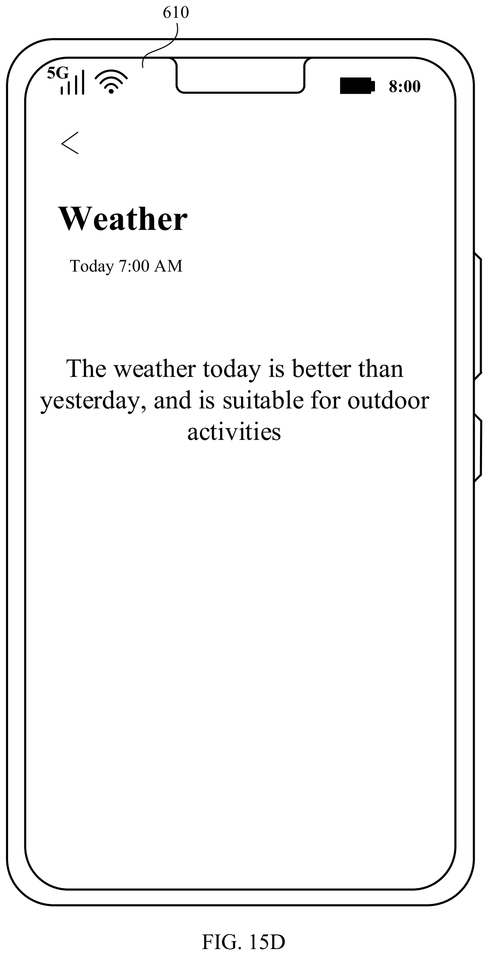

In a possible implementation, the user may select one of the modification results by inputting a voice instruction. Refer to FIG. 15C. The user may input a voice, namely, a related voice instruction (for example, a voice "First one"). The electronic device 100 may display the detected and user-input related voice instruction (for example, a text 611b "First one") in a form of a text. Further, after input of the voice instruction is completed, the electronic device 100 may analyze the voice instruction, to determine that an operation corresponding to the voice instruction is modifying the text before modification based on the first modification result (for example, the modification result 612). Further, refer to FIG. 15D. The electronic device 100 may modify the text before modification based on the modification result 612, and display the text after modification (for example, a text "The weather today is better than yesterday, and is suitable for outdoor activities").

In another possible implementation, still refer to FIG. 15B. The user may also select one of the modification results by performing a tap operation. For example, if the user wants to select the modification result 612, the user may tap the modification result 612. After detecting the tap operation, the electronic device 100 may modify, based on the modification result 612, the text before modification and display the text after modification (for example, the text "The weather today is better than yesterday, and is suitable for outdoor activities").

### b. Generate a semantically smooth modification result

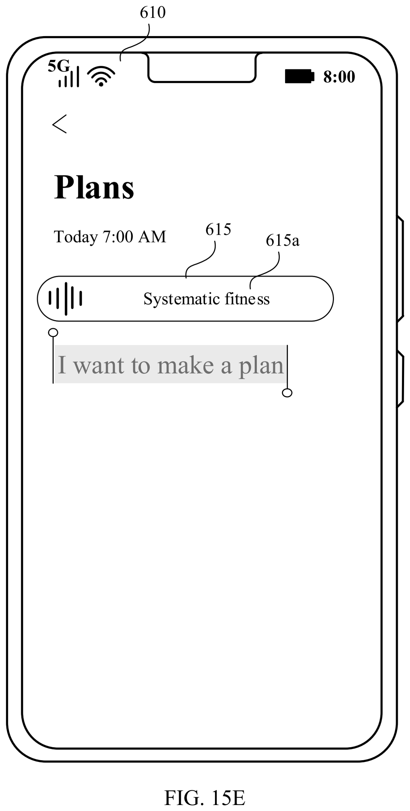

Similarly, an application (for example, a Notepad application) that can support text content modification is used as an example. Refer to FIG. 15E. A user interface 610 may be a user interface of the application. The user interface 610 may include the text that needs to be modified (for example, a text "I want to make a plan"), and the user interface 610 may further include a natural language interaction entry 615, to inform the user that the electronic device 100 has started the natural language interaction function.

Still refer to FIG. 15E. For example, the natural language instruction input by the user is a voice instruction. It is assumed that the user wants to add, to the text that needs to be modified, related text content used to express "Systematic fitness plan", so that the electronic device 100 may detect a related voice instruction (for example, a voice "Systematic fitness") input by the user, and may display the detected and user-input related voice instruction (for example, a text 615a "Systematic fitness") in a form of a text.

Further, still refer to FIG. 15E. For example, the text that the user selects and that needs to be modified is "I want to make a plan". After input of the voice instruction is completed, the electronic device 100 may analyze the voice instruction (for example, the voice "Systematic fitness") based on the text that the user selects and that needs to be modified, to determine that an operation corresponding to the voice instruction is adding the text "Systematic fitness" to the text "I want to make a plan" that the user selects and that needs to be modified, to generate a semantically smooth modification result.

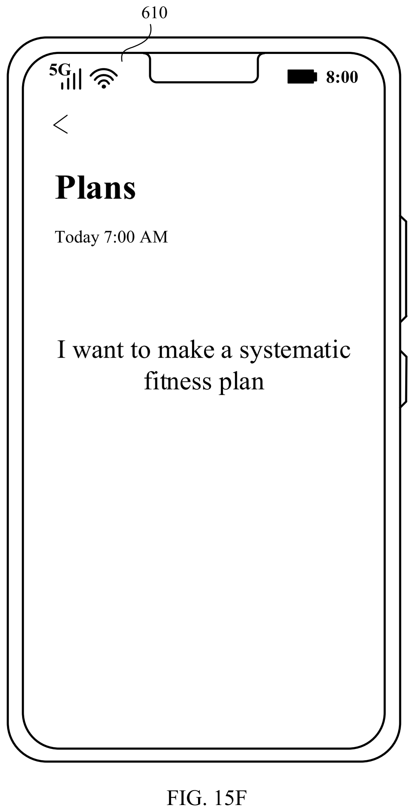

Further, the electronic device 100 may generate the semantically smooth modification result by using a related algorithm. After the modification result is generated, as shown in FIG. 15F, the electronic device 100 may generate only one semantically smooth modification result. In this case, the electronic device 100 may directly modify the text before modification based on the generated semantically smooth modification result, and display the text after modification (for example, "I want to make a systematic fitness plan").

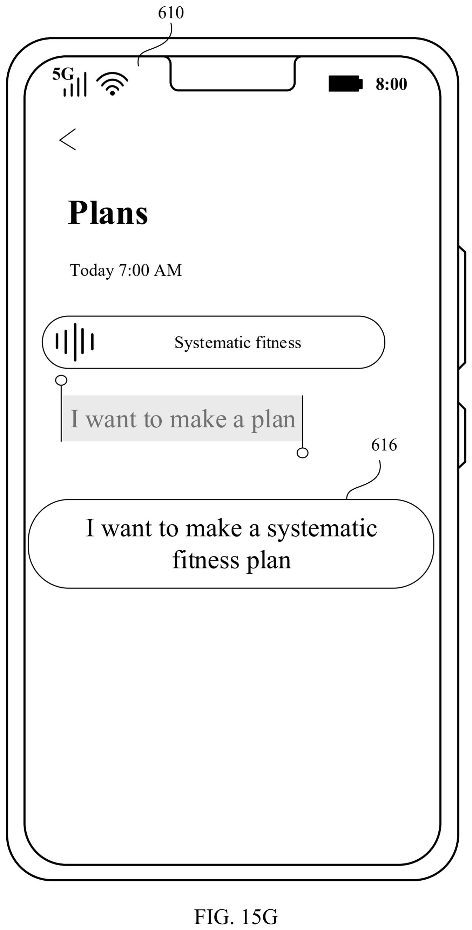

Optionally, refer to FIG. 15G. Before displaying the text after modification shown in FIG. 15F, the electronic device 100 may alternatively first display the generated semantically smooth modification result (for example, a modification result 616 "I want to make a systematic fitness plan"). After detecting that the user confirms the modification by using a voice instruction or performing a tap operation on the modification result 616, the electronic device 100 displays the text after modification shown in FIG. 15F. In this way, more selection rights can be provided for the user. If the user is not satisfied with the modification result, the user may also re-input a related instruction to generate a new modification result.

### (2) Automatic speech recognition (automatic speech recognition, ASR) error caused by noise and accents (for example, the text before modification is "Play song Raree Character for me" (Raree Character here is a homophone for what the user wants to express in a target language), and the text after modification is "Play song Rare Character for me")

In embodiments of this application, the user may trigger, by performing a touch and hold operation (for example, a touch and hold operation performed by using a finger of the user or a touch apparatus) on the text that needs to be modified, the electronic device 100 to select a corresponding text, and may further trigger the electronic device 100 to start a natural language interaction function.

For a specific process in which the user selects the text that needs to be modified and starts the natural language interaction function of the electronic device 100, and that is similar to the foregoing text collection, refer to the foregoing descriptions of FIG. 14A and FIG. 14B. Details are not described herein again.

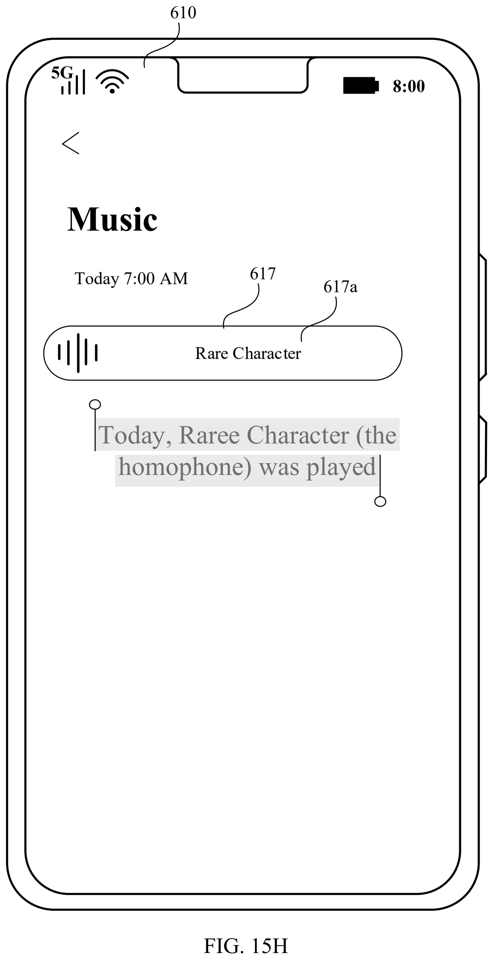

Similarly, an application (for example, a Notepad application) that can support text content modification is used as an example. Refer to FIG. 15H. A user interface 610 may be a user interface of the application. The user interface 610 may include the text that needs to be modified (for example, a text "Today, Raree Character (the homophone) was played"), and the user interface 610 may further include a natural language interaction entry 617, to inform the user that the electronic device 100 has started the natural language interaction function.

Still refer to FIG. 15H. For example, the natural language instruction input by the user is a voice instruction. It is assumed that the user wants to replace "Raree Character (the homophone)" with "Rare Character" in the text that needs to be modified, so that the electronic device 100 may detect a related voice instruction (for example, a voice "Rare Character") input by the user, and may display the detected and user-input related voice instruction (for example, a text 617a "Rare Character") in a form of a text.

Further, still refer to FIG. 15H. For example, the text that the user selects and that needs to be modified is "Today, Raree Character (the homophone) was played". After input of the voice instruction is completed, the electronic device 100 may analyze the voice instruction (for example, the voice "Rare Character") based on the text that the user selects and that needs to be modified, to determine that an operation corresponding to the voice instruction is replacing "Raree Character (the homophone)" with "Rare Character" in the text "Today, Raree Character (the homophone) was played" that the user selects and that needs to be modified.

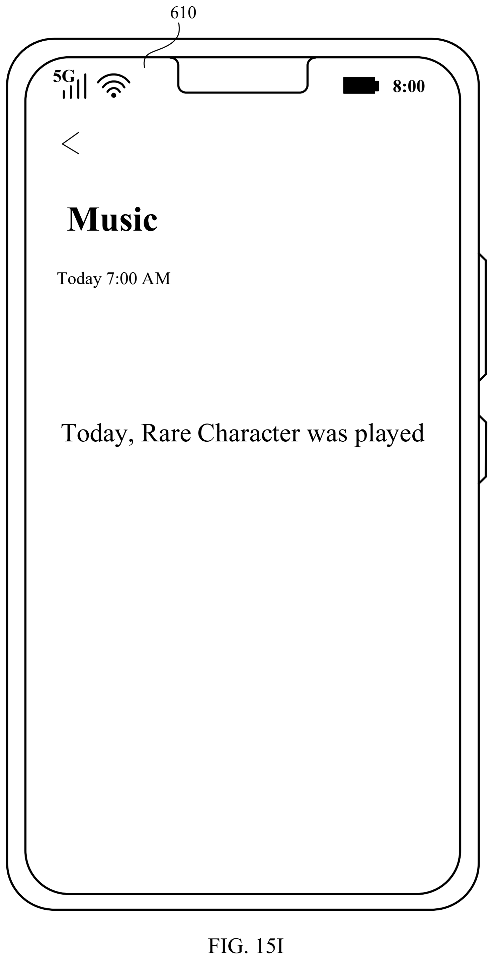

Further, the electronic device 100 may generate the semantically smooth modification result by using a related algorithm. After the modification result is generated, as shown in FIG. 15I, the electronic device 100 may generate only one semantically smooth modification result. In this case, the electronic device 100 may directly modify the text before modification based on the generated semantically smooth modification result, and display the text after modification (for example, "Today, Rare Character was played").

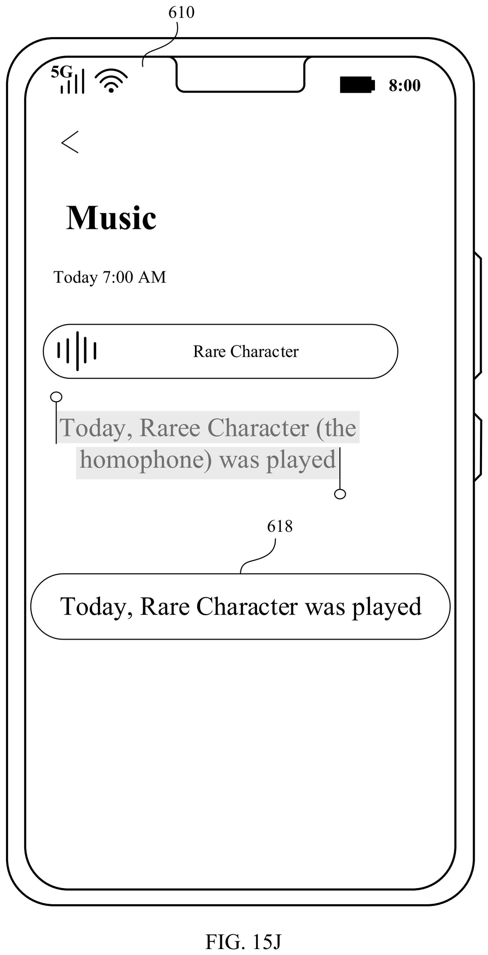

Optionally, when the electronic device 100 generates one or more semantically smooth modification results, before the electronic device 100 displays the text after modification shown in FIG. 15I, the electronic device 100 may alternatively first display the one or more generated semantically smooth modification results (for example, a modification result 616 shown in FIG. 15J). After detecting that the user confirms a modification result to be selected by using a voice instruction or performing a tap operation on the modification result, the electronic device 100 displays the text after modification. In this way, more selection rights can be provided for the user. If the user is not satisfied with the modification result, the user may also re-input a related instruction to generate a new modification result.

The foregoing voice instruction merely uses "Rare Character" as an example. In some embodiments, for homophones or characters with similar pronunciations, to avoid errors, the voice instruction may be a voice instruction with a more specific description. For example, for an instruction indicating an intention of adding "Rare Character", the voice instruction "Rare Character" may be a more specific voice instruction, for example, "Rare Character, R, A, R, E, rare, and C, H, A, R, A, C, T, E, R, character".

### (3) Slip of the tongue or filler word generated in a natural language input process (for example, the text before modification is "I heard, uh, that it will rain tomorrow", and the text after modification is "I heard that it will rain tomorrow")

In the natural language input process, the slip of the tongue or the filler word is usually generated in an oral expression of the user. Although there is the slip of the tongue or the filler word, an original meaning of an input sentence is completely retained. Therefore, the electronic device 100 may recognize and correct an oral error by using a technology like a large language model (large language model, LLM). The large language model is a deep learning model trained by using a large amount of text data, and may generate a natural language text or understand a meaning of a natural language text. The large language model may process a plurality of natural language characters, such as text classification, question and answer, and dialog.

In embodiments of this application, the user may trigger, by performing a touch and hold operation (for example, a touch and hold operation performed by using a finger of the user or a touch apparatus) on the text that needs to be modified, the electronic device 100 to select a corresponding text, and may further trigger the electronic device 100 to start a natural language interaction function, so as to automatically recognize and correct an oral error.

The following separately describes in detail a specific process in which the electronic device 100 automatically recognizes and corrects the oral error for the filler word and the slip of the tongue in the text that needs to be modified.

### a. Filler word in the text that needs to be modified

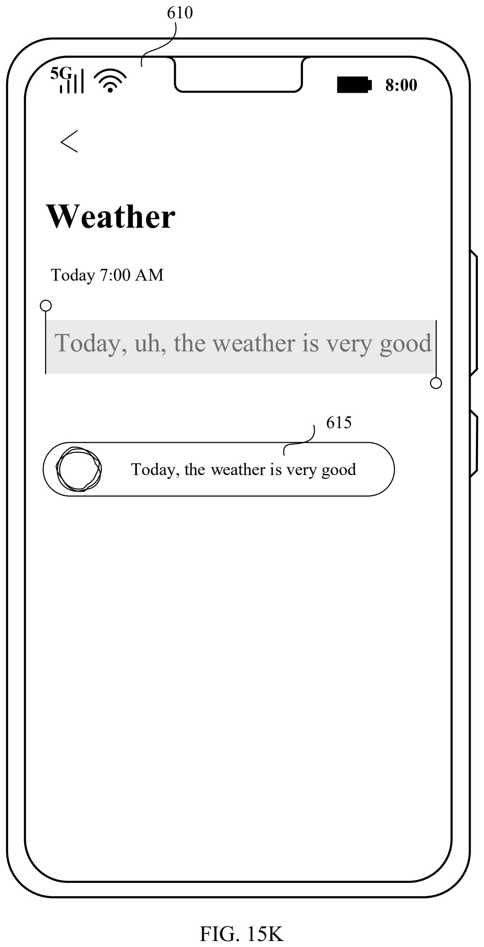

Similarly, an application (for example, a Notepad application) that can support text content modification is used as an example. Refer to FIG. 15K. A user interface 610 may be a user interface of the application. The user interface 610 may include the text that needs to be modified (for example, a text "Today, uh, the weather is very good"). It can be learned that the text includes the filler word "uh".

Still refer to FIG. 15K. It is assumed that the user wants to delete the filler word (for example, "uh") from the text that needs to be modified, so that the electronic device 100 may detect an operation (for example, a touch and hold operation) of the user to select the text that needs to be modified. In response to the operation, the electronic device 100 may select a corresponding text, and may automatically recognize and delete the filler word in the text by using a related algorithm, to generate a modification result 615 "Today, the weather is very good". A display form of the modification result 615 is not limited in embodiments of this application. For example, the modification result 615 may be displayed on a natural language interaction entry shown in FIG. 15K.

It can be learned that in embodiments of this application, the electronic device 100 can automatically recognize and delete the filler word in the text selected by the user without inputting a natural language instruction by the user. This is convenient and quick, and can provide intelligent experience for the user.

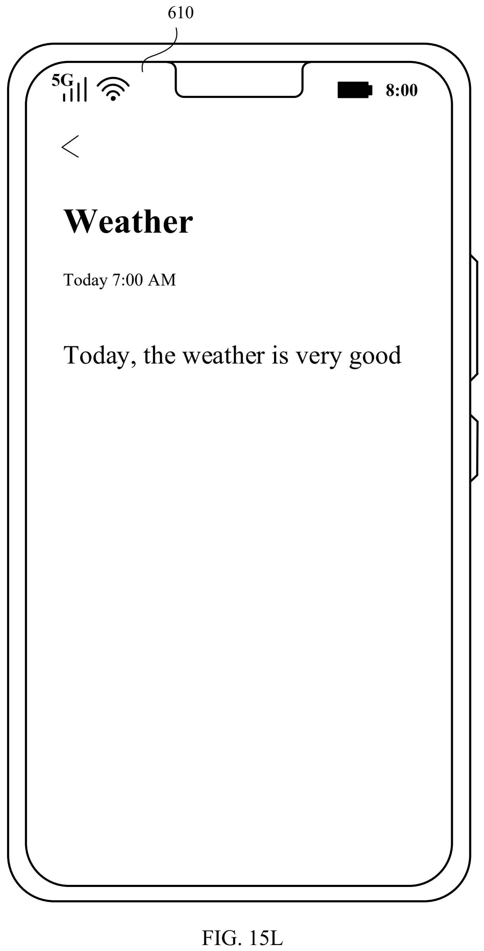

In a possible implementation, refer to FIG. 15L. After generating the modification result 615, the electronic device 100 may directly modify the text before modification based on the modification result, and display the text after modification (for example, "Today, the weather is very good").

In another possible implementation, the electronic device 100 may display the text after modification shown in FIG. 15L after detecting that the user confirms the modification by using a voice instruction or performing a tap operation on the modification result 615.

### b. Slip of the tongue in the text that needs to be modified

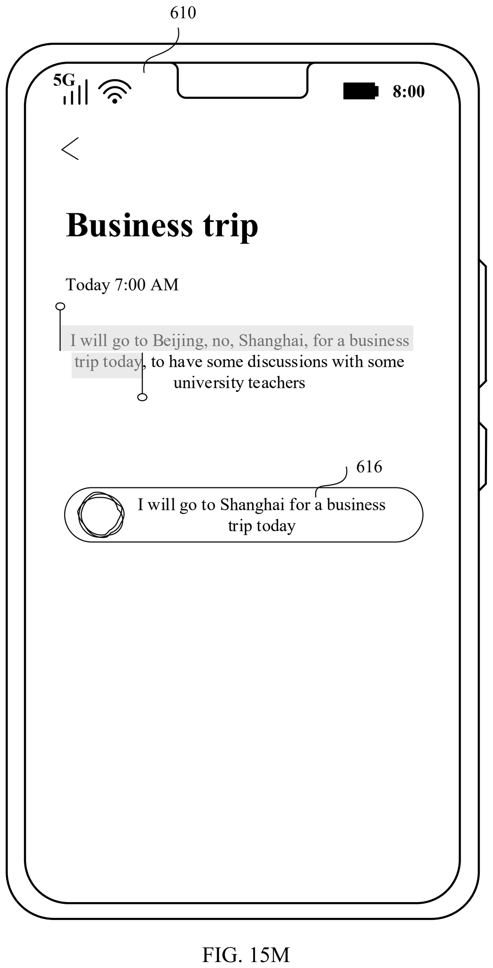

Similarly, an application (for example, a Notepad application) that can support text content modification is used as an example. Refer to FIG. 15M. A user interface 610 may be a user interface of the application. The user interface 610 may include the text that needs to be modified (for example, a text "I will go to Beijing, no, Shanghai, for a business trip today, to have some discussions with some university teachers"). It can be seen that there is a slip of the tongue in the text, to be specific, the city that I will go to for a business trip today is Shanghai, instead of Beijing.

Still refer to FIG. 15M. It is assumed that the user wants to correct the slip of tongue in the text that needs to be modified, so that the electronic device 100 may detect an operation (for example, a touch and hold operation) of the user to select the text that needs to be modified. In response to the operation, the electronic device 100 may select a corresponding text, and may automatically recognize and correct the slip of tongue in the text by using a related algorithm, to generate a modification result 616 "I will go to Shanghai for a business trip today". A display form of the modification result 616 is not limited in embodiments of this application. For example, the modification result 616 may be displayed on a natural language interaction entry shown in FIG. 15M.

It can be learned that in embodiments of this application, the electronic device 100 can automatically recognize and correct the slip of tongue in the text selected by the user without inputting a natural language instruction by the user. This is convenient and quick, and can provide intelligent experience for the user.

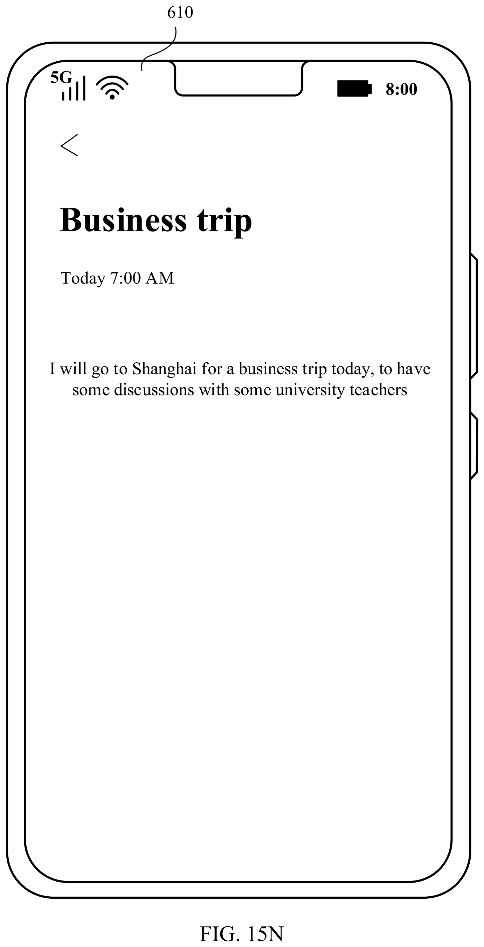

In a possible implementation, refer to FIG. 15N. After generating the modification result 616, the electronic device 100 may directly modify the text before modification based on the modification result, and display the text after modification (for example, "I will go to Shanghai for a business trip today, to have some discussions with some university teachers").

In another possible implementation, the electronic device 100 may display the text after modification shown in FIG. 15N after detecting that the user confirms the modification by using a voice instruction or performing a tap operation on the modification result 616.

In some embodiments, in a natural language input process, the electronic device 100 may automatically recognize and correct an oral error. In other words, a text generated through natural language input is a text obtained after the oral error is corrected. In this way, the user does not need to actively select a text and modify text content subsequently, thereby simplifying user operations and improving text input efficiency.

It is easy to understand that the foregoing text content modification implemented by using the natural language interaction function may be implemented by the electronic device 100 based on an input method application (for example, a Celia input method application).

In some embodiments, not limited to implementing the foregoing text content modification, the interaction method provided in embodiments of this application may be also used to implement text format modification by using the natural language interaction function. It is easy to understand that a text format modification process is similar to the foregoing text content modification process, and only natural language instructions input by the user are different. In a text format modification scenario, the user may input a natural language instruction indicating the text format modification. The foregoing text format may include but is not limited to one or more of the following: a font, a font size, a color, an alignment manner, a style (a title style/a body style), a bold, an italic, or an underline.

### (2) Comment adding, comment display, and comment editing in a document

By implementing the interaction method provided in embodiments of this application, when the electronic device 100 opens a document and enters a comment mode, the electronic device 100 may support the user in triggering, by using a touch and hold operation (for example, a touch and hold operation performed by using a finger of the user or a touch control apparatus), the electronic device 100 to start a natural language interaction function, and may add a comment to the document, edit the comment, and the like based on the natural language interaction function. This is convenient and quick, simplifies user operations, and improves user experience.

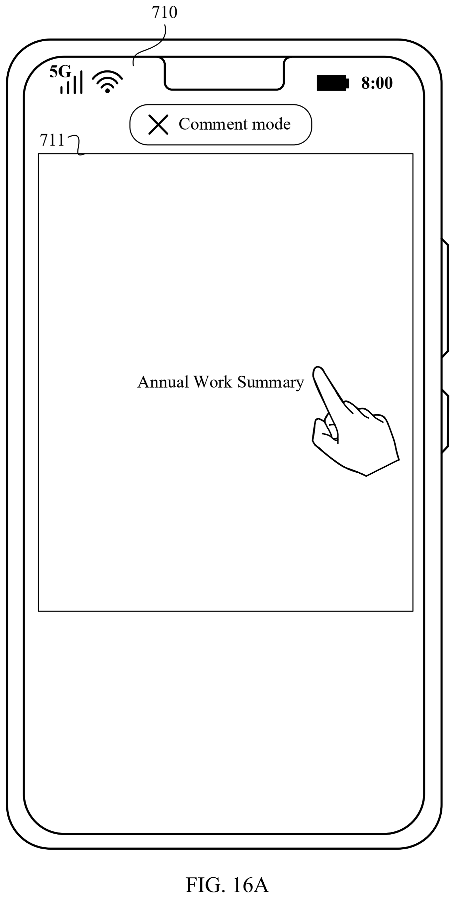

The following first describes a specific process of adding a comment to a document with reference to FIG. 16A to FIG. 16G.

Refer to FIG. 16A. A user interface 710 may be a user interface of the electronic device 100 when the electronic device 100 opens a document (for example, a document 711 about an annual work summary) and enters the comment mode.

In this embodiment of this application, it is assumed that the user wants to add a comment to a current page of the document, so that the electronic device 100 may detect a touch and hold operation performed by the user on the current page of the document 711. In response to the touch and hold operation, the electronic device 100 may start the natural language interaction function, and may recognize whether there is an interaction object/subject (for example, an image or a text) at a location of the touch and hold operation on the current page of the document 711. If no, the electronic device 100 may generate a comment based on a voice instruction input by the user, and may display the generated comment at the location of the touch and hold operation. If yes, the electronic device 100 may generate a comment based on a voice instruction input by the user, highlight the interaction object/subject, and further display the generated comment at another location (for example, a central location of the interaction object/subject) other than the location of the touch and hold operation. The following separately describes the two cases.

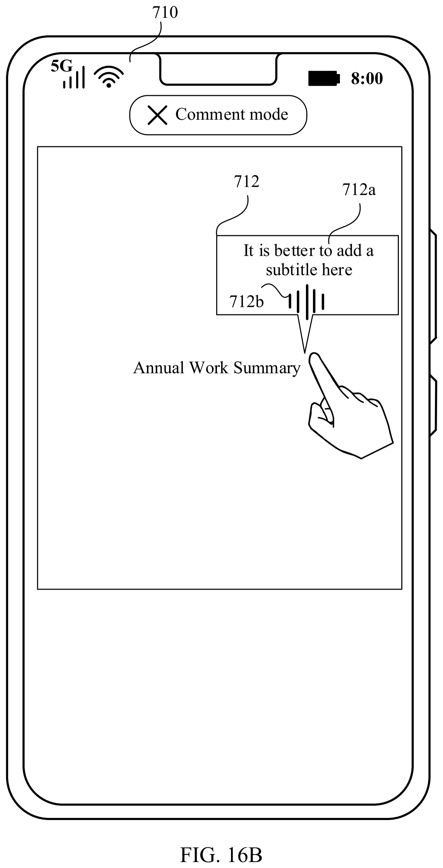

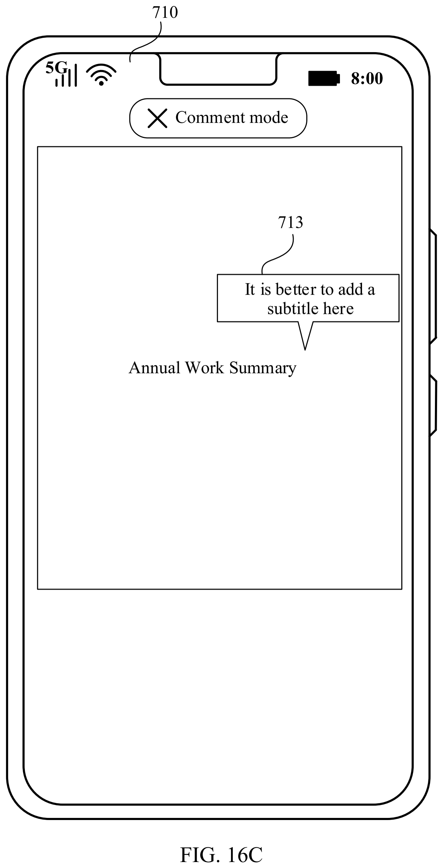

For example, still refer to FIG. 16A. It is assumed that there is no interaction object at the location of the touch and hold operation performed by the user. For example, the location of the touch and hold operation shown in FIG. 16A is blank, in other words, there is no interaction object. In this case, after the electronic device 100 starts the natural language interaction function, as shown in FIG. 16B, the electronic device 100 may display a comment box 712 at the location of the touch and hold operation, and may further display an indicator 712b. The indicator 712b may be used to inform the user that the electronic device 100 is detecting the voice instruction input by the user. It is assumed that a comment that the user wants to add is "It is better to add a subtitle here", so that the electronic device 100 may detect a related voice instruction (for example, a voice "It is better to add a subtitle here") input by the user, and may display the detected and user-input related voice instruction (for example, a text 712a "It is better to add a subtitle here") in a form of a text. Further, after input of the voice instruction is completed, if the electronic device 100 detects that the user cancels the touch and hold operation (for example, an operation of moving the finger of the user or the touch apparatus away from a screen of the electronic device 100), the electronic device 100 may generate the comment based on the voice instruction. After the comment is generated, as shown in FIG. 16C, the electronic device 100 may display the generated comment (for example, a comment 713) at the location of the touch and hold operation.

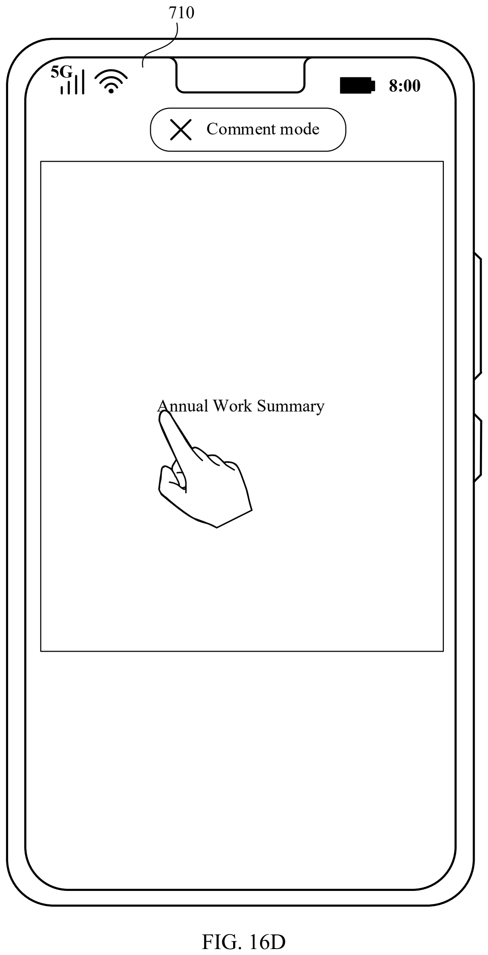

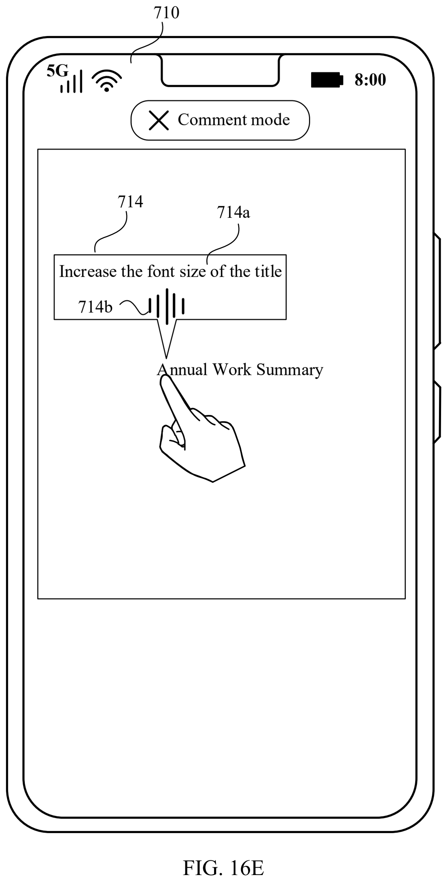

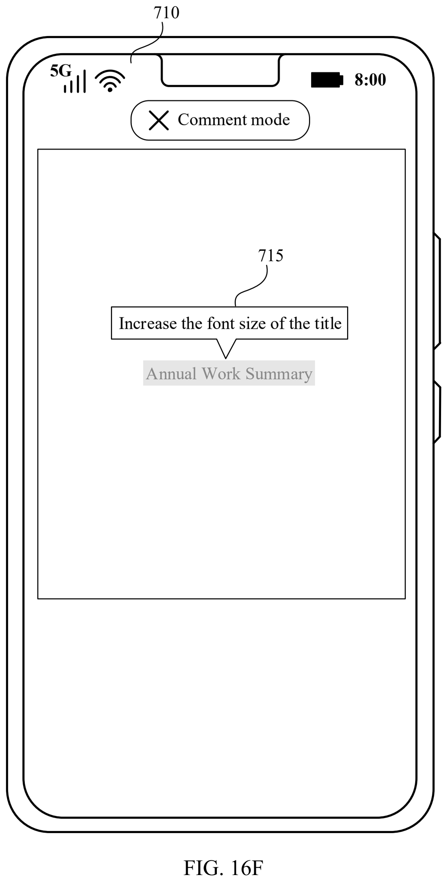

For example, refer to FIG. 16D. It is assumed that there is the interaction object at the location of the touch and hold operation performed by the user. For example, there is a word "Annual" at the location of the touch and hold operation shown in FIG. 16D, in other words, there is the interaction object. In this case, after the electronic device 100 starts the natural language interaction function, as shown in FIG. 16E, the electronic device 100 may display a comment box 714 at the location of the touch and hold operation, and may further display an indicator 714b. The indicator 714b may be used to inform the user that the electronic device 100 is detecting the voice instruction input by the user. It is assumed that a comment that the user wants to add is "Increase the font size of the title", so that the electronic device 100 may detect a related voice instruction (for example, a voice "Increase the font size of the title") input by the user, and may display the detected and user-input related voice instruction (for example, a text 714a "Increase the font size of the title") in a form of a text. Further, after input of the voice instruction is completed, if the electronic device 100 detects that the user cancels the touch and hold operation (for example, an operation of moving the finger of the user or the touch apparatus away from a screen of the electronic device 100), the electronic device 100 may generate the comment based on the voice instruction. After the comment is generated, as shown in FIG. 16F, it can be seen that the electronic device 100 may display the generated comment (for example, display a comment 715 in a central location of the text "Annual Work Summary") and highlight the interaction object (for example, the text "Annual Work Summary") corresponding to the comment.

It should be noted that the interaction object may be an object at the location of the touch and hold operation, or may be an object obtained by extending the object at the location of the touch and hold operation. This is not limited in embodiments of this application. Refer to FIG. 16D. For example, if the object at the location of the touch and hold operation is the word "Annual", the object obtained after extension may be the text "Annual Work Summary". It can be learned that in the foregoing embodiments shown in FIG. 16D to FIG. 16F, the object obtained after extension, namely, the text "Annual Work Summary", is used as the interaction object.

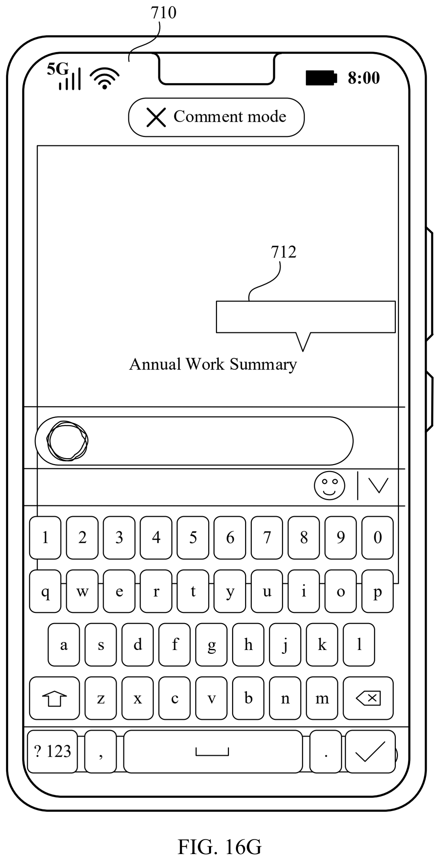

In this embodiment of this application, after the electronic device 100 starts the natural language interaction function in response to the touch and hold operation of the user, if the electronic device 100 does not detect the voice instruction input by the user within a period of time, and detects that the touch and hold operation is canceled (for example, an operation of moving the finger of the user or the touch apparatus away from the screen of the electronic device 100), as shown in FIG. 16G, the electronic device 100 may invoke a virtual keyboard, and may display a comment box 712. The user may input a text instruction via the virtual keyboard, to add a comment to the comment box 712.

In some embodiments, the generated comment may be displayed in a click-through overlay layer over an application, so that an operation performed by the user on content of a page of the application is not affected.

In this embodiment of this application, after the comment is added to the document, when page content of the document changes (for example, the page content changes due to a page turn operation, a scrolling operation, a moving operation, a zoom-in operation, or a zoom-out operation), after the electronic device 100 determines that page content is stably displayed (for example, after a preset time period in which the page turn operation, the scrolling operation, the moving operation, the zoom-in operation, or the zoom-out operation stops), and if the currently displayed page content includes a corresponding added comment, the electronic device 100 may further determine, based on a preset rule, whether to display the comment. Details are described below.

In the foregoing process of adding the comment, the electronic device 100 may record a comment screenshot image (where the image may include page content and an image of the comment) and coordinate information of a comment display location. After the comment is added and the page content changes, the electronic device 100 may obtain a historical comment screenshot image, and analyze the historical comment screenshot image. If the currently displayed page content is similar to page content in a historical comment screenshot image, the electronic device 100 may find a comment corresponding to the page content, and may determine coordinate information of a display location of an updated comment based on information of the page content in the historical comment screenshot image, and a display location and a display proportion that are of the comment corresponding to the page content, and information of a display location and a display proportion that are of the currently displayed page content. Then, the electronic device 100 may display the comment at a corresponding location on the screen based on the coordinate information of the display location of the updated comment. If the currently displayed page content is similar to none of page content in one or more historical comment screenshot images, or the currently displayed page content is similar to page content in a plurality of historical comment screenshot images, the electronic device 100 may not display the comment.

It is easy to understand that whether the currently displayed page content is similar to the page content in the historical comment screenshot image may be measured by using statistical knowledge in mathematics, for example, an index "confidence". If the confidence is greater than a preset threshold, it may indicate that the currently displayed page content is similar to the page content in the historical comment screenshot image. If the confidence is less than the preset threshold, it may indicate that the currently displayed page content is not similar to the page content in the historical comment screenshot image.

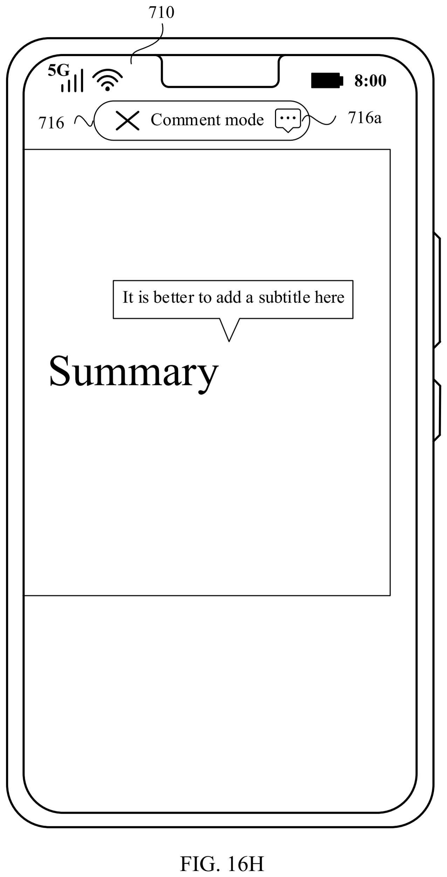

For example, refer to FIG. 16H. For example, the currently displayed page content is "Summary". It is assumed that the electronic device 100 determines that the currently displayed page content is similar to the page content (for example, the page content "Annual Work Summary" shown in FIG. 16C) in the historical comment screenshot image. For example, the foregoing historical comment screenshot image is a comment screenshot image shown in FIG. 16C. In this case, the electronic device 100 may display, in FIG. 16H, the comment 713 "It is better to add a subtitle here" shown in FIG. 16C.

It can be easily seen that page content shown in FIG. 16H may be page content obtained after page content shown in FIG. 16C is zoomed in (for example, the page content shown in FIG. 16H zooms in only "Summary" in "Annual Work Summary" shown in FIG. 16C).

For example, still refer to FIG. 16H. For example, the currently displayed page content is "Summary". It is easy to understand that, if page content of one or more pages other than the page shown in FIG. 16C in the document also includes the content "Summary" and a corresponding comment is added to each page, the electronic device 100 may determine that the currently displayed page content is similar to the page content in the plurality of historical comment screenshot images. In this case, the electronic device 100 may not display the comment in FIG. 16H.

It is easy to understand that, if the electronic device 100 determines that the currently displayed page content shown in FIG. 16H is similar to none of page content in one or more historical comment screenshot images, the electronic device 100 may not display the comment in FIG. 16H.

In embodiments of this application, in the foregoing two cases in which the comment is not displayed, the electronic device 100 may also support the user in viewing the comment. For example, the electronic device 100 may display an option 716a in a window 716 shown in FIG. 16H. After detecting an operation (for example, a tap operation) performed by the user on the option 716a, the electronic device 100 may display, in a window or a widget, a part or all of comments added to the document, for the user to view. In some embodiments, if a corresponding comment is added to the currently displayed page content, the user may tap the comment displayed in the window or the widget, to trigger the electronic device 100 to display the comment in a manner shown in FIG. 16H.

In embodiments of this application, after the comment is added to the document, the electronic device 100 may further support the user in performing an editing operation (for example, deleting the comment, moving the comment, or modifying comment content) on the comment. Details are described below.

In embodiments of this application, the electronic device 100 may support the user in triggering, by performing a tap operation, the electronic device 100 to delete or move the comment.

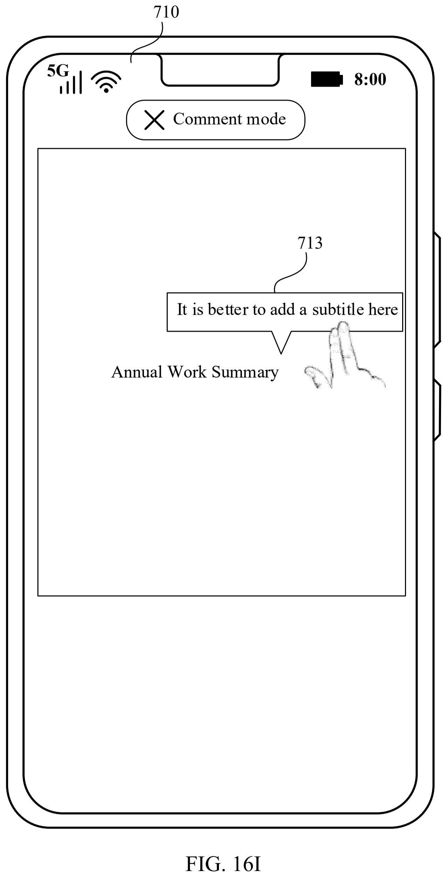

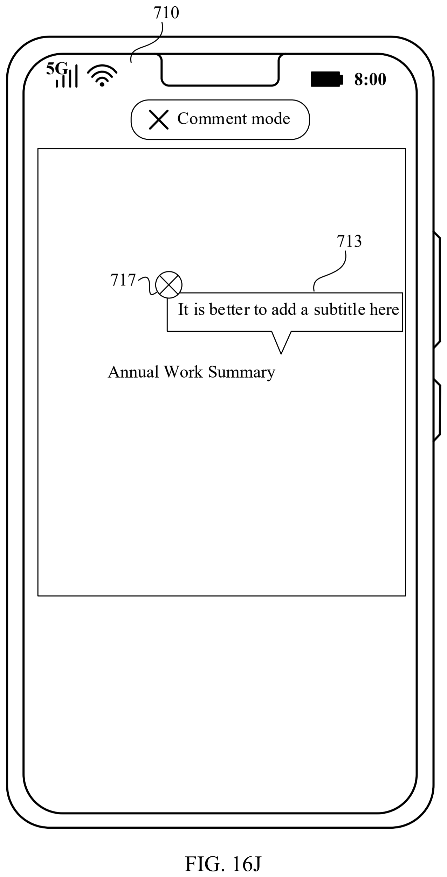

For example, refer to FIG. 16I. The comment 713 is used as an example. The electronic device 100 may detect a tap operation performed by the user on the comment 713. In response to the tap operation, as shown in FIG. 16J, the electronic device 100 may display an option 717. The option 717 may be used to delete the comment 713. In this case, the comment 713 is in an editable state. If the user wants to delete the comment 713, the electronic device 100 may detect a tap operation performed by the user on the option 717. In response to the tap operation, the electronic device 100 may delete the comment 713 and cancel display of the comment 713. Still refer to FIG. 16J. If the user wants to move the comment 713, the electronic device 100 may detect an operation of touching and holding and dragging the comment 713 to a location by the user. In response to the operation, the electronic device 100 may display the comment 713 at the location, and no longer display the comment 713 at a location before the movement.

In some embodiments, the user may tap another location other than the comment 713 to trigger the electronic device 100 to cancel display of the option 717. In this way, the comment 713 may no longer be in the foregoing editable state.

It should be noted that if the comment is displayed on a click-through overlay layer over an application, to prevent an editing operation on the comment from affecting page content of the application below the layer, the foregoing tap operation may be a specific tap operation, for example, a two-finger tap operation.

In embodiments of this application, the electronic device 100 may support the user in triggering, by using a touch and hold operation and inputting a natural language instruction (for example, a voice instruction or a text instruction), the electronic device 100 to modify comment content or insert a new comment.

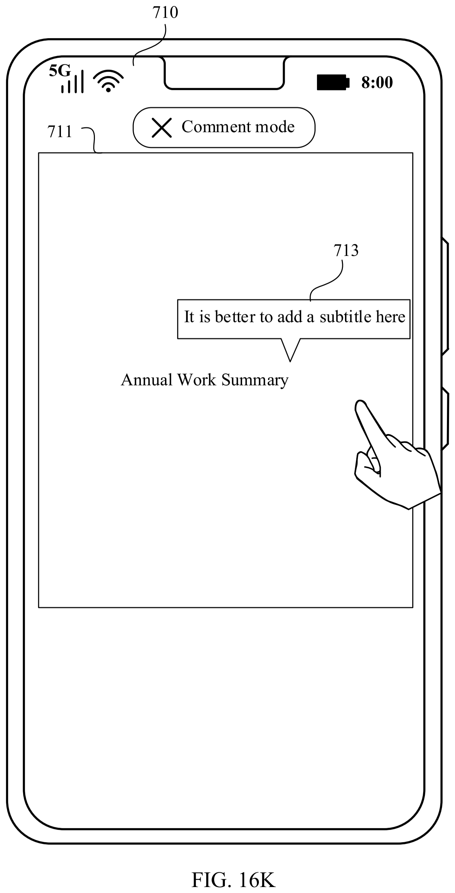

For example, refer to FIG. 16K. A currently displayed page of the document 711 shown in FIG. 16K includes only one comment 713. After the electronic device 100 detects a touch and hold operation performed by the user on the currently displayed page of the document 711, in response to the touch and hold operation, the electronic device 100 may start the natural language interaction function, and may receive a natural language instruction input by the user by using the started natural language interaction function. The electronic device 100 may further obtain coordinates of a location of the touch and hold operation and coordinates of the comment 713, and may determine whether a distance d between the coordinates of the location of the touch and hold operation and the coordinates of the comment 713 is less than or equal to a preset distance threshold d1. If yes (that is, d≤d1), the electronic device 100 may replace comment content of the comment 713 based on the input natural language instruction, to complete comment content modification. If no (that is, d>d1), the electronic device 100 may further determine whether the distance d between the coordinates of the location of the touch and hold operation and the coordinates of the comment 713 is less than or equal to a preset distance threshold d2. If yes (that is, d1<d≤d2), the electronic device 100 may prompt, in a manner of voice broadcast or interface display, the user to insert a new comment based on the input natural language instruction or replace the comment content of the comment 713 based on the input natural language instruction, and may perform a corresponding operation based on a user selection. If no (that is, d>d2), the electronic device 100 may insert a new comment based on the input natural language instruction.

In some embodiments, when the currently displayed page includes a plurality of comments, the electronic device 100 may obtain a comment closest to the location of the touch and hold operation for comparison.

The following describes a specific process in which the electronic device 100 modifies the comment content or inserts the new comment with reference to user interfaces.

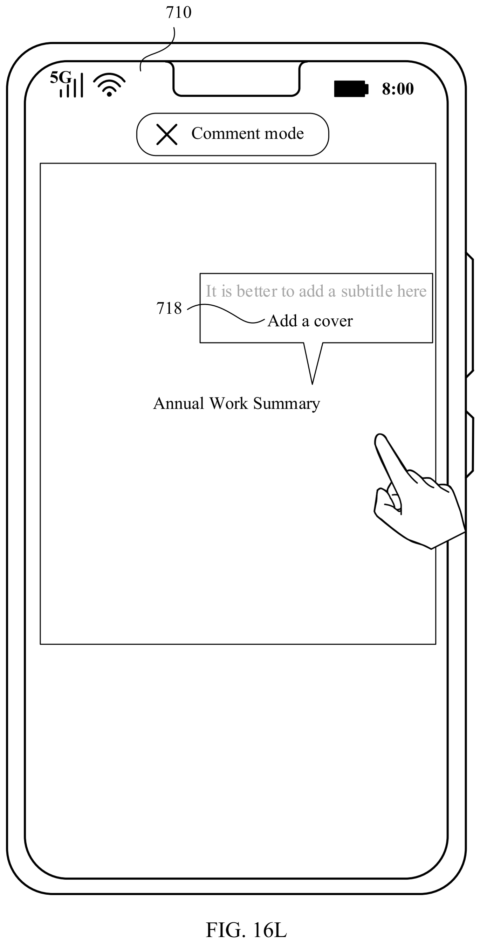

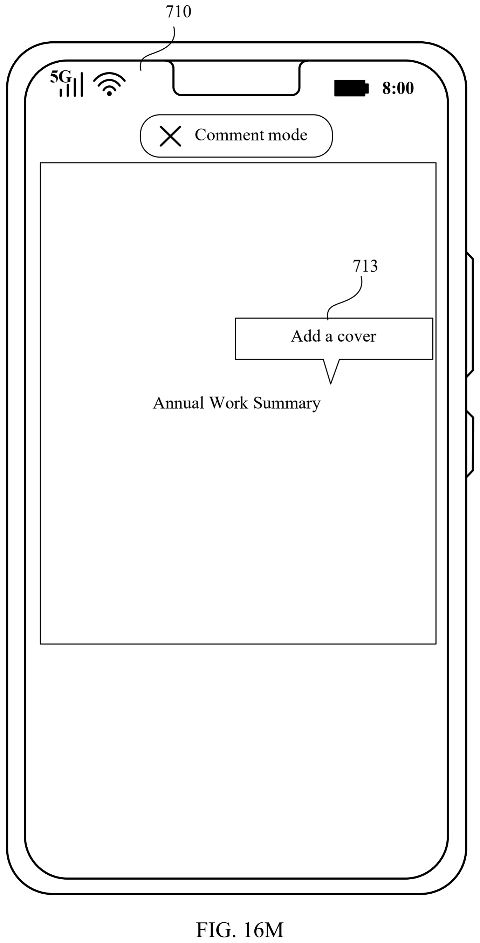

Still refer to FIG. 16K. It is assumed that the distance d between the coordinates of the location of the touch and hold operation of the user and the coordinates of the comment 713 is less than or equal to the preset distance threshold d1 (that is, d≤d1). In this case, as shown in FIG. 16L, the electronic device 100 may detect a related voice instruction (for example, a voice "Add a cover") input by the user, and may display the detected and user-input related voice instruction (for example, a text 718 "Add a cover") in a form of a text. Further, after input of the voice instruction is completed, if the electronic device 100 detects that the user cancels the touch and hold operation (for example, an operation of moving the finger of the user or the touch apparatus away from the screen of the electronic device 100), the electronic device 100 may replace the comment content of the comment 713 based on the voice instruction. After the replacement is completed, as shown in FIG. 16M, the electronic device 100 may display a replaced comment. It can be seen that the comment content of the comment 713 is replaced from "It is better to add a subtitle here" to "Add a cover". In this way, the comment content is modified.

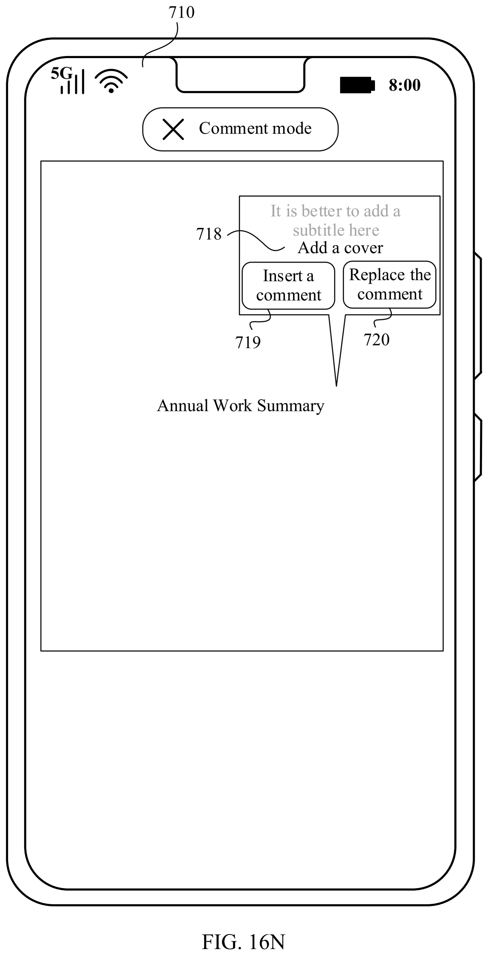

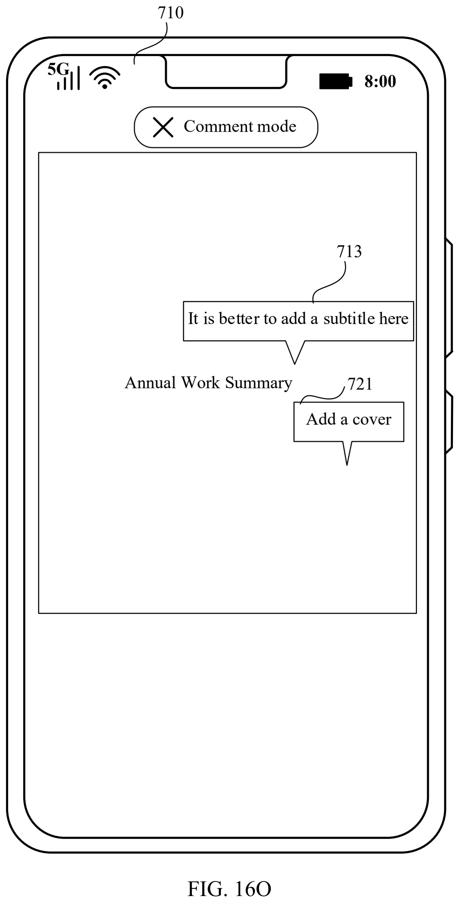

Still refer to FIG. 16K. It is assumed that the distance d between the coordinates of the location of the touch and hold operation of the user and the coordinates of the comment 713 is greater than the preset distance threshold d1 and is less than or equal to the preset distance threshold d2 (that is, d1<d≤d2). In this case, as shown in FIG. 16N, the electronic device 100 may detect a related voice instruction (for example, a voice "Add a cover") input by the user, and may display the detected and user-input related voice instruction (for example, a text 718 "Add a cover") in a form of a text. Further, after input of the voice instruction is completed, if the electronic device 100 detects that the user cancels the touch and hold operation (for example, an operation of moving the finger of the user or the touch apparatus away from the screen of the electronic device 100), the electronic device 100 may further display an option 719 and an option 720. The option 719 may prompt the user to insert a new comment, and the option 720 may prompt the user to replace the comment content of the comment 713. If the electronic device 100 detects that the user selects, by using a voice instruction or a touch operation (for example, a tap operation for the option 719), to insert a new comment, as shown in FIG. 16O, the electronic device 100 may insert a new comment (for example, a comment 721) at a corresponding location (for example, a location of the touch and hold operation). If the electronic device 100 detects that the user selects, by using a voice instruction or a touch operation (for example, a tap operation for the option 720), to replace the comment, as shown in FIG. 16M, the electronic device 100 may replace the comment content of the comment 713 from "It is better to add a subtitle here" to "Add a cover", and display the replaced comment.

In the comment editing scenarios, after the electronic device 100 starts the natural language interaction function in response to the touch and hold operation of the user, if the electronic device 100 does not detect the voice instruction input by the user within a period of time, and detects that the user cancels the touch and hold operation (for example, an operation of moving the finger of the user or the touch apparatus away from the screen of the electronic device 100), the electronic device 100 may also invoke a virtual keyboard, as shown in FIG. 16G in the foregoing comment adding scenario, to support the user in inputting a text instruction via the virtual keyboard. After the inputting is completed, the electronic device 100 may complete comment editing based on the input text instruction. It is easy to understand that completing comment editing based on the input text instruction is merely different from completing comment editing based on the voice instruction in terms of an instruction input manner, and other processes are the same as those of completing comment editing based on the voice instruction. Details are not described herein again.

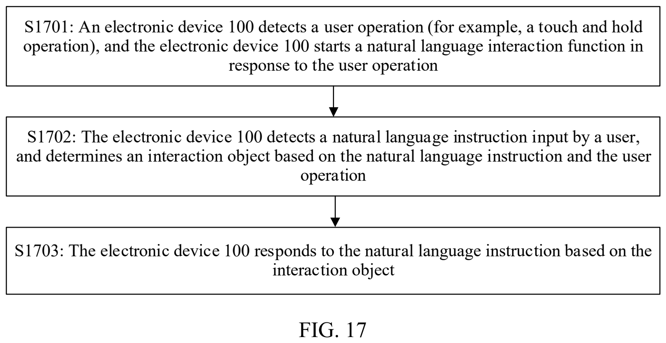

**FIG. 17** **illustrates a specific procedure of an interaction method according to an embodiment of this application.**

As shown in FIG. 17, the method may be applied to the electronic device 100. The following describes in detail specific steps of the method.

S1701: The electronic device 100 detects a user operation (for example, a touch and hold operation), and the electronic device 100 starts a natural language interaction function in response to the user operation.

The user operation may be a touch operation performed by a user on a screen of the electronic device 100. In embodiments of this application, the touch operation may trigger the electronic device 100 to start the natural language interaction function and display a natural language interaction entry, so that the electronic device 100 may subsequently detect a natural language instruction (for example, a voice instruction or a text instruction) input by the user by using the natural language interaction function, and may display the natural language instruction on the natural language interaction entry. The touch operation may further trigger the electronic device 100 to select an interaction object, so that the electronic device 100 subsequently performs a corresponding operation on the interaction object based on the input natural language instruction.

In embodiments of this application, the user operation merely uses the touch and hold operation (for example, a touch and hold operation on a picture, a video, a text, a chat entry, an icon of a document, a page of a document, or the like) as an example, which shall not constitute any limitation on this application. In some other embodiments of this application, the user operation may be another operation.

For a specific process of triggering the electronic device 100 to start the natural language interaction function, display the natural language interaction entry, and select the interaction object by using the user operation (for example, the touch and hold operation), refer to the related text descriptions in the foregoing user interface embodiments. Details are not described herein again.

S1702: The electronic device 100 detects the natural language instruction input by the user, and determines the interaction object based on the natural language instruction and the user operation.

Specifically, after starting the natural language interaction function, the electronic device 100 may detect, by using the natural language interaction function, the natural language instruction input by the user. After input of the natural language instruction is completed, the electronic device 100 may determine whether the natural language instruction includes a default object (in other words, the natural language instruction does not include the interaction object) or a reference pronoun (to be specific, the natural language instruction includes a word specifying the interaction object, for example, "this" or "it"). If yes (to be specific, the natural language instruction does not include a keyword indicating the interaction object), the electronic device 100 may extract and recognize the interaction object from interface content at a location of the user operation (for example, the touch and hold operation) or at and near the location of the user operation, to determine the interaction object. If no (to be specific, the natural language instruction includes the keyword indicating the interaction object), the electronic device 100 may perform Step S1703.

In some embodiments, when the natural language instruction does not include the default object (in other words, the natural language instruction includes the interaction object), the electronic device 100 may perform a corresponding operation on the interaction object based on the interaction object included in the natural language instruction.

For example, it is assumed that the natural language instruction is "brighten the picture a little". It can be learned that the interaction object included in the natural language instruction is "picture". In this case, the electronic device 100 may increase brightness of the picture by using a related algorithm.

In some other embodiments, when the interaction object included in the natural language instruction is different from the interaction object selected by triggering, by using the user operation (for example, the touch and hold operation), the electronic device 100, the electronic device 100 may perform a corresponding operation on the interaction object based on the interaction object included in the natural language instruction.

For example, it is assumed that the natural language instruction is "brighten the picture a little". It can be learned that the interaction object included in the natural language instruction is "picture". However, the interaction object selected by triggering, by using the user operation, the electronic device 100 is a subject to be cut out (for example, a flower) in the picture. In this case, the electronic device 100 may increase overall brightness of the picture by using a related algorithm, instead of increasing only brightness of the subject to be cut out in the picture. In other words, the interaction object determined by the electronic device 100 is the entire picture, instead of the subject to be cut out in the picture.

In some other embodiments, when the natural language instruction includes the default object or the reference pronoun, the electronic device 100 may preferentially use, as the interaction object, a minimum unit object (for example, a control, a subject to be cut out, or a text word segmentation) that can be recognized at the location of the user operation (for example, the touch and hold operation), and then the electronic device 100 may determine, based on the natural language instruction, whether to extend a range of the interaction object. If yes, the electronic device may extend the range of the interaction object to determine a new interaction object, and perform an operation corresponding to the natural language instruction on the new interaction object.

For example, it is assumed that the natural language instruction is "erasing". It can be learned that the natural language instruction includes the default object. In this case, the electronic device 100 may use, as the interaction object, the minimum unit object that can be recognized at the location of the user operation, for example, use a subject to be cut out in a picture as the interaction object. Further, the electronic device 100 may erase the subject to be cut out from the picture by using a related algorithm.

For example, it is assumed that the natural language instruction is "erasing this". It can be learned that the natural language instruction includes the reference pronoun "this". In this case, the electronic device 100 may also use, as the interaction object, the minimum unit object that can be recognized at the location of the user operation, for example, use a subject to be cut out in a picture as the interaction object. Further, the electronic device 100 may erase the subject to be cut out from the picture by using a related algorithm.

For example, it is assumed that the natural language instruction is "copy this paragraph to Notepad". It can be learned that the natural language instruction includes the reference pronoun "this paragraph". It is assumed that the interaction object selected by triggering, by using the user operation, the electronic device 100 is a part of text (namely, a selected text) in a text paragraph, so that the electronic device 100 may determine, based on "this paragraph" in the natural language instruction, to extend a range of the interaction object. Further, the electronic device 100 may recognize context of the selected text by using a related algorithm (for example, a text detection and recognition algorithm like OCR), to obtain the entire text paragraph at which the selected text is located. Further, the electronic device 100 may determine that a new interaction object is the entire text paragraph at which the selected text is located, and may copy, to Notepad, the entire text paragraph at which the selected text is located.

S1703: The electronic device 100 responds to the natural language instruction based on the interaction object.

Specifically, after determining the interaction object, the electronic device 100 may analyze and understand the natural language instruction input by the user with reference to the interaction object. After analysis and understanding, the electronic device 100 may respond to the natural language instruction, to be specific, perform the operation corresponding to the natural language instruction on the interaction object. For example, a corresponding operation (for example, a sending operation or an editing operation) is performed on display information, for example, a picture or a video. For another example, a corresponding operation (for example, an operation of displaying a summary of an unread message or an operation of performing question and answer query) is performed on information (for example, a chat message) displayed in a list form, and a corresponding operation (for example, an operation of displaying a summary of a document, displaying a note in a document, translating the full text, question and answer query, format conversion, or format beautification) is performed on information (for example, a document) displayed in a grid form. For another example, a corresponding operation (for example, an operation of query, collecting, editing, or summary display) is performed on a text (for example, a common text or a special text like a link, a person name, a number, an email address, a date, or an address). For another example, an operation of adding a comment to a document, displaying a comment, editing a comment, or the like is performed, and the like.

For a specific process in which the electronic device 100 responds to the natural language instruction input by the user, refer to the related text descriptions in the foregoing user interface embodiments. Details are not described herein again.

The following describes a software structure of the electronic device 100 according to embodiments of this application.

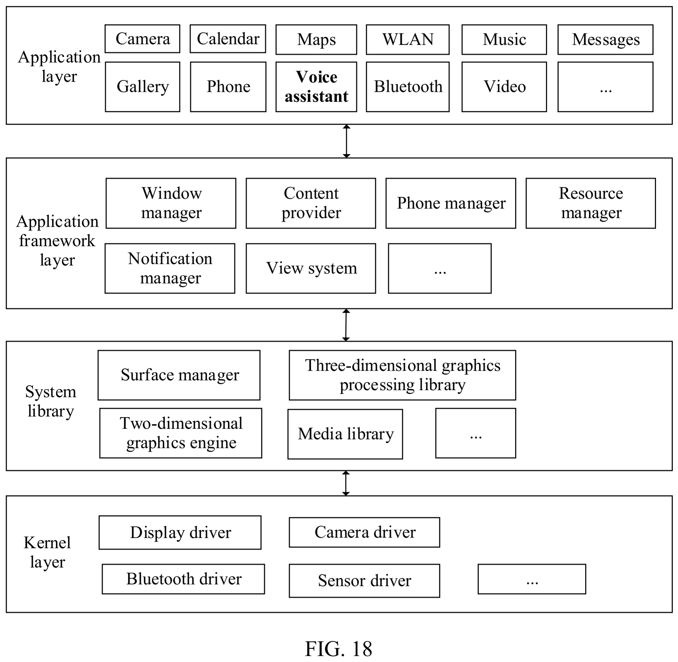

**FIG. 18** **illustrates a software structure of the electronic device 100 according to an embodiment of this application.**

As shown in FIG. 18, a software system of the electronic device 100 may use a layered architecture, an event-driven architecture, a microkernel architecture, a microservice architecture, or a cloud architecture. In embodiments of this application, an Android system of the layered architecture is used as an example to describe the software structure of the electronic device 100.

In the layered architecture, software is divided into several layers, and each layer has a clear role and task. The layers communicate with each other through a software interface. In some embodiments, the Android system is divided into four layers from top to bottom: an application layer, an application framework layer, a system library, and a kernel layer.

The application layer may include a series of application packages.

As shown in FIG. 18, the application packages may include applications such as Camera, Gallery, Calendar, Phone, Maps, Voice assistant, WLAN, Bluetooth, Music, Video, Messages, an input method (not shown in the figure), Notepad (not shown in the figure), Email (not shown in the figure), and MeeTime (not shown in the figure, namely, a social application).

**The voice assistant may be an application having a voice/text instruction recognition function. For example, after detecting voice input of a user, the voice assistant may recognize an intention of the user by using a voice recognition technology, a natural language processing technology, and the like, and make a response accordingly (for example, perform voice answering, start an application, or change a device configuration). The electronic device 100 may always keep** the **voice assistant started, or may start the voice assistant after detecting a user operation (for example, a touch and hold operation on an interface element/button), or may start the voice assistant after detecting a wakeup word. This is not limited herein.**

**The voice/text instruction may be a voice/text for controlling the electronic device 100 to perform one or more operations.**

**It should be noted that a name of the voice assistant application is merely a word used in embodiments of this application, and a meaning represented by the voice assistant application has been recorded in embodiments of this application. The name of the voice assistant application does not constitute any limitation on embodiments of this application.**

**In embodiments of this application, a touch operation performed by the user on a screen of the electronic device 100 (for example, a touch and hold operation on a picture, a video, a text, a chat entry, an icon of a document, a page of a document, or the like displayed on the screen of the electronic device 100) may be used to trigger the electronic device 100 to start a natural language interaction function, so that the electronic device 100 may subsequently detect a natural language instruction (for example, a voice instruction or a text instruction) input by the user by using the natural language interaction function. In addition, the touch operation may be further used to trigger the electronic device 100 to select an interaction object, so that a corresponding operation may be subsequently performed on the interaction object based on the natural language instruction input by the user. For details, refer to the related text descriptions in the foregoing embodiments. Details are not described herein again.**

**In embodiments of this application, the natural language interaction function started by the electronic device 100 may be a system capability provided by the electronic device 100. In some embodiments, the system capability may be implemented based on the voice assistant application or the input method application.**

The application framework layer provides an application programming interface (application programming interface, API) and a programming framework for an application at the application layer. The application framework layer includes some predefined functions.

As shown in FIG. 18, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device 100, for example, management of a call status (including answering, hang-up, or the like).

The resource manager provides various resources such as a localized character string, an icon, an image, a layout file, and a video file for an application.

The notification manager enables an application to display notification information in a status bar, and may be configured to transmit a notification-type message. The displayed information may automatically disappear after a short pause without user interaction. For example, the notification manager is configured to: notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device vibrates, or an indicator blinks.

A core library includes two parts: One part is a performance function that needs to be invoked by the Java language, and the other part is an Android core library.

The application layer and the application framework layer are run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional graphics engine (for example, SGL).

The surface manager is configured to: manage a display subsystem and provide fusion of two-dimensional and three-dimensional layers for a plurality of applications.

The media library supports playing and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, compositing, layer processing, and the like.

The two-dimensional graphics engine is a drawing engine for two-dimensional drawing.

The kernel layer is a layer between hardware and software. The kernel layer includes at least a display driver, a camera driver, a Bluetooth driver, and a sensor driver.

In addition to the example shown in FIG. 18, the solution provided in this application may be further applied to another type of operating system, for example, a Harmony operating system, an iOS operating system, or a Windows operating system.

The following describes a diagram of a structure of the electronic device 100 according to embodiments of this application.

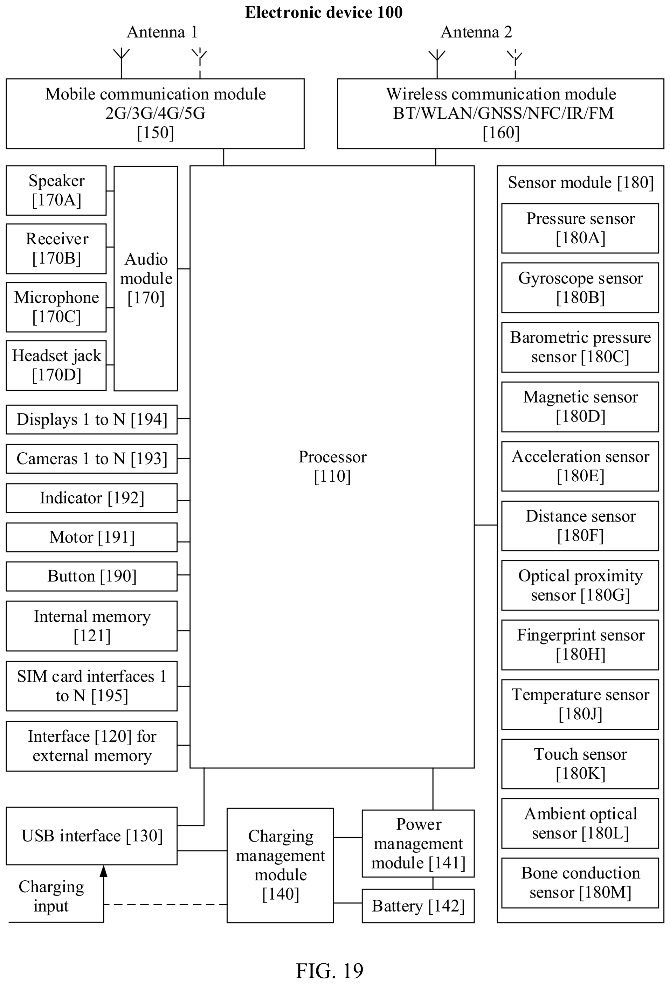

**FIG. 19** **illustrates a structure of the electronic device 100 according to an embodiment of this application.**

As shown in FIG. 19, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

**In embodiments of this application, the processor 110 may be configured to: select an interaction object in response to a user operation (for example, a touch and hold operation), and start a natural language interaction function; and may be further configured to: analyze, understand, and execute a natural language instruction input by a user. For details, refer to the related text descriptions in the foregoing embodiments. Details are not described herein again.**

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, thus improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The 12C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through the Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), or the like. In some embodiments, the processor 110 communicates with the camera 193 via the CSI, to implement a photographing function of the electronic device 100. The processor 110 communicates with the display 194 via the DSI interface, to implement a display function of the electronic device 100.

The GPIO interface may be configured by software. The GPIO interface may be configured for control signals or data signals. In some embodiments, the GPIO interface may be configured to connect the processor 110 to the camera 193, the display 194, the wireless communication module 160, the audio module 170, the sensor module 180, or the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to exchange data between the electronic device 100 and a peripheral device, or may be configured to connect to a headset for playing audio through the headset. Alternatively, the interface may be configured to be connected to another terminal device, for example, an AR device.

It may be understood that an interface connection relationship between modules illustrated in embodiments of this application is merely an example for description, and does not constitute a limitation on a structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device 100 by using the power management module 141.

The power management module 141 is configured to connect to the battery 142, the charging management module 140, and the processor 110. The power management module 141 receives an input of the battery 142 and/or the charging management module 140, and supplies power to the processor 110, the internal memory 121, the external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same component with at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in the same device with the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrated into at least one communication processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP is configured to process data fed back by the camera 193. For example, during image shooting, a shutter is pressed, light is transmitted to a photosensitive element of the camera through a lens, and an optical signal is converted into an electrical signal. The photosensitive element of the camera transmits the electrical signal to the ISP for processing, to convert the electrical signal into a visible image. The ISP may further perform algorithm optimization on noise, brightness, and the like of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the electronic device 100, for example, image recognition, facial recognition, voice recognition, and text understanding, can be implemented by using the NPU.

The interface 120 for external memory may be configured to connect to an external memory card, for example, a micro SD card, to extend a storage capability of the electronic device 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The processor 110 runs the instructions stored in the internal memory 121 to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, and may further include a nonvolatile memory, for example, at least one magnetic disk storage device, a flash memory device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to: encode and decode audio signals. In some embodiments, the audio module 170 may be disposed in the processor 110, or some of functional modules of the audio module 170 are disposed in the processor 110.

The speaker 170A, also referred to as a "loudspeaker", is configured to convert an electrical audio signal into a sound signal. The electronic device 100 may be configured to listen to music or answer a hands-free call by using the speaker 170A.

The receiver 170B, also referred to as an "earpiece", is configured to convert an audio electrical signal into a sound signal. When a call is answered or voice information is received by using the electronic device 100, the receiver 170B may be put close to a human ear to listen to a voice.

The microphone 170C, also referred to as a "mike" or a "mic", is configured to convert a sound signal into an electrical signal. When making a call or sending a voice information, the user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, reduce noise, further recognize a sound source, implement a directional recording function, and the like.

**In embodiments of this application, the electronic device 100 may convert a sound signal into an electrical signal by using the microphone 170C. For example, when the electronic device 100 receives a voice instruction input by the user, the user may make a sound near the microphone 170C through the mouth of the user, to input the sound signal to the microphone 170C.**

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The touch sensor 180K is also referred to as a "touch panel". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor 180K. The touch sensor may transfer the detected touch operation to the application processor, to determine a touch event type. Visual output related to the touch operation may be provided through the display 194. In some other embodiments, the touch sensor 180K may alternatively be disposed on a surface of the electronic device 100, and is at a location different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt or a touch vibration feedback. For example, touch operations performed on different applications (such as a photographing application and an audio playing application) may correspond to different vibration feedback effects. The motor 191 may also correspond to different vibration feedback effects for touch operations performed on different areas of the display 194. Different application scenarios (for example, time reminding, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards can be simultaneously inserted into the same SIM card interface 195. The plurality of cards may be of a same type or different types. The SIM card interface 195 may be compatible with different types of SIM cards. The SIM card interface 195 may also be compatible with the external memory card. The electronic device 100 interacts with a network through the SIM card, to implement functions such as calling and data communication. In some embodiments, the electronic device 100 uses an eSIM, namely, an embedded SIM card. The eSIM card may be embedded in the electronic device 100, and cannot be separated from the electronic device 100.

It should be understood that the electronic device 100 shown in FIG. 19 is merely an example, and the electronic device 100 may have more or fewer components than those shown in FIG. 19, or may have two or more components that are combined, or may have different component configurations. Various components shown in FIG. 19 may be implemented in hardware, software, or in a combination of hardware and software that includes one or more signal processing and/or application-specific integrated circuits.

All or a part of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. An interaction method, applied to an electronic device, wherein the electronic device comprises a screen, and the method comprises:
displaying, by the electronic device, a first user interface of a first application;
detecting, by the electronic device, a first operation performed by a user on the first user interface, wherein a location of the first operation on the screen is a first location;
starting, by the electronic device, a natural language interaction function in response to the first operation, wherein the natural language interaction function is used for interaction between the electronic device and the user by using a natural language instruction;
detecting, by the electronic device, a first natural language instruction input by the user, and determining, based on the first natural language instruction and the first location, that a natural language interaction object is a first interaction object, wherein the first interaction object is comprised in the first user interface; and
performing, by the electronic device, an operation corresponding to the first natural language instruction on the first interaction object.

2. The method according to claim 1, wherein the first operation is a touch and hold operation.

3. The method according to claim 1 or 2, wherein determining, by the electronic device based on the first natural language instruction and the first location, that the natural language interaction object is the first interaction object specifically comprises:
when the first natural language instruction does not comprise a first keyword, determining, by the electronic device, that the first interaction object is an object that is recognizable at the first location in the first user interface, wherein the first keyword is a keyword indicating the natural language interaction object; or
when the first natural language instruction comprises the first keyword, determining, as the first interaction object by the electronic device, the natural language interaction object indicated by the first keyword.

4. The method according to any one of claims 1 to 3, wherein after starting, by the electronic device, the natural language interaction function, the method further comprises:
displaying, by the electronic device, a natural language interaction entry, wherein the natural language interaction entry is used to display the first natural language instruction.

5. The method according to claim 4, wherein the natural language interaction entry is located at the first location or near the first location.

6. The method according to any one of claims 1 to 5, wherein after starting, by the electronic device, the natural language interaction function, the method further comprises:
outputting, by the electronic device, a first prompt if the electronic device detects, within a first preset time period, no natural language instruction input by the user, wherein the first prompt prompts the user to input a recognizable natural language instruction corresponding to the first interaction object.

7. The method according to any one of claims 4 to 6, wherein the first natural language instruction comprises any one of a first voice instruction or a first text instruction, and the method further comprises:
detecting, by the electronic device, a second operation performed by the user on the natural language interaction entry; and
detecting, by the electronic device, the first natural language instruction input by the user specifically comprises:
in response to the second operation, detecting, by the electronic device, the first voice instruction input by the user via a microphone, or invoking and displaying, by the electronic device, a virtual keyboard, and detecting the first text instruction input by the user via the virtual keyboard.

8. The method according to any one of claims 1 to 6, wherein after detecting, by the electronic device, the first natural language instruction input by the user, the method further comprises:
if the electronic device detects that the user cancels the first operation, skipping detecting, by the electronic device, the natural language instruction input by the user.

9. The method according to any one of claims 4 to 8, wherein the method further comprises:
when the electronic device detects that the user touches and holds and drags the first interaction object, shrinking, by the electronic device, the natural language interaction entry, or canceling display of the natural language interaction entry; and
when the electronic device detects that the first interaction object does not produce a displacement again within a second preset time period, restoring, by the electronic device, display of the natural language interaction entry.

10. The method according to any one of claims 1 to 9, wherein the first natural language instruction does not comprise a keyword that directly indicates a location or a name of an interaction object.

11. The method according to any one of claims 1 to 10, wherein the first interaction object is a first picture or first content in the first picture, the first content is a part of content in the first picture, and performing, by the electronic device, the operation corresponding to the first natural language instruction on the first interaction object specifically comprises:
when the first natural language instruction indicates an intention of sending the first interaction object to a second application, sending, by the electronic device, the first interaction object from the first application to the second application; or
when the first natural language instruction indicates an erasing intention, erasing, by the electronic device, the first content from the first picture; or
when the first natural language instruction indicates an intention of replacing the first content with second content, replacing, by the electronic device, the first content with the second content; or
when the first natural language instruction indicates an intention of inserting third content, inserting, by the electronic device, the third content into the first picture; or
when the first natural language instruction indicates a recognition intention, recognizing, by the electronic device, the first interaction object and displaying a recognition result; or
when the first natural language instruction indicates a beautification intention, beautifying, by the electronic device, the first interaction object, wherein the beautification intention comprises one or more of the following intentions: face beautification, body beautification, blur, mosaic, doodle, or border/sticker/marker adding; or
when the first natural language instruction indicates a parameter adjustment intention, performing, by the electronic device, parameter adjustment on the first interaction object, wherein the parameter comprises one or more of the following: a filter style, brightness, saturation, or sharpness.

12. The method according to any one of claims 1 to 10, wherein the first interaction object is a first video, and performing, by the electronic device, the operation corresponding to the first natural language instruction on the first interaction object specifically comprises:
when the first natural language instruction indicates a sending intention, sending, by the electronic device, the first video from the first application to a second application; or
when the first natural language instruction indicates a trimming intention, trimming, by the electronic device, the first video, and storing a first video clip or a first video image obtained through trimming.

13. The method according to any one of claims 1 to 10, wherein the first interaction object is the first chat entry, the first chat entry comprises a chat message, and performing, by the electronic device, the operation corresponding to the first natural language instruction on the first interaction object specifically comprises:
when the first natural language instruction indicates an intention of displaying a summary of an unread message comprised in the chat message, searching for, by the electronic device, the unread message, and generating and displaying the summary of the unread message based on the unread message; or
when the first natural language instruction indicates an intention of querying related information of the chat message, querying and displaying, by the electronic device, the related information, wherein the related information comprises any one of the following: content of the chat message, or a sender of the chat message.

14. The method according to any one of claims 1 to 10, wherein the first interaction object is an icon of a first document, and performing, by the electronic device, the operation corresponding to the first natural language instruction on the first interaction object specifically comprises:
when the first natural language instruction indicates an intention of displaying a summary of content of the first document, obtaining, by the electronic device, the content of the first document, and generating and displaying the summary of the content based on the content; or
when the first natural language instruction indicates an intention of displaying a note in the first document, querying and displaying, by the electronic device, the note in the first document, wherein the note comprises one or more of the following: a mark, or a comment; or
when the first natural language instruction indicates an intention of translating the content of the first document, translating, by the electronic device, the content of the first document, and displaying a translation result; or
when the first natural language instruction indicates an intention of performing format conversion/beautification on the first document, performing, by the electronic device, format conversion/beautification on the first document, and generating and displaying the first document obtained through format conversion/beautification.

15. The method according to any one of claims 1 to 10, wherein the first interaction object is a first text, and performing, by the electronic device, the operation corresponding to the first natural language instruction on the first interaction object specifically comprises:
when the first natural language instruction indicates an intention of collecting the first text, collecting, by the electronic device, the first text; or
when the first natural language instruction indicates an intention of querying the first text, querying, by the electronic device, the first text, and displaying a query result, wherein the query result comprises related information of the first text.

16. The method according to any one of claims 1 to 10, wherein the first interaction object is a second text, the first natural language instruction comprises a third text, and performing, by the electronic device, the operation corresponding to the first natural language instruction on the first interaction object specifically comprises:
combining, by the electronic device, the second text and the third text into one or more fourth texts; and
replacing, by the electronic device, the second text with the fourth texts, and displaying the fourth texts.

17. The method according to claim 16, wherein when there are a plurality of fourth texts, before replacing, by the electronic device, the second text with the fourth texts, the method further comprises:
outputting, by the electronic device, a second prompt, wherein the second prompt prompts the user to select any one of the plurality of fourth texts.

18. The method according to any one of claims 1 to 10, wherein the first interaction object is a fifth text, and performing, by the electronic device, the operation corresponding to the first natural language instruction on the first interaction object specifically comprises:
when the first natural language instruction indicates an intention of modifying a text format of the fifth text, modifying, by the electronic device, the text format of the fifth text, wherein
the text format comprises one or more of the following: a font, a font size, a color, an alignment manner, a title style, a body style, a bold, an italic, or an underline.

19. An interaction method, applied to an electronic device, wherein the method comprises:
displaying, by the electronic device, a first user interface, wherein the first user interface comprises a first page of a first document;
detecting, by the electronic device, a first operation performed by a user on the first page;
starting, by the electronic device, a natural language interaction function in response to the first operation, wherein the natural language interaction function is used for interaction between the electronic device and the user by using a natural language instruction;
detecting, by the electronic device, a first natural language instruction input by the user; and
generating, by the electronic device, a first comment based on the first natural language instruction, and displaying the first comment in the first user interface.

20. The method according to claim 19, wherein the first operation is a touch and hold operation.

21. The method according to claim 19 or 20, wherein a location of the first operation on a screen of the electronic device is a first location, and the method further comprises:
recognizing, by the electronic device, whether there is an interaction object at the first location; and if no, displaying, by the electronic device, the first comment at the first location; or if yes, displaying, by the electronic device, the first comment at a second location, wherein the second location is the same as or different from the first location.

22. The method according to claim 21, wherein the second location is a central location of a location of the interaction object.

23. The method according to claim 21 or 22, wherein the method further comprises:
adding, by the electronic device, a mark to the interaction object, and displaying the interaction object to which the mark is added, wherein the mark comprises a highlight mark.

24. The method according to any one of claims 19 to 23, wherein the method further comprises:
detecting, by the electronic device, a second operation performed by the user on the first page;
in response to the second operation, starting, by the electronic device, the natural language interaction function, and determining a distance between a location of the second operation and a location of the first comment;
detecting, by the electronic device, a second natural language instruction input by the user, and generating a second comment based on the second natural language instruction; and
when the distance is less than or equal to a first preset distance threshold, replacing, by the electronic device, the first comment with the second comment, and displaying the second comment in the first user interface; or
when the distance is greater than a second preset distance threshold, adding and displaying, by the electronic device, the second comment in the first user interface; or
when the distance is greater than the first preset distance threshold and less than or equal to the second preset distance threshold, replacing, by the electronic device, the first comment with the second comment based on a selection operation of the user, and displaying the second comment in the first user interface, or adding and displaying the second comment in the first user interface.

25. The method according to any one of claims 19 to 24, wherein the method further comprises:
detecting, by the electronic device, a third operation performed by the user on the first comment;
displaying, by the electronic device, a first option in response to the third operation, wherein the first option is used to delete the first comment; and
detecting, by the electronic device, a fourth operation performed by the user on the first option, and in response to the fourth operation, deleting, by the electronic device, the first comment, and canceling display of the first comment; or
detecting, by the electronic device, a fifth operation of touching and holding and dragging the first comment to a third location by the user, and in response to the fifth operation, displaying, by the electronic device, the first comment at the third location.

26. The method according to claim 24 or 25, wherein the second operation is a touch and hold operation, and the third operation is a tap operation.

27. The method according to any one of claims 19 to 26, wherein the method further comprises:
detecting, by the electronic device, a sixth operation of the user, wherein the sixth operation comprises any one of the following: switching a page, scrolling a page, zooming in a page, or zooming out a page; and
in response to the sixth operation, displaying, by the electronic device, first content in the first user interface, and displaying a comment related to the first content, wherein the first content is content in the first document.

28. The method according to any one of claims 19 to 27, wherein the first natural language instruction comprises any one of a first voice instruction or a first text instruction, and detecting, by the electronic device, the first natural language instruction input by the user specifically comprises:
detecting, by the electronic device, the first voice instruction input by the user via a microphone; or
invoking and displaying, by the electronic device, a virtual keyboard, and detecting the first text instruction input by the user via the virtual keyboard.

29. An electronic device, wherein the electronic device comprises one or more processors and one or more memories, wherein the one or more memories are coupled to the one or more processors, the one or more memories are configured to store computer program code, the computer program code comprises computer instructions, and when the one or more processors execute the computer instructions, the electronic device is caused to perform the method according to any one of claims 1 to 18 or claims 19 to 28.

30. A computer storage medium, wherein the computer storage medium stores a computer program, the computer program comprises program instructions, and when the program instructions are run on an electronic device, the electronic device is caused to perform the method according to any one of claims 1 to 18 or claims 19 to 28.
